(19) Europäisches Patentamt
European Patent Office
Office européen des brevets

(11) Veröffentlichungsnummer: **0 024 668**
**B1**

(12) # EUROPÄISCHE PATENTSCHRIFT

(45) Veröffentlichungstag der Patentschrift: **13.04.83**

(51) Int. Cl.³: **C 09 B 62/465,** D 06 P 3/66, D 06 P 3/10

(21) Anmeldenummer: **80104902.4**

(22) Anmeldetag: **18.08.80**

(54) **Reaktivfarbstoffe und deren Verwendung zum Färben und Bedrucken von hydroxylgruppen- und stickstoffhaltigen Materialien.**

(30) Priorität: **04.09.79 DE 2935681**

(43) Veröffentlichungstag der Anmeldung: **11.03.81 Patentblatt 81/10**

(45) Bekanntmachung des Hinweises auf die Patenterteilung: **13.04.83 Patentblatt 83/15**

(84) Benannte Vertragsstaaten: **BE CH DE FR GB IT LI**

(56) Entgegenhaltungen:
**DE-A-1 444 588**
**DE-A-1 444 589**
**DE-A-1 444 591**

**K. Venkataramann, »The chemistry of Synthetic Dyes«, Band VI, Kapitel I, Seiten 4–85, Kapitel II, Seiten 211–325**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Schallner, Otto, Dr., Jakob-Böhme-Strasse 11, D-5000 Köln 80 (DE)**
Erfinder: **Schündehütte, Karl Heinz, Dr., Klief 75, D-5090 Leverkusen 3 (DE)**

**EP 0 024 668 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Reaktivfarbstoffe und deren Verwendung zum Färben und Bedrucken von hydroxylgruppen- und stickstoffhaltigen Materialien

Gegenstand der vorliegenden Erfindung sind neue Reaktivfarbstoffe der Formel (I)

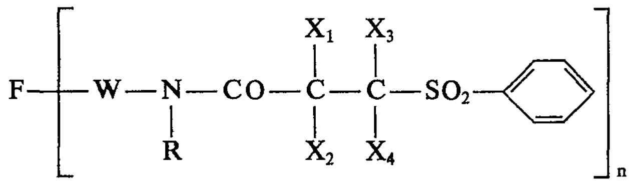

(I)

worin

F = Rest eines organischen Farbstoffs
W = direkte Bindung oder Brückenglied
R = Wasserstoff oder $C_1 - C_4$-Alkyl
$X_1$ bis $X_4$ = Wasserstoff oder Halogen und wobei nur einer oder zwei der Reste $X_1$ bis $X_4$ für Halogen stehen,
b = 1 oder 2.

Bevorzugt sind Farbstoffe der Formel (I) worin

a) $X_1$ = Cl oder Br und
$X_2$ bis $X_4$ = H und
F, W, R sowie n die unter Formel (I) angegebene Bedeutung haben,
b) $X_1$ und $X_2$ = Cl
$X_3$ und $X_4$ = H
und F, W, R sowie n die unter Formel (I) angegebene Bedeutung besitzen,
c) $X_1$, $X_2$ und $X_4$ = H
und $X_3$ = Cl oder Br,
und F, W, R sowie n die unter Formel (I) angegebene Bedeutung haben,

W steht vorzugsweise für eine direkte Bindung an ein C-Atom eines aromatisch-carbocyclischen Ringes des Chromophors F.

Geeignete Brückenglieder W sind beispielsweise:

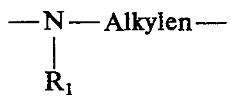

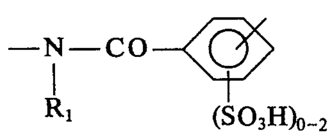

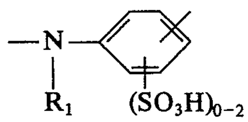

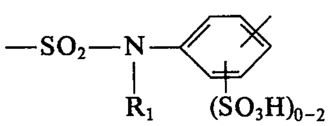

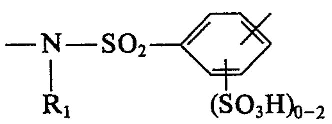

—O—Alkylen—

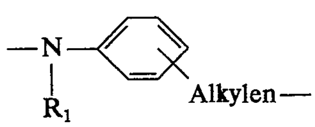

– S-Alkylen-, -Alkylen-, -Alkylen-CO-, -Alkylen-$SO_2$-, wobei $R_1$ für Wasserstoff oder Alkyl, insbesondere $C_1 - C_4$-Alkyl steht und Alkylen einen Alkylenrest mit 1 – 4 C-Atomen bedeutet.

Die neuen Farbstoffe können den verschiedensten Klassen angehören, z. B. der Reihe der metallfreien oder metallhaltigen Mono- oder Polyazofarbstoffe, metallfreien oder metallhaltigen Azaporphinfarbstoffe, wie Kupfer- oder Nickelphthalocyaninfarbstoffe, der Anthrachinon-, Oxazin-, Dioxazin-, Triphenylmethan-, Nitro-, Azomethin-, metallfreien oder metallhaltigen Formazanfarbstoffe.

Die Farbstoffe können insbesondere auch andere Reaktivgruppen enthalten.

Bevorzugte Farbstoffe sind solche mit 1 bis 6 Sulfogruppen.

Geeignete Farbstoffreste F bzw. den Farbstoffen (I) zugrunde liegende aminogruppenhaltige Farbstoffe sind in der Literatur in sehr großer Zahl beschrieben. Beispielhaft erwähnt seien hier:

Belgische Patentschrift: 606 947, 617 435; 567 435; 701 273; 683 734; 683 735; 689 573; 693 749; 708 003; 707 307;

Deutsche Auslegeschrift: 1 242 553; 1 212 655, 1 225 322;

Deutsche Offenlegungsschrift 2 633 255; 2 103 299; 2 305 206; 2 418 283; 2 623 224; 1 809 388; 1 912 178; 2 057 867; 1 769 205; 2 107 427; 2 303 601; 2 600 490.

Schweizer Patentschrift: 536 353; 521 403;

Britische Patentschrift: 1 299 881; 1 300 742 sowie

Venkataraman: The Chemistry of Synthetic Dyes, Band VI, Kapitel II, Seite 211 bis 325 New York, Londen; 1972

Aus den deutschen Offenlegungsschriften 1 444 588, 1 444 589 und 1 444 591 sind ebenfalls Farbstoffe bekannt, welche Reaktivfarbstoffe auf Propinsäureamid- bzw. auf Acrylsäureamid-Basis, jedoch keine Halogensubstituenten enthalten.

Aus K. Venkataraman: »The Chemistry of Synthetic Dyes« Band VI, Kapitel I, Seiten 4—85 (Academic Press New York und London, 1972), sind ebenfalls Sulfonylpropionamidreste enthaltende Reaktivfarbstoffe bekannt, welche sich von den erfindungsgemäßen Farbstoffen durch die Abwesenheit von Halogenatomen und des Phenylrestes unterscheiden.

In den folgenden Formeln (II) bis (XV) sei die Gruppierung

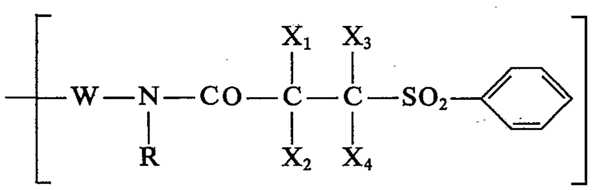

aus der Formel (I), wobei W, R, $X_1$ bis $X_4$ die dort angegebene Bedeutung besitzen, wie folgt kurz definiert:

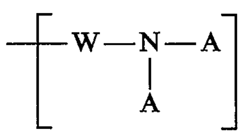

Im Rahmen dieser Farbstoffe sind folgende bevorzugt:

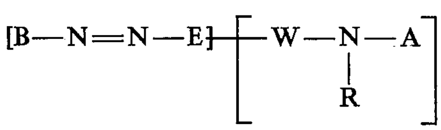

(II)

worin B und E aromatisch-carbocyclische oder -heterocyclische Reste darstellen, insbesondere B den Rest einer carbocyclischen Diazokomponente der Benzol- oder Naphthalinreihe, und E den Rest einer enolischen oder phenolischen Kupplungskomponente, z. B. eines 5-Pyrazolons, eines Pyridons, eines Aminopyridins, eines Acetessigsäurearylamids, eines Hydroxynaphthalins, eines Aminonaphthalins oder eines Aminohydroxynaphthalins. B und E können im übrigen beliebige in Azofarbstoffen übliche Substituenten aufweisen, darunter auch weitere Azogruppen; R steht für eine niedere Alkylgruppe oder bevorzugt für ein Wasserstoffatom.

Besonders wertvolle Farbstoffe dieser Reihe sind solche, die wasserlöslich sind, und insbesondere solche, die Sulfonsäure- und/oder Carbonsäuregruppen aufweisen. Dabei besitzen aber auch sulfon- und carbonsäuregruppenfreie reaktive Dispersionsfarbstoffe der Azoreihe Interesse. Die Azofarbstoffe können sowohl metallfrei als auch metallhaltig sein, wobei unter den Metallkomplexen die Kupfer-, Chrom- und Kobaltkomplexe bevorzugtes Interesse haben.

Wichtige Azofarbstoffe sind beispielsweise solche der Benzol-azo-naphthalinreihe, der Benzol-azo-1-phenyl-5-pyrazolonreihe, der Benzol-azo-amino-naphthalinreihe, der Naphthalin-azo-naphthalinreihe, der Naphthalin-azo-1-phenylpyrazolon-5-Reihe, der Benzol-azo-pyridonreihe, der Benzol-azo-amino-pyridin-reihe, der Naphthalin-azo-pyridonreihe, der Naphthalin-azo-aminopyridinreihe, und der Stilben-azo-benzolreihe, wobei auch hier die sulfonsäuregruppenhaltigen Farbstoffe bevorzugt sind. Im Falle von Metallkomplexazofarbstoffen befinden sich die metallkomplexgebundenen Gruppen vorzugsweise in den o-Stellungen zur Azogruppe, z. B. in Form von o,o'-Dihydroxy-, o-Hydroxy-o'-carboxy-, o-Carboxy-o'-amino- und o-Hydroxy-o'-amino-azogruppierungen.

Besonders hervorragende Typen werden durch die folgenden Formeln veranschaulicht:

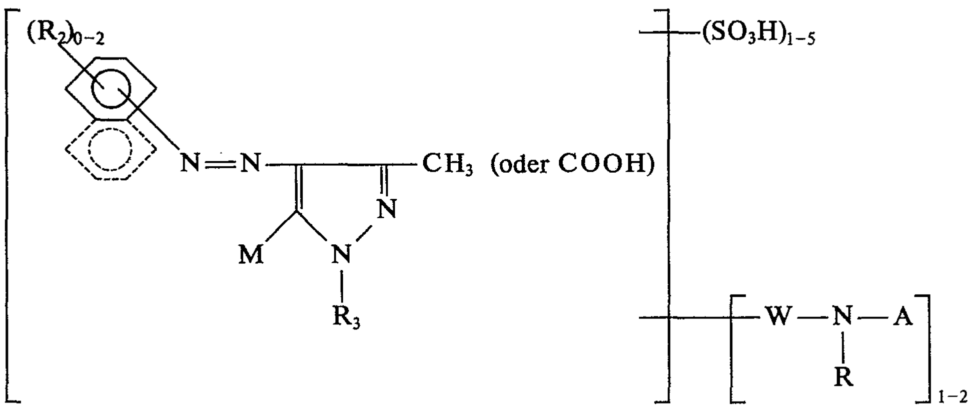

(III)

M = OH, $NH_2$, $NR_3R_4$, $OR_3$
$R_2$ = Alkyl, Alkoxy, Halogen, insbesondere Cl,
$R_3$ und $R_4$ = Wasserstoff, Alkyl, Aryl, Hetaryl oder Aralkyl

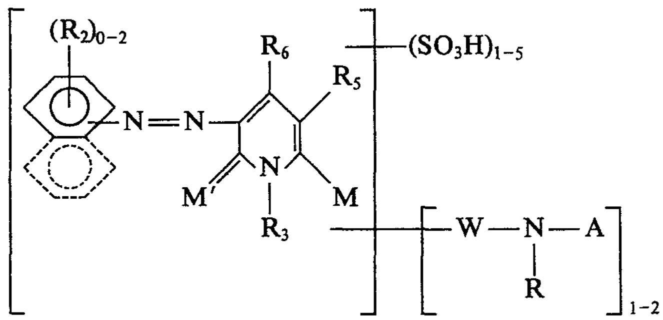

(IV)

$R_5 = -COOR_3, -CONR_3R_4, -CN, -CH_2-SO_3H$ oder $-CH_2-NR_3R_4$
$R_6 = -M, -R_3$ oder $-R_5$
M' = O, $NR_3$

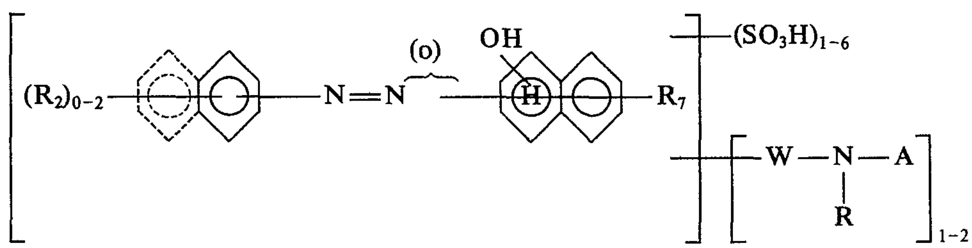

(V)

$R_7$ = Wasserstoff, $-NR_3-CO-R_8$, $-NR_3-SO_2-R_8$
$R_8$ = Alkyl, Aryl, Hetaryl und Aralkyl
o = ortho-ständige Stellung der jeweiligen Reste

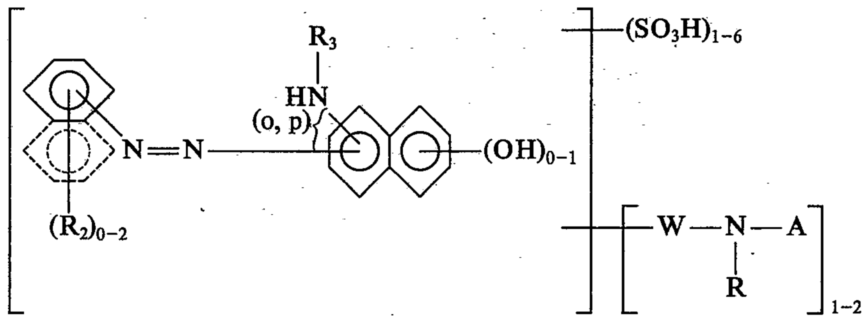

(VI)

(o, p) = ortho- oder paraständige Stellung der jeweiligen Reste

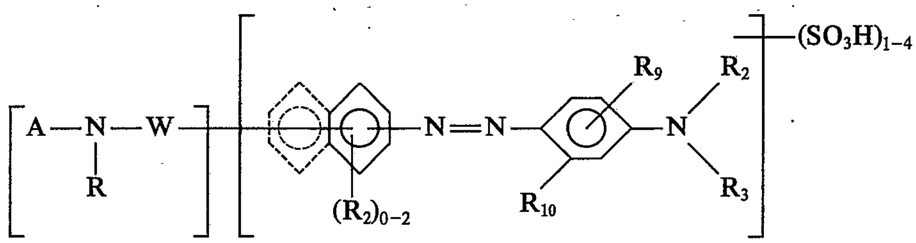

(VII)

$R_9$ und $R_{10}$ = Wasserstoff, $R_8$, $-OR_3$, Halogen, $-NR_3R_4$, $-COOR_3$, $-NR_3-CO-R_4$, $-O-CO-R_4$, $-NR_3-SO_2-R_4$, $-O-SO_2-R_4$, $-NR_3-CO-NR_3R_4$

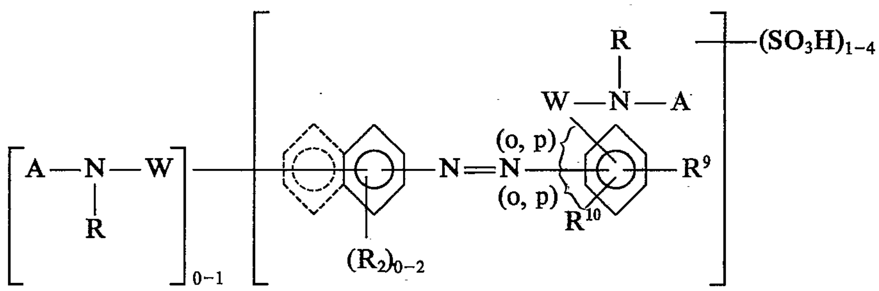

(VIII)

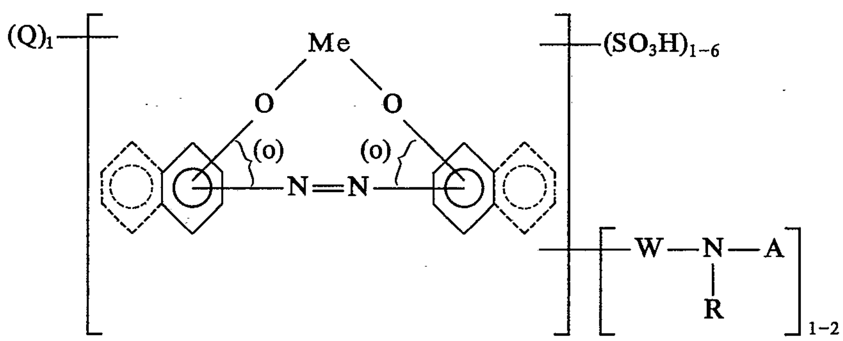

(IX)

Me = Cu, Cr

Q = Alkyl, Alkoxy, Halogen, $-NO_2$, Acylamino wie $CH_3-CO-NR_3-$, $-COOR_3$, $-CONR_3R_4$, $-SO_2-NR_3R_4$

1 = 0–4

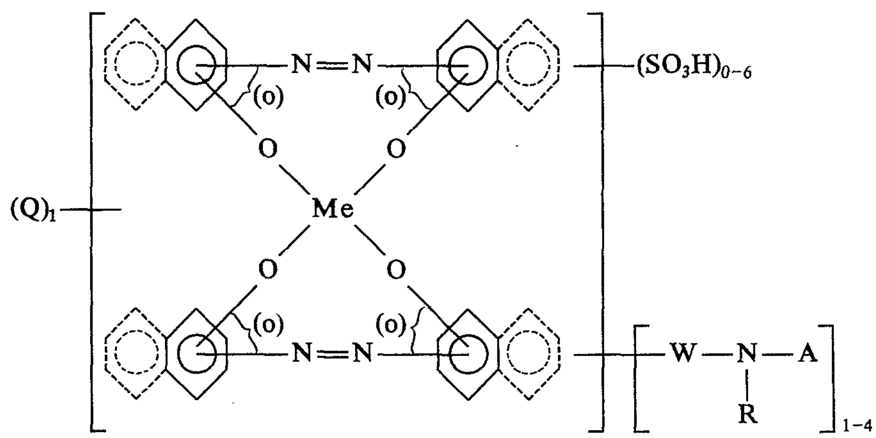

(X)

Me = Co, Cr
1 = 0–8

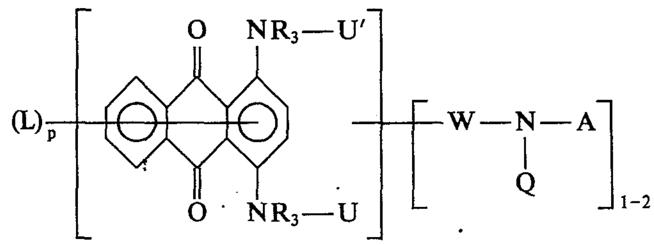

(XI)

p = 0–4,
L = Substituent, wie Sulfo oder Carboxy,
U = gegebenenfalls durch O oder S unterbrochener, aliphatischer, cycloaliphatischer, araliphatischer oder aromatischer Rest
U' = Wasserstoff oder U

W steht vorzugsweise für $C_1-C_2$-Alkylen oder eine direkte Bindung, Alkylen bedeutet vorzugsweise $C_1-C_4$-Alkylen und Cycloalkylen steht vorzugsweise für gegebenenfalls substituiertes Cyclohexylen.

Darüber hinaus besitzen auch noch sulfon- und carbongruppenfreie reaktive Dispersionsfarbstoff der Antrachinonreihe Interesse.

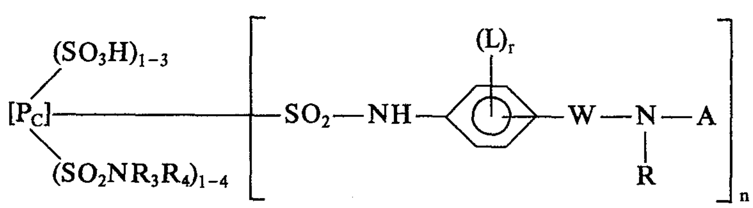

(XII)

L = Substituent, insbesondere Sulfo oder Carboxy
r = 0–4

W steht vorzugsweise für eine direkte Bindung oder $C_1-C_2$-Alkylen. Der Phthalocyaninrest Pc trägt bevorzugt als weitere Substituenten 1–3 Sulfonsäure- und/oder 1–2 Sulfonsäureamidgruppen, wie $-SO_2NH$, $SO_2NH$-alkyl, $-SO_2N(alkyl)_2$- und $-SO_2NH$-(aryl)-Gruppen.

R steht vorzugsweise für Wasserstoff.

Soweit nicht anders angegeben, haben die Alkyl-, Aryl-, Hetaryl- und Aralkylreste die oben angegebene Bedeutung.

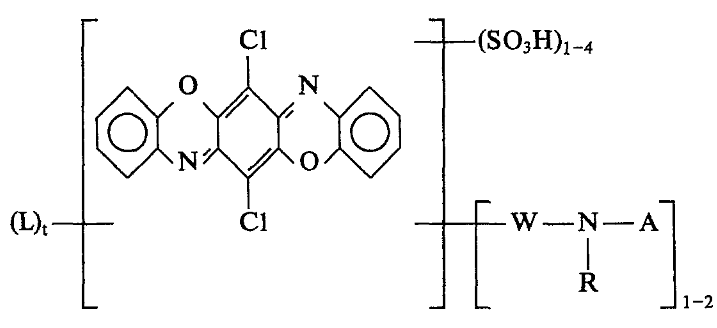

(XIII)

L = Substituent, insbesondere Halogen, $C_{1-4}$-Alkyl, $C_{1-4}$-Alkoxy oder Carboxy
t = 0 bis 3

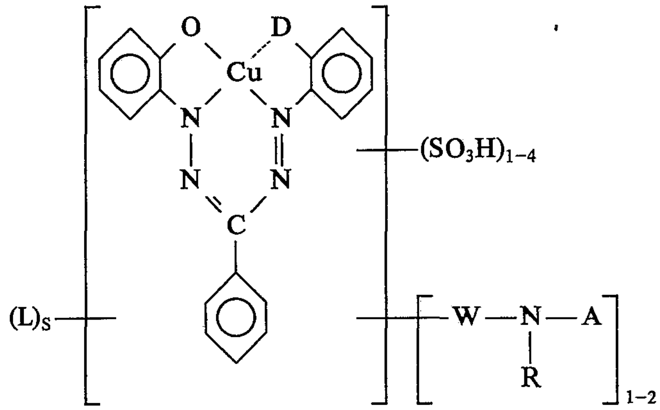

(XIV)

L = Substituent, insbesondere Halogen
$C_{1-4}$-Alkyl, $C_{1-4}$Alkoxy, Alkylsulfonyl,
Aminosulfonyl, unkondensierte Phenylreste oder Carboxy
S = 0–6
D = zur Komplexbildung befähigte Gruppe,
–OH, –COOH oder $-SO_3H$

Die neuen Farbstoffe können im übrigen beliebige in Farbstoffen übliche Substituenten aufweisen, wie Sulfonsäure-, Carbonsäure-, Sulfonamid- und Carbonamidgruppen, die am Amidstickstoffatom weiter substituiert sein können, Sulfonsäureester- und Carbonsäureestergruppen, Alkyl-, Aralkyl- und Arylreste, Alkylamino-, Aralkylamino-, Arylamino-, Acylamino-, Nitro-, Cyan-, Halogen-, wie Cl, Br und F, Hydroxy-, Alkoxy-, Thioether-, Azogruppierungen und dergleichen.

Die Herstellung der neuen Farbstoffe (I) kann nach verschiedenen Verfahren erfolgen, beispielsweise durch Umsetzung von Farbstoffen der Formel:

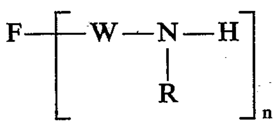

(XV)

oder von Farbstoffvorprodukten mit der Gruppierung

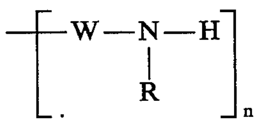

mit reaktiven Carbonsäurederivaten der Formel

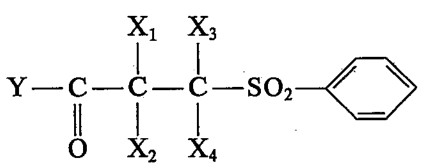

(XVI)

Y = Abgangsgruppe

wobei im Falle der Verwendung von Farbstoffvorprodukten diese in geeigneter Weise in die gewünschten Endfarbstoffe umgewandelt werden.

Die Umsetzung der Farbstoffe (XV) bzw. der Farbstoffvorprodukte mit einer Gruppe

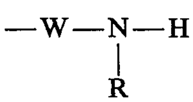

mit den reaktiven Derivaten der Verbindungen (XVI) wird je nach der Art der Ausgangsverbindungen in

organischen, organisch-wäßrigem oder wäßrigem Medium bei Temperaturen von etwa −10°C bis + 100°C, vorzugsweise 0°C bis 50°C und vorzugsweise in Gegenwart von Säureakzeptoren wie Alkalicarbonat oder Alkalihydroxid durchgeführt.

Geeignete reaktive Derivate sind insbesondere die Anhydride oder Säurehalogenide, insbesondere die Säurechloride, Säurefluoride und Säurebromide.

Die reaktiven Derivate (XVI) erhält man beispielsweise aus den Säuren in bekannter Weise, so durch Umsetzung mit organischen und anorganischen Säurehalogeniden, z. B. $SOCl_2$, $POCl_3$, $PBr_3$, $SbF_5$, $COCl_2$, Benzoylchlorid oder Trifluortriazin.

Bei Verwendung von Farbstoff-Zwischenprodukten werden die erhaltenen Kondensationsprodukte in an sich üblicher Weise in die gewünschten Endfarbstoffe umgewandelt. Dieses Verfahren hat bevorzugtes Interesse für die Darstellung von Azofarbstoffen, indem man beispielsweise eine Diazo- und/oder Kupplungskomponente, die eine reaktionsfähige Amino- oder Amidgruppe aufweist, zunächst mit der Reaktivkomponente kondensiert und das erhaltene Zwischenprodukt anschließend durch Diazotieren und/oder Kuppeln und/oder Kondensieren in einen Azofarbstoff umwandelt. In diesem können nachträglich weitere Umwandlungsreaktionen vorgenommen werden, wie sie in Azofarbstoffen üblich sind, z. B. Acylierungs-, Kondensations-, Reduktions-, Metallisierungs- oder Sulfierungsreaktionen.

Auch bei der Darstellung anderer Farbstoffe, insbesondere solcher der Phthalocyanin- und Anthrachinonreihe können nach der Reaktion des Farbstoffs mit einem reaktiven Derivat (XVI) weitere Umwandlungsreaktionen vorgenommen werden, z. B. Acylierungs-, Kondensations- und Sulfierungsreaktionen. Darüber hinaus kann die Kondensation eines reaktiven Derivats (XVI) zunächst mit einem Zwischenprodukt erfolgen, z. B. mit m-Phenylendiamin oder einer m-Phenylendiaminsulfonsäure, und das erhaltene Reaktionsprodukt anschließend mit einem Anthrachinonsulfonsäurehalogenid oder mit einem Kupfer- oder Nickelphthalocyaninsulfonsäurehalogenid zu einem reaktiven Phthalocyanin- oder Antrachinonfarbstoff weiter umgesetzt werden.

Die neuen Farbstoffe sind äußerst wertvolle Produkte, die sich für verschiedenste Anwendungszwecke eignen. Sie finden bevorzugtes Interesse für das Färben hydroxylgruppenhaltiger und stickstoffhaltiger Materialien, insbesondere von Textilmaterialien aus nativer und regenerierter Cellulose, ferner aus Wolle, Seide, synthetischen Polyamid- und Polyurethanfasern sowie zum Färben von Papier. Die sulfonsäuregruppenfreien Farbstoffe sind insbesondere zum Färben von Polyestermaterialien, insbesondere Textilmaterialien aus Polyethylenglykolterephthalat geeignet.

Beispiel 1

In eine Lösung von 0,1 Mol des Natriumsalzes der 1,3-Diaminobenzol-4-sulfonsäure in 300 ml Wasser werden bei 0−5°C unter gutem Rühren 37 g 2-Brom-3-phenylsulfonylpropionylchlorid gelöst in 75 ml Aceton eingetropft. Unter ständigem Abstumpfen der freiwerdenden Salzsäure auf pH 5−6 mit 10%iger Sodalösung wird solange gerührt, bis keine Ausgangsverbindung mehr vorhanden ist.

Das entstandene Farbstoffzwischenprodukt wird nach Zugabe von Eis indirekt mit 7 g Natriumnitrat und 28 ml konz. Salzsäure diazotiert und mit einer vorgelegten Lösung von 27 g 1-(2'-Methyl-4'-sulfophenyl)-3-methyl-pyrazolon-(5) in 120 ml einer 20%igen Natriumacetatlösung und 18 ml 30%iger Natronlauge vereinigt, wobei Kupplung zum Farbstoff der Formel

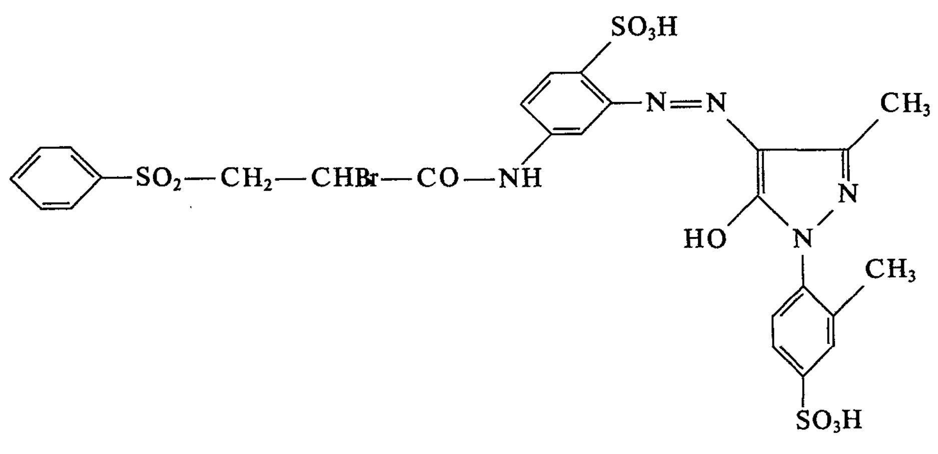

erfolgt, der ausgesalzen, abgesaugt, gewaschen und bei 30−40°C im Vakuum getrocknet wird.

Der Farbstoff löst sich in Wasser mit gelber Farbe und liefert gelbe Färbungen auf Wolle und Baumwolle.

Verwendet man anstelle von 2-Brom-3-phenylsulfonylpropionylchlorid 37 g 3-Brom-3-phenylsulfonylpropionylchlorid oder 32 g 2-Chlor-3-phenylsulfonylpropionylchlorid bzw. 3-Chlor-3-phenylsulfonylpropionylchlorid zur Acylierung des obigen Farbstoffzwischenproduktes, so erhält man Farbstoffe,

die Wolle und Baumwolle ebenfalls in echten gelben Tönen färben.

Weitere gelbe Farbstoffe mit ähnlichen Eigenschaften erhält man, wenn man die in der folgenden Tabelle in Spalte 1 genannte Diazokomponente mit der in Spalte 3 genannte Reaktivkomponente acyliert und danach mit den in Spalte 2 genannte Kupplungskomponente umsetzt.

| Diazokomponente 1 | Kupplungskomponente 2 | Reaktivkomponente 3 |
|---|---|---|
| 1,5-Diaminobenzol-2-sulfonsäure | 3-Methyl-1(2′-sulfophenyl)-5-pyrazolon | 3-Chlor-3-phenylsulfonyl-propionylchlorid |
| 1,5-Diamino-4-methyl-benzol-2-sulfonsäure | 3-Methyl-1(3′-sulfophenyl)-5-pyrazolon | 3-Brom-3-phenylsulfonyl-propionylchlorid |
| 1,4-Diaminobenzol-2-sulfonsäure | 3-Methyl-1(4′-sulfophenyl)-5-pyrazolon | 2-Chlor-3-phenylsulfonyl-propionylchlorid |
| 1,4-Diamino-5-methoxy-benzol-2-sulfonsäure | 3-Methyl-1(2′-methyl-4′-sulfo-phenyl)-5-pyrazolon | 2-Brom-3-phenylsulfonyl-propionylchlorid |
| 1,4-Diamino-2-methyl-benzol-6-sulfonsäure | 1-(2′-Chlor-4′-sulfophenyl)-3-methyl-5-pyrazolon | |
| 1,4-Diaminobenzol-2,6-disulfonsäure | 1-(2′-Chlor-6′-methyl-4′-sulfo-phenyl)-3-methyl-5-pyrazolon | |
| 1,4-Diamino-2-methoxy-benzol-6-sulfonsäure | 1-(2′,5′-Dichlor-4′-sulfophenyl)-3-methyl-pyrazolon-(5) | |
| 1-Amino-5-(4′-amino-benzoylamino)-benzol-2-sulfonsäure | 1-(2′,5′-Disulfophenyl)-3-methyl-pyrazolon-(5) | |
| 1-Amino-5-(3′-aminoben-zoylamino)-2-sulfonsäure | 1-(5′,7′-Disulfonaphthyl-2′)-3-methyl-pyrazolon-(5) | |
| 2,5-Diamino-4′-methyl-3′-sulfo-1,1′-diphenylsulfon | 1-(4′,8′-Disulfonaphthyl-2′)-3-methyl-pyrazolon-(5) | |
| 2,5-Diamino-4-chlor-4′-methyl-3′-sulfo-1,1′-diphenylsulfon | 1-(3′-Sulfophenyl)-3-methyl-5-aminopyrazol | |
| | 1-(3′-Sulfophenyl)-5-aminopyrazol | |
| 1-Amino-4-(4′-amino-benzoylamino)-benzol-2-sulfonsäure | 1-(2′-Sulfobenzyl)-5-aminopyrazol | |
| | 3-Carboxy-pyrazolon-(5) | |
| 1-Amino-4-(3′-amino-benzoylamino)-benzol-2-sulfonsäure | 3-Carboxy-1-phenyl-5-pyrazolon | |
| | 3-Carboxy-1-(4′-sulfophenyl)-5-pyrazolon | |
| 1-Amino-2-methyl-3-(3′-aminobenzoylamino)-benzol-5-sulfonsäure | 3-Carboxy-1-(2′-methyl-4′-sulfophenyl)-5-pyrazolon | |
| 1-Amino-2-methyl-3-(4′-aminobenzoylamino)-benzol-5-sulfonsäure | 3-Carboxy-1-(2′-chlor-6′-methyl-4′-sulfophenyl)-5-pyrazolon | |
| | Bis-Pyrazolon aus 4,4′-Bis-hydrazino-dibenzyl-2,2′-disulfon-säure und Acetessigäthylester | |
| | 1-(β-Hydroxyäthyl)-3-methyl-pyrazolon-(5) | |

Fortsetzung

| Diazokomponente 1 | Kupplungskomponente 2 | Reaktivkomponente 3 |
|---|---|---|
| | 1-(β-Cyanethyl)-3-methyl-pyrazolon-(5) | |
| | 3-Methyl-1-phenyl-5-pyrazolon | |
| | 1-(2'-Chlorphenyl)-3-methylpyrazolon | |
| | 1-(3'-Chlorphenyl)-3-methylpyrazolon | |
| | 1-(2',5'-Dichlorphenyl)-3-methyl-pyrazolon | |
| | 3-Methyl-1-phenyl-5-aminopyrazol | |
| | 3-Methyl-1-(4'-methylphenyl)-5-pyrazolon | |
| | 1-Phenyl-5-aminopyrazol | |
| | 3-Methyl-1-(3'-sulfolanyl)-5-pyrazolon | |
| | 1-Benzyl-5-aminopyrazol | |

Beispiel 2

Man trägt in eine neutrale Lösung von 0,1 Mol des durch Kuppeln von diazotierter 1-Amino-5-acetyl-amino-benzol-2-sulfonsäure mit 1-(2',5'-Dichlor-4'-sulfophenyl)-3-methyl-pyrazolon-(5) und anschließender Verseifung der Acetylgruppe erhaltenen Aminozafarbstoffs

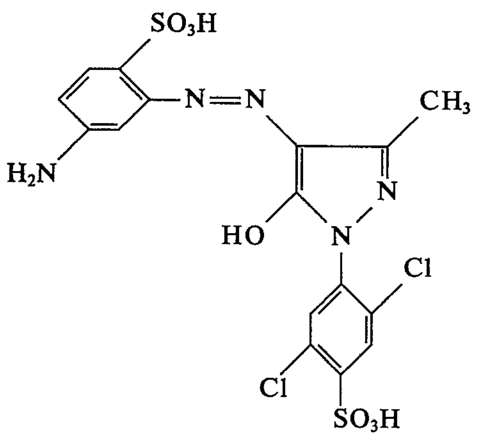

in 300 ml Wasser bei 0–5°C innerhalb von 1 Stunde 29,4 g 3-Chlor-3-phenylsulfonylpropionylchlorid ein, wobei man die freiwerdende Salzsäure laufend mit Sodalösung auf einen pH-Wert von 6,5 abstumpft. Man läßt 60 Minuten nachrühren, klärt und salzt den Farbstoff mit Kaliumchlorid aus.

Nach dem Abfiltrieren und Trocknen erhält man ein gelbes, gut wasserlösliches Pulver, das Wolle und Baumwolle in klaren gelben Tönen färbt.

Verwendet man anstelle von 3-Chlor-3-phenylsulfonyl-propionylchlorid äquivalente Mengen von 3-Brom-3-phenylsulfonyl-propionylchlorid, 2-Brom-3-phenylsulfonylpropionylchlorid bzw. 2-Chlor-3-phenylsulfonylpropionylchlorid zur Acylierung des obigen Farbstoffes, so erhält man Farbstoffe, die Wolle und Baumwolle ebenfalls in echten gelben Tönen färben.

Beispiel 3

In eine neutrale Lösung von 0,1 Mol des Farbstoffs aus Beispiel 2 in 300 ml Wasser tropft man bei 0–5°C innerhalb von 1 Stunde 29,4 g 2-Chlor-3-phenylsulfonylpropionylchlorid in 80 ml Toluol. Die freiwerdende Salzsäure wird mit Sodalösung auf einen pH-Wert von 6 abgestumpft. Man läßt 60 Minuten rühren, stellt mit Salzsäure einen pH-Wert von 3,5 ein und destilliert das Toluol ab. Es wird heiß geklärt und mit Kaliumchlorid ausgesalzen.

Nach Filtrierung und Trocknung erhält man ein gelben gut wasserlösliches Pulver, das Wolle und Baumwolle in klaren gelben Tönen färbt.

Verwendet man zur Acylierung anstelle von 2-Chlor-3-phenylsulfonylpropionylchlorid 34,2 g 2-Brom-3-phenylsulfonylpropionylchlorid, so erhält man einen Farbstoff, der Wolle und Baumwolle ebenfalls in echten gelben Tönen färbt.

Beispiel 4

Man trägt in eine neutrale Lösung von 0,1 Mol des Dinatriumsalzes des durch Kuppeln von diazotierter 1-Amino-4-nitrobenzol-2-sulfonsäure mit 1-(2'-Chlor-5'-sulfophenyl)-3-methyl-pyrazolon-(5) und anschließende Reduktion der Nitrogruppe mit Natriumsulfid erhaltenen Aminoazofarbstoffs in 300 Teilen Wasser bei 0–5°C innerhalb 1 Stunde 29,4 g 3-Chlor-3-phenylsulfonylpropionylchlorid ein, wobei man die freiwerdende Säure laufend mit Sodalösung auf einen pH-Wert von 6,5 abstumpft. Der abgeschiedene Farbstoff der Formel

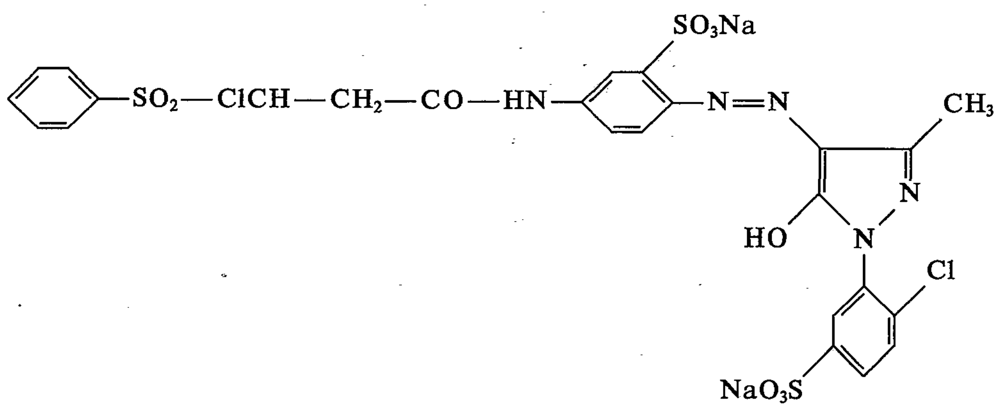

wird abfiltriert, in 3000 Teilen Wasser bei pH 6–7 gelöst und aus der filtrierten Lösung durch Zugabe von Kochsalz wieder ausgefällt. Nach dem Abfiltrieren, Trocknen und Pulvern erhält man ein gelbes, gut wasserlösliches Pulver, das Cellulosematerialien und Wolle sowie Polyamidmaterialien in klaren, wasch-, reib- und lichtechten Gelbtönen färbt.

Verwendet man anstelle von 3-Chlor-3-phenylsulfonylpropionylchlorid 34 g 3-Brom-3-phenylsulfonylpropionylchlorid bzw. 2-Brom-3-phenylsulfonylpropionylchlorid oder 29,4 g 2-Chlor-3-phenylsulfonylpropionylchlorid zur Acylierung des obigen Farbstoffes, so erhält man Farbstoffe, die Wolle und Baumwolle ebenfalls in echten gelben Tönen färben.

Weitere gelbe Farbstoffe erhält man, wenn man die in der folgenden Tabelle in Spalte 1 genannte Diazokomponenten mit den in Spalte 2 genannten Kupplungskomponenten umsetzt, die erhaltenen Farbstoffe verseift sofern sie Acetylaminogruppen oder reduziert sofern sie Nitrogruppen enthalten, und anschließend mit den in Spalte 3 angegebenen Reaktivkomponenten acyliert.

| Diazokomponente<br>1 | Kupplungskomponente<br>2 | Reaktivkomponente<br>3 |
|---|---|---|
| 1-Amino-4-nitrobenzol-3-sulfonsäure | 3-Methyl-1(2'-sulfophenyl)-5-pyrazolon | 3-Chlor-3-phenylsulfonyl-propionylchlorid |
| 1-Amino-2-methyl-3-nitrobenzol-5-sulfonsäure | 3-Methyl-1(3'-sulfophenyl)-5-pyrazolon | 3-Brom-3-phenylsulfonyl-propionylchlorid |
| 5-Acetylamino-1-amino-benzol-2-sulfonsäure | 3-Methyl-1(4'-sulfophenyl)-5-pyrazolon | 2-Chlor-3-phenylsulfonyl-propionylchlorid |
| 5-Acetylamino-1-amino-naphthalin-3,7-disulfonsäure | 3-Methyl-1-(2'-methyl-4'-sulfophenyl)-5-pyrazolon | 2-Brom-3-phenylsulfonyl-propionylchlorid |
| 4-Acetylamino-1-amino-benzol-2,5-disulfonsäure | 1-(2'-Chlor-4-sulfophenyl)-3-methyl-5-pyrazolon | |
| 6-Acetylamino-2-amino-naphthalin-4,8-disulfonsäure | 1-(2'-Chlor-6'-methyl-4-sulfo-phenyl)-3-methyl-5-pyrazolon | |
| 5-Acetylamino-1-amino-benzol-2,4-disulfonsäure | 1-(2',5'-Dichlor-4'-sulfophenyl)-3-methyl-pyrazolon-(5) | |
| 4'-Nitro-4-amino-stilben-2,2'-disulfonsäure | 1-(2',5'-Disulfophenyl)-3-methyl-pyrazolon-(5) | |
| 3-Amino-4-sulfobenzyl-N-methylamin | 1-(5',7'-Disulfonaphthyl-2')-3-methyl-pyrazolon-(5) | |
| 5-Amino-2-methoxy-4-sulfobenzylamin | 1-(4',8'-Disulfonaphthyl-2')-3-methyl-pyrazolon-(5) | |
| 2-Amino-5-amino-methylen-naphthalin-1-sulfonsäure | 1-(3'-Sulfophenyl)-3-methyl-5-aminopyrazol | |
| 1-Amino-2-methyl-3-oxalyl-amino-benzol-5-sulfonsäure | 1-(3'-Sulfophenyl)-5-aminopyrazol | |
| | 1-(2'-Sulfobenzyl)-5-aminopyrazol | |
| | 3-Carboxy-pyrazolon-(5) | |
| | 3-Carboxy-1-phenyl-5-pyrazolon | |
| | 3-Carboxy-1-(4'-sulfophenyl)-5-pyrazolon | |
| | 3-Carboxy-1-(2'-methyl-4'-sulfo-phenyl)-5-pyrazolon | |
| | 3-Carboxy-1-(2'-Chlor-6'-methyl-4'-sulfophenyl)-5-pyrazolon | |
| | Bis-Pyrazolon aus 4,4'-Bis-hydra-zino-dibenzyl-2,2'-disulfonsäure und Acetessigäthylester | |
| | 1-(β-Hydroxyäthyl)-3-methyl-pyrazolon-(5) | |
| | 1-(β-Cyanethyl)-2-methyl-pyrazolon-(5) | |
| | 3-Methyl-1-phenyl-5-pyrazolon | |

Fortsetzung

| Diazokomponente 1 | Kupplungskomponente 2 | Reaktivkomponente 3 |
|---|---|---|
| | 1-(2'-Chlorphenyl)-3-methyl-pyrazolon | |
| | 1-(3'-Chlorphenyl)-3-methyl-pyrazolon | |
| | 1-(2',5'-Dichlorphenyl)-3-methylpyrazolon | |
| | 3-Methyl-1-phenyl-5-aminopyrazol | |
| | 3-Methyl-1-(4'-methylphenyl)-5-pyrazolon | |
| | 1-Phenyl-5-aminopyrazol | |
| | 3-Methyl-1-(3'-sulfolanyl)-5-pyrazolon | |
| | 1-Benzyl-5-aminopyrazol | |

Beispiel 5

In eine Lösung von 0,1 Mol des Dinatriumsalzes der Monoazoverbindung, die durch Kuppeln von diazotierter Anilin-2,5-disulfonsäure mit 1-(3'-Aminophenyl)-3-methyl-pyrazolon-(5) erhalten wurde, werden langsam bei 0–5°C mit 29,4 g 3-Chlor-3-phenylsulfonylpropionylchlorid in 75 ml Aceton versetzt, wobei die freiwerdende Salzsäure mit 10%iger Sodalösung ständig auf pH 5–6 abgestumpft wird.

Nach beendeter Acylierung wird der Farbstoff mit Natriumchlorid ausgesalzen, isoliert und bei 30-40°C im Vakuum getrocknet. Er löst sich in Wasser mit gelber Farbe und liefert nach einer der oben beschriebenen Verfahren gelbe Färbungen und Drucke.

Ähnliche Reaktivfarbstoffe erhält man, wenn man statt des oben genannten Aminoazofarbstoffs einen aus den in der nachfolgenden Tabelle in den Spalten 1 und 2 aufgeführten Komponenten aufgebauten Aminoazofarbstoff mit den in Spalte 3 aufgeführten Reaktivkomponente umsetzt.

| Diazokomponente 1 | Kupplungskomponente 2 | Reaktivkomponente 3 |
|---|---|---|
| 1-Aminobenzol-2,5-disulfonsäure | 1-(3'-Aminophenyl)-3-methyl-5-pyrazolon | 3-Chlor-3-phenylsulfonyl-propionylchlorid |
| 1-Aminobenzol-2,4-disulfonsäure | 1-(2'-Methyl-3'-amino-5'-sulfo-phenyl)-3-methylpyrazolon-(5) | 3-Brom-3-phenylsulfonyl-propionylchlorid |
| 2-Amino-naphthalin-4,8-disulfonsäure | 1-(3'-Aminophenyl)-5-pyrazolon-3-carbonsäure | 2-Chlor-3-phenylsulfonyl-propionylchlorid |
| 1-Aminobenzol-2-sulfonsäure | 1-(2'-Methyl-3'-amino-5'-sulfo-phenyl)-3-carboxy-5-pyrazolon | 2-Brom-3-phenylsulfonyl-propionylchlorid |

Beispiel 6

Man löst 0,1 Mol des Diaminoazofarbstoffs der Formel

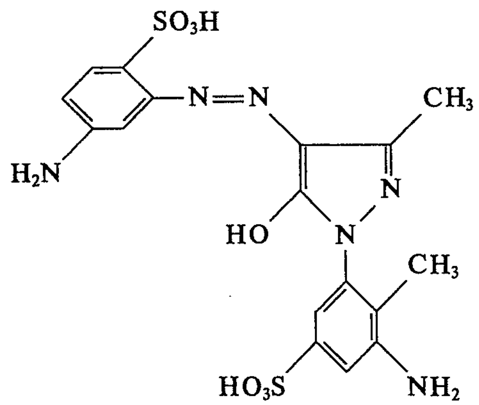

der durch Kuppeln von diazotierter 1-Amino-5-acetylamino-benzol-2-sulfonsäure auf 1-(2'-Methyl-3'-amino-5'-sulfophenyl)-3-methylpyrazolon-(5) und anschließender Verseifung der Acetylgruppe erhalten wurde, in 3000 Teilen Wasser.

In diese Lösung tropft man innerhalb einer Stunde bei 0–5°C 59 g 3-Chlor-3-phenylsulfonylpropionylchlorid in 150 ml Aceton, wobei die freiwerdende Salzsäure mit 10%iger Sodalösung ständig auf pH 5–6 abgestumpft wird.

Man läßt 2 Stunden nachrühren und salzt mit Natriumchlorid aus. Der Reaktivfarbstoff wird isoliert und bei 30–40°C im Vakuum getrocknet. Er löst sich in Wasser mit gelber Farbe und liefert naß- und lichtechte Färbungen auf Wolle und Baumwolle.

Ähnliche Reaktivfarbstoffe erhält man, wenn man statt des oben genannten Diaminoazofarbstoffs einen aus den in der nachfolgenden Tabelle aufgeführten Komponenten (Spalte 1 und 2) aufgebauten Diaminoazofarbstoff mit den in Spalte 3 aufgeführten Säurechloriden acyliert.

| Diazokomponente 1 | Kupplungskomponente 2 | Reaktivkomponente 3 |
|---|---|---|
| 5-Acetylamino-1-amino-benzol-2-sulfonsäure | 1-(3'-Amino-4'-sulfophenyl)-3-methyl-pyrazolon-(5) | 3-Chlor-3-phenylsulfonyl-propionylchlorid |
| 5-Acetylamino-1-amino-naphthalin-3,7-disulfonsäure | 1-(2'-Methyl-3'-amino-5'-sulfo-phenyl)-3-carboxy-pyrazolon-(5) | 3-Brom-3-phenylsulfonyl-propionylchlorid |
| 4-Acetylamino-1-amino-benzol-2,5-disulfonsäure | 1-(2'-Methyl-3'-amino-5'-sulfo-phenyl)-3-methylpyrazolon-(5) | 2-Chlor-3-phenylsulfonyl-propionylchlorid |
| 5-Acetylamino-1-amino-benzol-2,4-disulfonsäure | 1-(3'-Aminophenyl)-3-methyl-5-pyrazolon | 2-Brom-3-phenylsulfonyl-propionylchlorid |
| 5-Acetylamino-2-amino-naphthalin-4,8-disulfonsäure | 1-(3'-Aminophenyl)-5-pyrazolon-3-carbonsäure | |
| 3-Amino-4-sulfobenzyl-N-methylanilin | | |
| 5-Amino-2-methoxy-4-sulfobenzylamin | | |
| 2-Amino-5-amino-methylen-naphthalin-1-sulfonsäure | | |
| 1-Amino-4-nitrobenzol-2-sulfonsäure | | |
| 1-Amino-2-methyl-3-nitro-benzol-(5)-sulfonsäure | | |

Die in den Ausgangsfarbstoffen enthaltenen Acetylaminogruppen werden vor der Acylierung mit den Reaktivkomponenten verseift, die Nitrogruppen reduziert.

Beispiel 7

0,1 Mol Natrium-1,3-diaminobenzol-4-sulfonat werden in 300 ml Wasser gelöst und bei 0–5°C unter gutem Rühren mit 29,4 g 3-Chlor-3-phenylsulfonylpropionylchlorid, gelöst in 80 ml Aceton, versetzt. Durch Zutropfen von 10%iger Sodalösung wird ein pH-Wert von 6–7 gehalten.

Nach beendeter Reaktion wird die klare Lösung in eine Mischung von ca. 150 g Eis, 70 ml konz. Salzsäure und 15 g Kaliumchlorid gegeben, filtriert und mit ges. Kaliumchloridlösung gewaschen. Die feuchte Paste wird in 400 ml Wasser suspendiert und mit 7 g Natriumnitrit und 28 ml konz. Salzsäure diazotiert. Nach beendeter Reaktion wird der Nitritüberschuß mit Amidosulfonsäure zerstört. In diese Suspension der Diazokomponente gibt man eine gekühlte Lösung von 0,1 Mol 1-Ethyl-4-methyl-6-oxy-2-pyridon-3-carbonamid in 500 ml Wasser und 20 ml 40%iger Natronlauge. Es entsteht dabei der folgende Farbstoff:

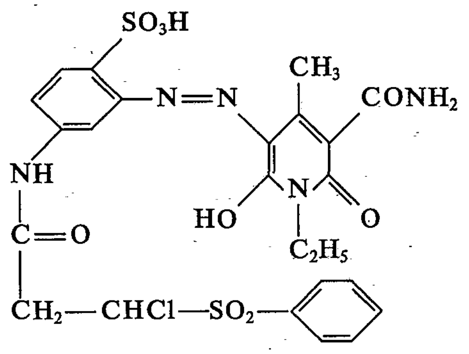

Die entstehende Lösung wird mit Sodalösung auf pH 6 gestellt, der Farbstoff ausgesalzen, und im Vakuum bei 30–40° getrocknet. Der Farbstoff färbt natürliche und künstliche Polyamidfasern und Cellulosefasern in reinen grünstichig gelben Nuancen.

Verwendet man anstelle von 1-Amino-5-(3'-chlor-3'-phenylsulfonylpropionylamino)-benzol-2-sulfonsäure die äquivalente Menge 1-Amino-5-(3'-brom-3'-phenylsulfonylpropionylamino)-benzol-2-sulfonsäure oder 1-Amino-5-(3'-chlor-3'-phenylsulfonylpropionylamino)-benzol-2-sulfonsäure bzw. 1-Amino-5-(2'-brom-3'-phenylsulfonylpropionylamino)-benzol-2-sulfonsäure so erhält man Farbstoffe mit ganz ähnlichen Eigenschaften.

Weitere gelbe Farbstoffe mit ähnlichen Eigenschaften erhält man, wenn man die in der folgenden Tabelle in Spalte 1 genannten Diazokomponenten mit den in Spalte 3 genannten Reaktivkomponenten acyliert und danach mit den in Spalte 2 genannten Kupplungskomponenten umsetzt.

| Diazokomponente 1 | Kupplungskomponente 2 | Reaktivkomponente 3 |
|---|---|---|
| 1,5-Diaminobenzol-2-sulfonsäure | 1-Ethyl-4-methyl-6-oxy-2-pyridon-3-carbonamid | 3-Chlor-3-phenylsulfonylpropionylchlorid |
| 1,5-Diamino-4-methylbenzol-3-sulfonsäure | 1,4-Dimethyl-6-oxy-2-pyridon-3-carbonamid | 3-Brom-3-phenylsulfonylpropionylchlorid |
| 1,4-Diaminobenzol-2-sulfonsäure | 1-(2'-Methoxyethyl)-4-methyl-6-oxy-2-pyridon-3-carbonamid | 2-Chlor-3-phenylsulfonylpropionylchlorid |
| 1,4-Diamino-5-methoxybenzol-2-sulfonsäure | 1-Ethyl-4-methyl-3-sulfomethyl-6-hydroxy-pyridon-(2) | 2-Brom-3-phenylsulfonylpropionylchlorid |
| 1,4-Diamino-2-methylbenzol-6-sulfonsäure | 1-Ethyl-4-methyl-3-sulfo-6-hydroxy-pyridon-(2) | |
| 1,4-Diaminobenzol-2,6-disulfonsäure | 1-Ethyl-6-hydroxy-4-sulfomethyl-2-pyridon-3-carbonamid | |
| 1,4-Diamino-2-methoxybenzol-6-sulfonsäure | 1-Ethyl-3-cyano-4-methyl-6-hydroxy-pyridon-(2) | |
| 1-Amino-5-(4'-aminobenzoylamino)-benzol-2-sulfonsäure | 4-Methyl-1-isopropyl-6-oxy-2-pyridon-3-carbonamid | |
| 1-Amino-5-(3'-aminobenzoylamino)-benzol-2-sulfonsäure | | |
| 2,5-Diamino-4'-methyl-3'-sulfo-1,1'-diphenylsulfon | 6-Amino-3-cyan-1-ethyl-4-ethylamino-pyridon-(2) | |
| 2,5-Diamino-4-chlor-4'-methyl-3'-sulfo-1,1'-diphenylsulfon | 6-Amino-3-cyan-1-methyl-4-methylamino-pyridon-(2) | |
| 1-Amino-4-(4'-aminobenzoylamino)benzol-2-sulfonsäure | 6-Amino-3-cyan-1-(2'-methoxyethyl-4-(2'-methoxyethylamino)-pyridon-(2) | |
| 1-Amino-4-(3'-aminobenzoylamino)benzol-2-sulfonsäure | 4-Carboxy-6-hydroxy-pyridon-(2) | |
| 1-Amino-2-methyl-3-(3'-aminobenzoylamino)-benzol-5-sulfonsäure | | |
| 1-Amino-2-methyl-3-(3'-aminobenzoylamino)-benzol-2-sulfonsäure | | |

Beispiel 8

Man tropft in eine neutrale Lösung von 0,1 Mol des durch Kuppeln von diazotierter 1-Amino-5-acetylamino-benzol-2-sulfonsäure mit 4-Carboxy-6-hydroxy-pyridon-(2) und anschließender Verseifung der Acetylgruppe erhaltenen Aminoazofarbstoffs

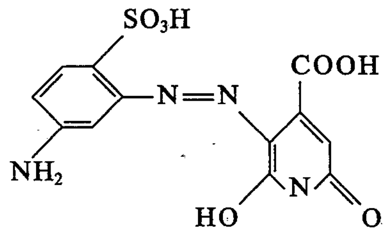

in 200 ml Wasser bei 0–5°C innerhalb von 1 Stunde 29,4 g 2-Chlor-3-phenylsulfonylpropionylchlorid in 60 ml Toluol ein, wobei man die freiwerdende Salzsäure mit Sodalösung auf einen pH-Wert von 6–7 abstumpft. Man läßt 60 Minuten nachrühren, trennt die organische Phase ab und salzt den Farbstoff mit Kaliumchlorid aus. Nach dem Filtrieren und Trocknen erhält man ein gelbes, gut wasserlösliches Pulver, das Wolle und Baumwolle in klaren, grünstichig gelben Tönen färbt.

Verwendet man anstelle von 2-Chlor-3-phenylsulfonylpropionylchlorid äquivalente Mengen von 2-Brom-3-phenylsulfonylpropionylchlorid, 3-Brom-3-phenylsulfonylpropionylchlorid bzw. 3-Chlor-3-phenylsulfonylpropionylchlorid zur Acylierung des obigen Farbstoffs, so erhält man Farbstoffe, die Wolle und Baumwolle ebenfalls in echten grünstichig gelben Tönen färben.

Weitere gelbe Farbstoffe erhält man, wenn man die in der folgenden Tabelle in Spalte 1 genannte Diazokomponente mit den in Spalte 2 genannten Kupplungskomponenten umsetzt, die erhaltenen Farbstoffe verseift, sofern sie Acetylaminogruppen enthalten, und anschließend mit den in Spalte 3 angegebenen Reaktivkomponenten acyliert.

| Diazokomponente 1 | Kupplungskomponente 2 | Reaktivkomponente 3 |
|---|---|---|
| 5-Acetylamino-1-amino-benzol-2-sulfonsäure | 1-Ethyl-4-methyl-6-oxy-2-pyridon-3-carbonamid | 3-Chlor-3-phenylsulfonyl-propionylchlorid |
| 5-Acetylamino-1-amino-naphthalin-3,7-disulfonsäure | 1,4-Dimethyl-6-oxy-2-pyridon-3-carbonamid | 3-Brom-3-phenylsulfonyl-propionylchlorid |
| 4-Acetylamino-1-amino-benzol-2-sulfonsäure | 1-(2′-Methoxyethyl)-4-methyl-6-oxy-2-pyridon-3-carbonamid | 2-Chlor-3-phenylsulfonyl-propionylchlorid |
| 4-Acetylamino-1-amino-benzol-2,5-disulfonsäure | 1-Ethyl-4-methyl-3-sulfomethyl-6-hydroxy-pyridon-(2) | 2-Brom-3-phenylsulfonyl-propionylchlorid |
| 5-Acetylamino-2-amino-naphthalin-4,8-disulfonsäure | 1-Ethyl-4-methyl-3-sulfo-6-hydroxy-pyridon-(2) | |
| 5-Acetylamino-1-amino-benzol-2,4-disulfonsäure | 1-Ethyl-6-hydroxy-4-sulfo-methyl-2-pyridon-3-carbonamid | |
| 3-Amino-4-sulfobenzyl-N-methylamin | 1-Ethyl-3-cyano-4-methyl-6-hydroxy-pyridon-(2) | |
| 5-Amino-2-methoxy-4-sulfobenzylamin | 4-Methyl-1-isopropyl-6-oxy-2-pyridon-3-carbonamid | |
| 2-Amino-5-amino-methylen-naphthalin-1-sulfonsäure | 6-Amino-3-cyan-1-ethyl-4-ethylamino-pyridon-(2) | |
| 1-Amino-2-methyl-3-oxalyl-aminobenzol-5-sulfonsäure | 6-Amino-3-cyan-1-methyl-4-methylamino-pyridon-(2) | |
| | 6-Amino-3-cyan-1-(2′-methoxy-ethyl)-4-methoxyethylamino-pyridon-(2) | |
| | 4-Carboxy-6-hydroxy-pyridon-(2) | |

Beispiel 9

0,1 Mol 1,4-Diaminobenzol-2-sulfonsäure werden in 300 ml Wasser gelöst und bei 0–5° unter gutem Rühren mit 29,4 g 3-Chlor-3-phenylsulfonylpropionylchlorid, gelöst in 80 ml Acetonitril, versetzt. Durch Zutropfen von 10%iger Sodalösung wird ein pH-Wert von 6–7 gehalten. Nach beendeter Acylierung wird die Lösung mit Salzsäure angesäuert, das ausgefallene Reaktionsprodukt abfiltriert und mit gesättigter Kaliumchloridlösung gewaschen.

Die feuchte Paste wird in 200 ml Wasser neutral gelöst, mit 7 g Natriumnitrit versetzt und unter Rühren in eine Mischung aus 200 ml Wasser und 30 ml konz. Salzsäure eingetragen. Die Suspension des Diazoniumsalzes wird danach in eine Lösung von 0,1 Mol 1-Benzoylamino-8-hydroxynapththalin-3,6-disulfonsäure und 40 g Natriumacetat in 400 ml Wasser gegeben. Nach beendeter Kupplung wird auf pH 7 gestellt und mit Natriumchlorid ausgesalzen, filtriert und im Vakuum bei 40° getrocknet. Der so erhaltene Farbstoff der Formel

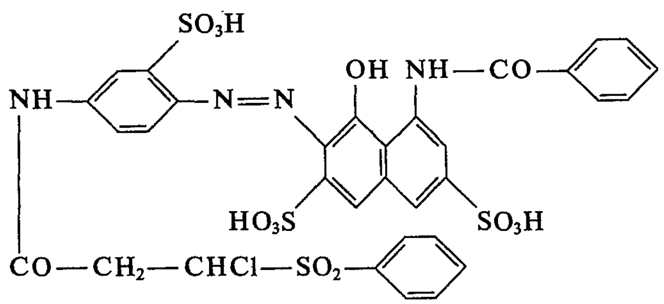

färbt Wolle und Baumwolle in echten rotvioletten Tönen.

Verwendet man anstelle von 1,4-Diaminobenzol-2-sulfonsäure 1,5-Diamino-2-sulfonsäure, so erhält man einen Farbstoff der Formel

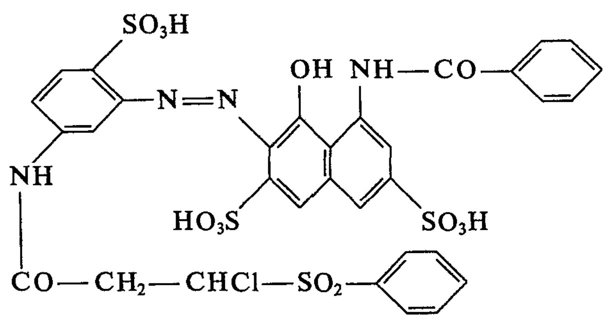

der Wolle und Baumwolle in echten blaustichig roten Tönen färbt.

Nach dem gleichen Verfahren liefern auch die in Spalte 1 der folgenden Tabelle aufgeführten Kupplungskomponenten und die in Zeile 1 aufgeführten Diazokomponenten Farbstoffe, die Wolle und Baumwolle in guten Naß- und Lichtechtheiten färben.

Statt der 3-Chlor-3-phenylsulfonylpropionylderivaten können auch entsprechend 1-Amino-5-(2'-chlor-3'-phenylsulfonylpropionylamino)-, 1-Amino-5-(3'-brom-3'-phenylsulfonylpropionylamino)-, 1-Amino-5-(2'-brom-3'-phenylsulfonylpropionylamino)-, 1-Amino-4-(2'-chlor-3'-phenylsulfonylpropionylamino)-, 1-Amino-4-(3'-brom-3'-phenylsulfonylpropionylamino)- bzw. 1-Amino-4-(2'-brom-3'-phenylsulfonylpropionylamino)-benzol-2-sulfonsäure eingesetzt werden. Sie liefern Färbungen mit guten Naß- und Lichtechtheiten.

| Kupplungskomponente | Farbton<br>Diazokomponente<br>1-Amino-5-(3'-chlor-3-phenyl-sulfonylpropionyl-amino)-benzol-2-sulfonsäure | 1-Amino-4-(3'-chlor-3'-phenylsulfonylpropionyl-amino)-benzol-2-sulfonsäure |
|---|---|---|
| 1-Acetylamino-8-hydroxynaphthalin-3,6-disulfonsäure | rot | rot |
| 1-Acetylamino-8-hydroxynaphthalin-4,6-disulfonsäure | rot | rot |
| 1-Propionylamino-8-hydroxynaphthalin-4,6-disulfonsäure | rot | rot |
| 1-n-Butyrylamino-8-hydroxynaphthalin-4,6-disulfonsäure | rot | rot |
| 1-Benzoylamino-8-hydroxynaphthalin-4,6-disulfonsäure | rot | rot |
| 1-Acetylamino-8-hydroxynaphthalin-3,6-disulfonsäure | rot | rot |
| 1-Acrylamino-8-hydroxynaphthalin-4,6-disulfonsäure | rot | rot |
| 1-Acrylamino-8-hydroxynaphthalin-3,6-disulfonsäure | rot | rot |
| 1-(α,β-Dibrompropionylamino)-8-hydroxynaphthalin-3,6-disulfonsäure | rot | rot |
| 1-(α,β-Dibrompropionylamino)-8-hydroxynaphthalin-4,6-disulfonsäure | rot | rot |
| 1-[4'-(α,β-Dibrompropionylamino)-benzoylamino]-8-hydroxynaphthalin-3,6-disulfonsäure | rot | rot |
| 1-[4'-(α,β-Dibrompropionylamino)-benzoylamino]-8-hydroxynaphthalin-4,6-disulfonsäure | rot | rot |
| 1-[3'-(α,β-Dibrompropionylamino)-benzoylamino]-8-hydroxynaphthalin-3,6-disulfonsäure | rot | blaust. rot |
| 1-[3'-(α,β-Dibrompropionylamino)-benzoylamino]-8-hydroxynaphthalin-4,6-disulfonsäure | rot | rot |
| 1-[2'-(2"-sulfophenylamino)-4'-fluortriazin-1',3',5'-yl-6')-8-hydroxynaphthalin-3,6-disulfonsäure | rot | blaust. rot |
| 1-(2',3'-Dichlorchinoxalin-6'-carbonylamino)-8-hydroxynaphthalin-4,6-disulfonsäure | rot | rot |
| 1-Amino-8-hydroxynaphthalin-2,4-disulfonsäure | blaust. rot | violett |
| 1-Hydroxy-naphthalin-4-sulfonsäure | rot | rot |
| 1-Hydroxy-naphthalin-5-sulfonsäure | rot | rot |
| 1-Hydroxy-naphthalin-4,6-disulfonsäure | scharlach | rot |
| 1-Hydroxy-naphthalin-4,7-disulfonsäure | rot | rot |
| 1-Hydroxy-naphthalin-3,7-disulfonsäure | rot | rot |
| 2-Acetylamino-5-hydroxynaphthalin-1,7-disulfonsäure | orange | scharlach |
| 2-(2,3'-Dibrompropionylamino)-5-hydroxynaphthalin-1,7-disulfonsäure | orange | scharlach |

| Kupplungskomponente | Farbton<br>Diazokomponente<br>1-Amino-5-(3'-chlor-3-phenyl-sulfonylpropionyl-amino)-benzol-2-sulfonsäure | <br><br>1-Amino-4-(3'-chlor-3'-phenylsulfonylpropionyl-amino)-benzol-2-sulfonsäure |
|---|---|---|
| 2-Acetylamino-8-hydroxynaphthalin-6-sulfonsäure | scharlach | rot |
| 2-Acetylamino-8-hydroxynaphthalin-3,6-disulfonsäure | scharlach | rot |
| 2-Acetylamino-5-hydroxynaphthalin-7-sulfonsäure | orange | scharlach |
| 1-Acetylamino-5-hydroxynaphthalin-7-sulfonsäure | scharlach | rot |
| 2-(2',3'-Dibrompropionylamino)-8-hydroxynaphthalin-6-sulfonsäure | scharlach | rot |
| 2-(2',3'-Dibrompropionyl-N-methylamino)-8-hydroxynaphthalin-6-sulfonsäure | rot | rot |
| 2-(2',3'-Dibrompropionylamino)-5-hydroxynaphthalin-7-sulfonsäure | orange | scharlach |
| 2-(2',3'-Dibrompropionyl-N-methylamino)-5-hydroxynaphthalin-7-sulfonsäure | orange | scharlach |
| 1-[2'-(2"-sulfophenylamine)-4'-fluortriazin-1',3',5'-yl-6'-)-8-hydroxynaphthalin-6-sulfonsäure | scharlach | rot |
| 1-(2',3'-Dichlorchinoxalin-6-carbonylamino)-8-hydroxynaphthalin-6-sulfonsäure | scharlach | rot |
| 1-(5'-Chlor-2',6'-difluordiazin-1',3'-yl-4'-amino)-8-hydroxynaphthalin-6-sulfonsäure | scharlach | rot |
| 2-[2'-(2"-sulfophenylamino)-4'-fluortriazin-1',3',5'-yl-6')-5-hydroxynaphthalin-7-sulfonsäure | orange | scharlach |
| 2-(2',3'-Dichlorchinoxalin-6'-carbonylamino)-5-hydroxynaphthalin-7-sulfonsäure | orange | scharlach |
| 2-(5'-Chlor-2',6'-difluordiazin-1',3'-yl-4'-amino)-5-hydroxynaphthalin-7-sulfonsäure | orange | scharlach |
| 6-Acetylamino-2-hydroxynaphthalin-4-sulfonsäure | orange | orange |
| 2-Hydroxynaphthalin-5-sulfonsäure | orange | orange |
| 2-Hydroxynaphthalin-6-sulfonsäure | orange | orange |
| 2-Hydroxynaphthalin-7-sulfonsäure | orange | orange |
| 2-Hydroxy-naphthalin-6,8-disulfonsäure | orange | orange |
| 2-Hydroxy-naphthalin-5,7-disulfonsäure | orange | orange |
| 2-Hydroxy-naphthalin-3,7-disulfonsäure | orange | orange |
| 2-Hydroxy-naphthalin-3,6-disulfonsäure | orange | orange |

Beispiel 10

0,1 Mol 1-(4'-Aminobenzoylamino)-8-hydroxy-naphthalin-3,6-disulfonsäure werden in 600 Teilen Wasser mit Sodalösung bei pH 4,5 gelöst. In diese Lösung tropft man innerhalb einer Stunde bei 0–5°C 29,4 g 2-Chlor-3-phenylsulfonylpropionylchlorid in 80 ml Aceton ein, wobei die freiwerdende Salzsäure mit Sodalösung ständig auf pH 4–5 abgestumpft wird. Das acylierte Farbstoffzwischenprodukt wird mit Kaliumchlorid abgeschieden und isoliert. Die so erhaltene Paste wird in 700 Teilen Wasser angeschlagen und bei einem pH von 5–6 bei 0–5°C mit 17,5 Teilen diazotierter 2-Amino-benzolsulfonsäure, gelöst in 200 Teilen Wasser gekuppelt. Bei einem End-pH von 6 wird mit Kaliumchlorid ausgesalzen, isoliert und im Vakuum bei 30–40° getrocknet. Der Farbstoff der Formel

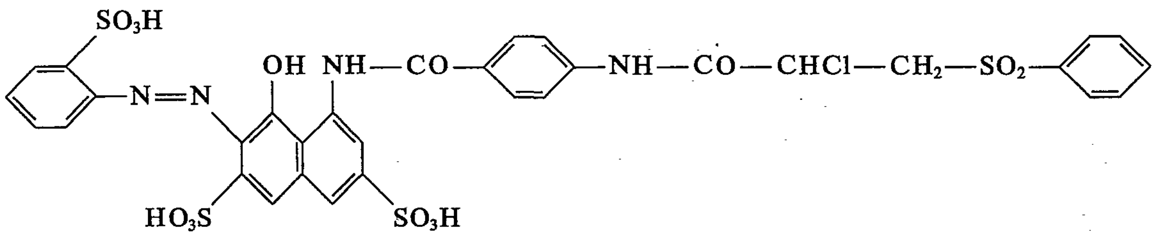

der Wolle und Baumwolle in echten roten Tönen färbt.

Verwendet man anstelle von 1-(4'-Aminobenzoylamino)-8-hydroxynaphthalin-3,6-disulfonsäure, 1-(3'-Aminobenzoylamino)-8-hydroxynaphthalin-4,6-disulfonsäure, so erhält man einen Farbstoff der Formel

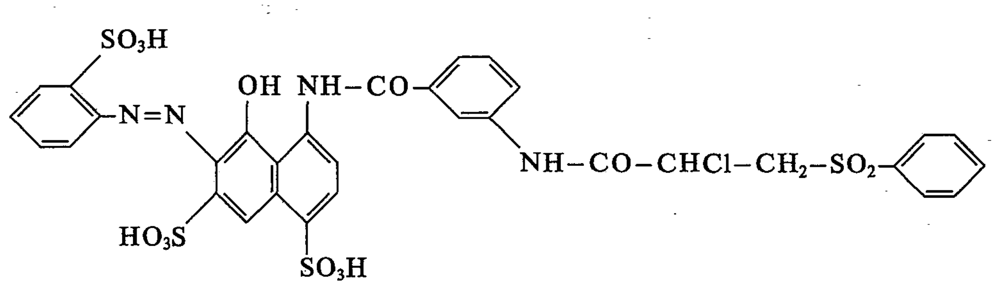

färbt Wolle und Baumwolle in echten roten Tönen.

Nach dem gleichen Verfahren liefern auch 1-(3'-Aminobenzoylamino)-8-hydroxy-naphthalin-3,6-disulfonsäure und 1-(4'-Aminobenzoylamino)-8-hydroxynaphthalin-4,6-disulfonsäuren rote Farbstoffe mit den oben beschriebenen Eigenschaften.

Verwendet man anstelle von 2-Chlor-3-phenylsulfonyl-propionylchlorid äquivalente Mengen von 2-Brom-3-phenylsulfonylpropionylchlorid, 3-Brom-3-phenylsulfonylpropionylchlorid bzw. 3-Chlor-3-phenylsulfonylpropionylchlorid zur Acylierung, so erhält man Farbstoffe, die Wolle und Baumwolle in roten Tönen färben.

Weitere Farbstoffe in roten bis violetten Tönen erhält man, wenn man die oben genannten Naphthalindisulfonsäuren mit den oben genannten Säurechloriden acyliert und dann mit den in der folgenden Tabelle genannten Diazokomponenten umsetzt.

| Diazokomponente | Farbton | | | |
|---|---|---|---|---|
| | Kupplungskomponente | | | |
| | 8-Hydroxynaphthalin-3,6-disulfonsäure- | | 8-Hydroxynaphthalin-4,6-disulfonsäure- | |
| | 1-(4'-amino-benzoylamino) | 1-(3'-amino-benzoylamino) | 1-(4'-amino-benzoylamino) | 1-(3'-amino-benzoylamino) |
| Aminobenzol | rot | rot | rot | rot |
| 1-Aminobenzol-3-sulfonsäure | rot | rot | rot | rot |
| 1-Aminobenzol-4-sulfonsäure | rot | rot | rot | rot |
| 1-Amino-5-chlor-benzol 2-sulfonsäure | rot | rot | rot | rot |

Fortsetzung

| Diazokomponente | Farboton Kupplungskomponente 8-Hydroxynaphthalin-3,6-disulfonsäure- 1-(4′-amino-benzoylamino) | 8-Hydroxynaphthalin-3,6-disulfonsäure- 1-(3′-amino-benzoylamino) | 8-Hydroxynaphthalin-4,6-disulfonsäure- 1-(4′-amino-benzoylamino) | 8-Hydroxynaphthalin-4,6-disulfonsäure- 1-(3′-amino-benzoylamino) |
|---|---|---|---|---|
| 1-Amino-2-carboxy-benzol-4-sulfonsäure | rot | rot | rot | rot |
| 1-Amino-4-methyl-benzol-2-sulfonsäure | rot | rot | rot | rot |
| 1-Amino-5-acetylamino-benzol-2-sulfonsäure | blaust. rot | blaust. rot | rot | rot |
| 1-Amino-5-(2′-[2″-sulfo-phenylamino]-4′-fluortriazin-1′,3′,5′-yl-6′)-aminobenzol-2-sulfonsäure | blaust. rot | blaust. rot | rot | rot |
| 1-Amino-5-(2′,3′-dibrom-propionylamino)-benzol-2-sulfonsäure | blaust. rot | blaust. rot | rot | rot |
| 1-Amino-5-(5′-chlor-2′,6′-difluordiazin-1′,3′-yl-4′-amino)-benzol-2-sulfonsäure | blaust. rot | blaust. rot | rot | rot |
| 1-Amino-5-(2′,3′-dichlor-chinoxalin-6-carboxylamino)-benzol-2-sulfonsäure | blaust. rot | blaust. rot | rot | rot |
| 2-Amino-naphthalin-1-sulfonsäure | blaust. rot | blaust. rot | blaust. rot | blaust. rot |
| 2-Amino-naphthalin-1,5-disulfonsäure | blaust. rot | blaust. rot | blaust. rot | blaust. rot |
| 2-Amino-naphthalin-1,7-disulfonsäure | blaust. rot | blaust. rot | blaust. rot | blaust. rot |
| 2-Amino-naphthalin-3,6-disulfonsäure | blaust. rot | blaust. rot | blaust. rot | blaust. rot |
| 2-Amino-naphthalin-3,7-disulfonsäure | blaust. rot | blaust. rot | blaust. rot | blaust. rot |
| 2-Amino-naphthalin-4,8-disulfonsäure | blaust. rot | blaust. rot | blaust. rot | blaust. rot |
| 2-Amino-naphthalin-1,5,7-trisulfonsäure | blaust. rot | blaust. rot | blaust. rot | blaust. rot |
| 1-Amino-4-chlor-benzol-2-sulfonsäure | blaust. rot | blaust. rot | blaust. rot | blaust. rot |
| 1-Amino-2-methoxy-benzol-5-sulfonsäure | blaust. rot | blaust. rot | blaust. rot | blaust. rot |

Fortsetzung

| Diazokomponente | Farboton | | | |
|---|---|---|---|---|
| | Kupplungskomponente | | | |
| | 8-Hydroxynaphthalin-3,6-disulfonsäure- | | 8-Hydroxynaphthalin-4,6-disulfonsäure- | |
| | 1-(4'-amino-benzoylamino) | 1-(3'-amino-benzoylamino) | 1-(4'-amino-benzoylamino) | 1-(3'-amino-benzoylamino) |
| 1-Amino-4-acetyl-aminobenzol-2-sulfonsäure | violett | violett | blaust. rot | blaust. rot |
| 1-Amino-4-methoxy-benzol-6-sulfonsäure | violett | violett | rotst. violett | rotst. violett |
| 1-Amino-4(2',3'-dibrom-propionylamino)-benzol-2-sulfonsäure | violett | violett | blaust. rot | blaust. rot |

Weitere Farbstoffe, die Wolle und Baumwolle mit guten Naßechtheiten färben, erhält man, wenn man nach dem oben angegebenen Verfahren die in Zeile 1 der folgenden Tabelle angeführten Kupplungskomponenten mit 3-Chlor-3-phenylsulfonylpropionylchlorid, 3-Brom-3-phenylsulfonylpropionylchlorid, 2-Chlor-3-phenylsulfonylpropionylchlorid und 3-Brom-3-phenylsulfonylpropionylchlorid acyliert und danach mit den Diazoniumsalzen der in Spalte 1 der Tabelle aufgeführten Diazokomponente kuppelt.

| Diazokomponente | Farbton | | | | |
|---|---|---|---|---|---|
| | Kupplungskomponente | | | | |
| | 2-Amino-5-hydroxy-naphthalin-1,7-disulfonsäure | 1-Amino-8-hydroxy-naphthalin-3,6-disulfonsäure | 1-Amino-8-hydroxy-naphthalin-4,6-disulfonsäure | 2-Amino-8-hydroxy-naphthalin-3,6-disulfonsäure | 1-Amino-8-hydroxy-naphthalin-4-sulfonsäure |
| Aminobenzol | orange | rot | rot | scharlach | rot |
| 1-Aminobenzol-2-sulfonsäure | orange | rot | rot | scharlach | rot |
| 1-Aminobenzol-3-sulfonsäure | orange | rot | rot | scharlach | rot |
| 1-Aminobenzol-4-sulfonsäure | orange | rot | rot | scharlach | rot |
| 1-Amino-5-chlor-benzol-2-sulfonsäure | orange | rot | rot | scharlach | rot |
| 1-Amino-2-carboxy-benzol-4-sulfonsäure | orange | rot | rot | scharlach | rot |
| 1-Amino-4-methyl benzol-2-sulfonsäure | orange | rot | rot | scharlach | rot |
| 1-Amino-5-acetylamino-benzol-2-sulfonsäure | orange | rot | rot | scharlach | rot |

Fortsetzung

| Diazokomponente | Farbton Kupplungskomponente 2-Amino-5-hydroxy-naphthalin-1,7-disulfonsäure | 1-Amino-8-hydroxy-naphthalin-3,6-disulfonsäure | 1-Amino-8-hydroxy-naphthalin-4,6-disulfonsäure | 2-Amino-8-hydroxy-naphthalin-3,6-disulfonsäure | 1-Amino-8-hydroxy-naphthalin-4-sulfonsäure |
|---|---|---|---|---|---|
| 1-Amino-5-(2'-[2"-sulfo-phenylamino]-4'-fluor-triazin-1',3',5'-yl-6')-aminobenzol-2-sulfonsäure | orange | rot | rot | scharlach | rot |
| 1-Amino-5-(2',3'-dibrom-propionylamino)-benzol-2-sulfonsäure | orange | rot | rot | scharlach | rot |
| 1-Amino-5-(5'-chlor-2,6-difluordiazin-1',3'-yl-4'-amino)-benzol-2-sulfonsäure | orange | rot | rot | scharlach | rot |
| 2-Amino-naphthalin-1-sulfonsäure | orange | blaust. rot | rot | scharlach | rot |
| 2-Amino-naphthalin-1,5-disulfonsäure | orange | blaust. rot | rot | scharlach | rot |
| 2-Amino-naphthalin-1,7-disulfonsäure | orange | blaust. rot | rot | scharlach | rot |
| 2-Amino-naphthalin-3,6-disulfonsäure | orange | blaust. rot | rot | scharlach | rot |
| 2-Amino-naphthalin-3,7-disulfonsäure | orange | blaust. rot | rot | scharlach | rot |
| 2-Amino-naphthalin-4,8-disulfonsäure | orange | blaust. rot | rot | scharlach | rot |
| 2-Amino-naphthalin-1,5,7-trisulfonsäure | orange | blaust. rot | rot | scharlach | rot |
| 1-Amino-4-chlor-benzol-2-sulfonsäure | orange | rot | rot | scharlach | rot |
| 1-Amino-2-methoxy-benzol-5-sulfonsäure | scharlach | violett | blaust. rot | rot | blaust. rot |
| 1-Amino-4-acetyl-amino-benzol-2-sulfonsäure | scharlach | rotst. violett | blaust. rot | rot | blaust. rot |
| 1-Amino-4(2',3'-dibrom-propionylamino)-benzol-2-sulfonsäure | scharlach | rotst. violett | blaust. rot | rot | blaust. rot |

Beispiel 11

0,1 Mol 2-Methylamino-5-hydroxy-naphthalin-7-sulfonsäures Natrium werden in 150 Teilen Wasser gelöst. Bei 0–5°C läßt man in einer Stunde 29,4 g 2-Chlor-3-phenylsulfonylpropionylchlorid in 100 ml Methylenchlorid eintropfen. Durch ständiges Abstumpfen der freiwerdenden Salzsäure mit Sodalösung wird ein pH von 5–6 gehalten. Nach beendeter Acylierung gibt man 30 Teile Natriumbicarbonat zu, trennt von der organischen Phase ab und läßt bei 20°C innerhalb von 15 Minuten die Diazosuspension aus 0,95 Mol Dinatriumsalz der 2-Amino-naphthalin-1,7-disulfonsäure in 200 ml Wasser zutropfen. Der sofort entstandene orangefarbene Reaktivfarbstoff der Formel

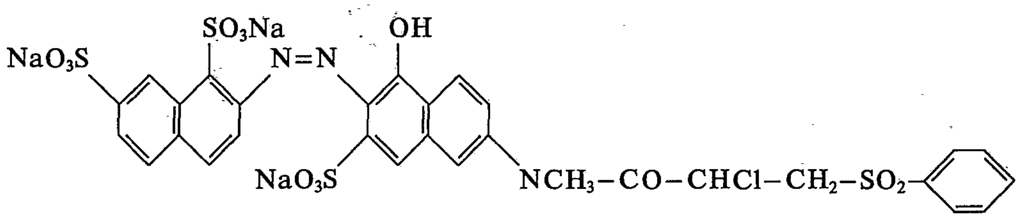

wird nach einstündigem Nachrühren durch Zugabe von 80 g Kochsalz völlig abgeschieden, abfiltriert, mit verdünnter Kochsalzlösung gewaschen und bei 35°C im Vakuum getrocknet.
Er färbt Cellulosematerialien nach den oben genannten Verfahren in rotstichigen Orangetönen von guten Naßechtheiten und guter Chlorbeständigkeit.
In der nachfolgenden Tabelle sind die Farbtöne weiterer Farbstoffe angeführt, die aus den ebenfalls aufgeführten Diazokomponenten, Kupplungskomponenten und den Reaktivkomponenten 2-Chlor-3-phenylsulfonylpropionylchlorid, 2-Brom-3-phenylsulfonylpropionylchlorid, 3-Chlor-3-phenylsulfonylpropionylchlorid und 3-Brom-3-phenylsulfonylpropionylchlorid aufgebaut werden.

| Diazokomponente | Farbton<br>Kupplungskomponente | | | | |
|---|---|---|---|---|---|
| | 2-Amino-5-hydroxy-naphthalin-7-sulfonsäure | 2-Methylamino-5-hydroxy-naphthalin-7-sulfonsäure | 2-Amino-8-hydroxy-naphthalin-6-sulfonsäure | 2-Methylamino-8-hydroxy-naphthalin-6-sulfonsäure | 2-(4'-Aminobenzoylamino)-5-hydroxy-naphthalin-7-sulfonsäure |
| 1-Aminobenzol-2-sulfonsäure | orange | orange | scharlach | scharlach | orange |
| 1-Aminobenzol-3-sulfonsäure | orange | orange | scharlach | scharlach | orange |
| 1-Aminobenzol-4-sulfonsäure | orange | orange | scharlach | scharlach | orange |
| 1-Amino-4-methylbenzol-2-sulfonsäure | orange | orange | scharlach | scharlach | orange |

| Diazokomponente | Farbton<br>Kupplungskomponente<br>2-Amino-5-hydroxy-naphthalin-7-sulfonsäure | 2-Methyl-amino-5-hydroxy-naphthalin-7-sulfonsäure | 2-Amino-8-hydroxy-naphthalin-7-sulfonsäure | 2-Methyl-amino-8-hydroxy-naphthalin-6-sulfonsäure | 2-(4'-Aminobenzoyl-amino)-5-hydroxy-naphthalin-7-sulfonsäure |
|---|---|---|---|---|---|
| 1-Amino-2,4-dimethyl-benzol-6-sulfonsäure | orange | orange | scharlach | scharlach | orange |
| 1-Amino-benzol-2,5-disulfonsäure | orange | orange | scharlach | scharlach | orange |
| 1-Amino-2-methyl-benzol-4,6-disulfonsäure | orange | orange | scharlach | scharlach | orange |
| 1-Amino-5-acetylamino-benzol-2-sulfonsäure | orange | orange | scharlach | scharlach | orange |
| 1-Amino-5-(2'-[2''-sulfo-phenylamino]-4'-fluor-triazin-1',3',5'-yl-')-amino-benzol-2-sulfonsäure | orange | orange | scharlach | scharlach | orange |
| 1-Amino-5-(2',3'-dibrom-propionylamino)-benzol-2-sulfonsäure | orange | orange | scharlach | scharlach | orange |
| 1-Amino-5-(5'-chlor-2',6'-difluordiazin-1',3'-yl-4'-amino)-benzol-2-sulfonsäure | orange | orange | scharlach | scharlach | orange |
| 2-Amino-naphthalin-1-sulfonsäure | orange | orange | scharlach | scharlach | orange |
| 2-Amino-naphthalin-1,5-disulfonsäure | orange | orange | scharlach | scharlach | orange |
| 2-Amino-naphthalin-1,7-disulfonsäure | orange | orange | scharlach | scharlach | orange |

| Diazokomponente | Farbton Kupplungskomponente | | | | |
|---|---|---|---|---|---|
| | 2-Amino-5-hydroxy-naphthalin-7-sulfonsäure | 2-Methyl-amino-5-hydroxy-naphthalin-7-sulfonsäure | 2-Amino-8-hydroxy-naphthalin-6-sulfonsäure | 2-Methyl-amino-8-hydroxy-naphthalin-6-sulfonsäure | 2-(4'-Aminobenzoyl-amino)-5-hydroxy-naphthalin-7-sulfonsäure |
| 2-Amino-naphthalin-1,5,7-trisulfonsäure | orange | orange | scharlach | scharlach | orange |
| 1-Amino-2-methoxy-benzol-5-sulfonsäure | scharlach | scharlach | rot | rot | scharlach |
| 1-Amino-4-acetylamino-benzol-2-sulfonsäure | scharlach | scharlach | rot | rot | scharlach |
| 1-Amino-4(2',3'-dibrom-propionylamino)-benzol-2-sulfonsäure | scharlach | scharlach | rot | rot | scharlach |
| 1-Amino-4-methoxy-benzol-6-sulfonsäure | scharlach | scharlach | rot | rot | scharlach |
| 2-Amino-naphthalin-3,6-disulfonsäure | orange | orange | scharlach | scharlach | orange |
| 2-Amino-naphthalin-3,7-disulfonsäure | orange | orange | scharlach | scharlach | orange |
| 2-Amino-naphthalin-4,8-disulfonsäure | orange | orange | scharlach | scharlach | orange |

Beispiel 12

0,1 Mol des Farbstoffes, den man durch Kuppeln von diazotierter 2-Amino-naphthalin-1,5,7-trisulfonsäure mit 2-Acetylamino-5-hydroxynaphthalin-7-sulfonsäure und anschließender Verseifung der Acetylaminogruppe erhält

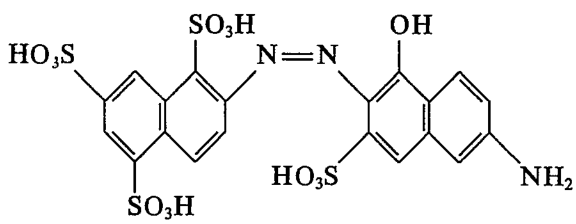

wird in 1000 ml Wasser neutral gelöst und bei pH 6 bei 0°C mit einer Lösung von 29,4 g 2-Chlor-3-phenylsulfonylpropionylchlorid in 150 ml Chlorbenzol versetzt. Der pH-Wert wird mit Sodalösung auf pH 6 gehalten. Nach beendeter Acylierung wird die organische Phase abgetrennt und die wäßrige Phase mit Kaliumchlorid ausgesalzen. Nach dem Filtrieren und Trocknen im Vakuum bei 30–40° erhält man einen wasserlöslichen Farbstoff, der Wolle und Baumwolle in Orangetönen von guten Naßechtheiten färbt.

Verwendet man anstelle von 2-Chlor-3-phenylsulfonylpropionylchlorid äquivalente Mengen von 2-Brom-3-phenylsulfonylpropionylchlorid, 3-Brom-3-phenylsulfonylpropionylchlorid bzw. 3-Chlor-3-phenylsulfonylpropionylchlorid zur Acylierung, so erhält man Farbstoffe, die Wolle und Baumwolle in Orangetönen von guten Naßechtheiten färben.

Weitere Farbstoffe erhält man, wenn man die in der folgenden Tabelle aufgeführten acetylierten

Aminohydroxynaphthalinsulfonsäuren mit den ebenfalls in der Tabelle aufgeführten Diazokomponenten kuppelt, den erhaltenen Farbstoff verseift und mit 2-Chlor-3-phenylsulfonyl-, 3-Chlor-3-phenylsulfonyl-, 2-Brom-3-phenylsulfonyl- und 3-Brom-3-phenylsulfonylpropionylchlorid nach der oben angegebenen Vorschrift acyliert. Man erhält Farbstoffe die Wolle und Baumwolle mit guten Naßechtheiten in den angegebenen Tönen färben.

| Diazokomponente | Farbton Kupplungskomponente 2-Acetyl-amino-5-hydroxy-naphthalin-7-sulfonsäure | 2(N-Acetyl-N-methyl-amino)-5-hydroxy-naphthalin-7-sulfonsäure | 2-Acetyl-amino-8-hydroxy-naphthalin-6-sulfonsäure | 2(N-Acetyl-N-methyl-amino)-8-hydroxy-naphthalin-6-sulfonsäure | 2-Acetyl-amino-8-hydroxy-naphthalin-3,6-disulfon-säure | 1-Acetyl-amino-8-hydroxy-naphthalin-3,6-disulfon-säure | 1-Acetyl-amino-8-hydroxy-naphthalin-4,6-disulfon-säure |
|---|---|---|---|---|---|---|---|
| Aminobenzol | orange | orange | scharlach | scharlach | scharlach | rot | rot |
| 1-Aminobenzol-2-sulfonsäure | orange | orange | scharlach | scharlach | scharlach | rot | rot |
| 1-Aminobenzol-3-sulfonsäure | orange | orange | scharlach | scharlach | scharlach | rot | rot |
| 1-Aminobenzol-4-sulfonsäure | orange | orange | scharlach | scharlach | scharlach | rot | rot |
| 1-Amino-4-methylbenzol-2-sulfonsäure | orange | orange | scharlach | scharlach | scharlach | rot | rot |
| 1-Amino-2,4-dimethylbenzol-6-sulfonsäure | orange | orange | scharlach | scharlach | scharlach | rot | rot |
| 1-Amino-benzol-2,5-disulfonsäure | orange | orange | scharlach | scharlach | scharlach | rot | rot |
| 1-Amino-2-methylbenzol-4,6-disulfonsäure | orange | orange | scharlach | scharlach | scharlach | rot | rot |
| 2-Amino-naphthalin-1-sulfonsäure | orange | orange | scharlach | scharlach | scharlach | rot | rot |
| 2-Amino-naphthalin-1,5-disulfonsäure | orange | orange | scharlach | scharlach | scharlach | rot | rot |
| 2-Amino-naphthalin-1,7-disulfonsäure | orange | orange | scharlach | scharlach | scharlach | rot | rot |
| 2-Amino-naphthalin-3,6-disulfonsäure | orange | orange | scharlach | scharlach | scharlach | rot | rot |
| 2-Amino-naphthalin-3,7-disulfonsäure | orange | orange | scharlach | scharlach | scharlach | rot | rot |
| 2-Amino-naphthalin-4,8-disulfonsäure | orange | orange | scharlach | scharlach | scharlach | rot | rot |
| 2-Amino-naphthalin-1,5,7-trisulfonsäure | orange | orange | scharlach | scharlach | scharlach | rot | rot |
| 1-Amino-4-chlorbenzol-2-sulfonsäure | orange | orange | scharlach | scharlach | scharlach | rot | rot |
| 1-Amino-2-methoxybenzol-5-sulfonsäure | scharlach | scharlach | rot | rot | rot | violett | blaust. rot |
| 1-Amino-4-methoxybenzol-6-sulfonsäure | scharlach | scharlach | rot | rot | rot | violett | blaust. rot |

Beispiel 13

Eine Suspension von 0,1 Mol des nach den Angaben von Beispiel 10 aus 1-(4'-Aminobenzoylamino)-8-hydroxy-naphthalin-3,6-disulfonsäure und 2-Chlor-3-phenylsulfonylpropionylchlorid hergestellten Farbstoffzwischenproduktes wird bei einem pH-Wert von 5–6 bei 0–5°C mit einer Suspension des Diazoniumsalzes von 0,1 Mol 1-Amino-5-(2'-chlor-3'-phenylsulfonylpropionylamino)-benzol-2-sulfonsäure (hergestellt nach den Angaben von Beispiel 1) vereinigt, wobei Kupplung zum Farbstoff der Formel

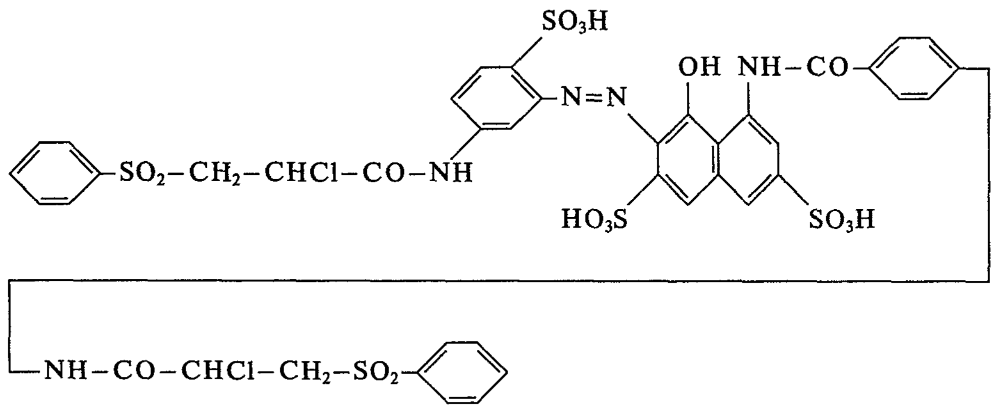

erfolgt, der ausgesalzen, isoliert und bei 30–40°C im Vakuum getrocknet wird. Der Farbstoff löst sich in Wasser und färbt Wolle und Baumwolle in echten blaustichig roten Tönen.

Verwendet man anstelle von 1-Amino-5-(2'-chlor-3'-phenylsulfonylpropionylamino)-benzol-2-sulfonsäure, 1-Amino-4-(2'-chlor-3'-phenylsulfonylpropionylamino)-benzol-2-sulfonsäure, so erhält man einen Farbstoff, der Wolle und Baumwolle in echten rotvioletten Tönen färbt.

Nach dem gleichen Verfahren liefern auch die in Spalte 1 der folgenden Tabelle aufgeführten Kupplungskomponenten und die in Zeile 1 aufgeführten Diazokomponenten Farbstoffe, die Wolle und Baumwolle in echten roten Tönen färben.

Statt der in der Tabelle erwähnten 2-Chlor-3-phenylsulfonylpropionylderivate können auch die entsprechenden 3-Chlor-3-phenylsulfonylpropionyl-, 3-Brom-3-phenylsulfonylpropionyl- und 2-Brom-3-phenylsulfonylpropionylderivate eingesetzt werden.

| Kupplungskomponente | Farbton | |
|---|---|---|
| | Diazokomponente | |
| | 1-Amino-4-(2'-chlor-3'-phenylsulfonylpropionylamino)-benzol-2-sulfonsäure | 1-Amino-5-(2'-chlor-3'-phenylsulfonylpropionylamino)-benzol-2-sulfonsäure |
| 1-[3'-(2"-chlor-3"-phenylsulfonylpropionylamino)-benzoylamino]-8-hydroxynaphthalin-3,6-disulfonsäure | blaust. rot | rot |
| 1-[4'-(2"-chlor-3"-phenylsulfonylpropionylamino)-benzoylamino)-8-hydroxynaphthalin-4,6-disulfonsäure | blaust. rot | rot |
| 1-[3'-(2"-chlor-3"-phenylsulfonylpropionylamino)-benzoylamino]-8-hydroxynaphthalin-4,6-disulfonsäure | blaust. rot | rot |

Beispiel 14

Eine Lösung von 0,1 Mol des nach den Angaben von Beispiel 11 aus 2-Methylamino-5-hydroxy-naphthalin-7-sulfonsäure und 2-Chlor-3-phenylsulfonylpropionylchlorid hergestellten Farbstoffzwischenproduktes wird bei einem pH-Wert von 5–6 bei 0–5°C mit einer Suspension des Diazoniumsalzes von 0,1 Mol 1-Amino-5-(2'-chlor-3'-phenylsulfonylpropionylamino)-benzol-2-sulfonsäure (hergestellt nach den Angaben von Beispiel 1) vereinigt, wobei Kupplung zum Farbstoff der Formel

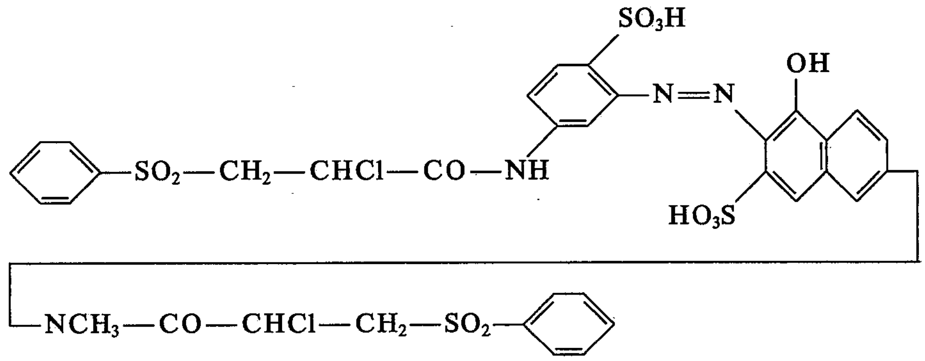

erfolgt, der ausgesalzen, isoliert und bei 30–40° im Vakuum getrocknet wird. Der Farbstoff löst sich in Wasser und färbt Wolle und Baumwolle in echten Orangetönen.

Verwendet man anstelle von 1-Amino-5-(2'-chlor-3'-phenylsulfonylpropionylamino)-benzol-2-sulfonsäure, 1-Amino-4-(2'-chlor-3'-phenylsulfonylpropionylamino)-benzol-2-sulfonsäure, so erhält man einen Farbstoff, der Wolle und Baumwolle in echten Scharlachtönen färbt.

Nach dem gleichen Verfahren liefern auch die in Spalte 1 der folgenden Tabelle aufgeführten Kupplungskomponenten und die in Zeile 1 aufgeführten Diazokomponenten Farbstoffe, die Wolle und Baumwolle mit guten Naßechtheiten färben.

Statt der 2-Chlor-3-phenylsulfonylpropionylderivate können auch die entsprechenden 3-Chlor-3-phenylsulfonylpropionyl-, 3-Brom-3-phenylsulfonylpropionyl- und 2-Brom-3-phenylsulfonylpropionylderivate eingesetzt werden.

| Kupplungskomponente | Farbton<br>Diazokomponente<br>1-Amino-4-(2'-chlor-3'-phenylsulfonylpropionylamino)-benzol-2-sulfonsäure | <br><br>1-Amino-5-(2'-chlor-3'-phenylsulfonylpropionylamino)-benzol-2-sulfonsäure |
|---|---|---|
| 2-[2'-chlor-3'-phenylsulfonylpropionylamino)-5-hydroxynaphthalin-7-sulfonsäure | scharlach | orange |
| 2-(2'-chlor-3'-phenylsulfonylpropionylamino)-8-hydroxynaphthalin-6-sulfonsäure | rot | scharlach |
| 2-(2'-chlor-3'-phenylsulfonylpropionyl-N-methylamino)-8-hydroxynaphthalin-6-sulfonsäure | rot | scharlach |
| 2-[4'-(2''-chlor-3''-phenylsulfonylpropionylamino)-benzoylamino]-5-hydroxynaphthalin-7-sulfonsäure | scharlach | orange |
| 2-[3'-(2''-chlor-3''-phenylsulfonylpropionylamino)-benzoylamino]-5-hydroxynaphthalin-7-sulfonsäure | scharlach | orange |
| 2-(2'-chlor-3'-phenylsulfonylpropionylamino)-5-hydroxynaphthalin-1,7-disulfonsäure | scharlach | orange |
| 2-(2'-chlor-3'-phenylsulfonylpropionylamino)-8-hydroxynaphthalin-3,6-disulfonsäure | rot | scharlach |
| 1-(2'-chlor-3'-phenylsulfonylpropionylamino)-8-hydroxynaphthalin-3,6-disulfonsäure | blaust. rot | rot |
| 1-(2'-chlor-3'-phenylsulfonylpropionylamino)-8-hydroxynaphthalin-4,6-disulfonsäure | rot | rot |
| 1-(2'-chlor-3'-phenylsulfonylpropionylamino)-8-hydroxynaphthalin-4-sulfonsäure | rot | rot |

Beispiel 15

0,1 Mol 3-Amino-N-methylbenzylamin-4-sulfonsäure werden in 200 ml Wasser heiß gelöst, auf 0–5° gekühlt und mit 35 ml konz. Salzsäure versetzt. Man diazotiert mit 7 g Natriumnitrit und tropft die Suspension des Diazoniumsalzes in eine neutrale auf 0–5°C gekühlte Lösung von 0,1 Mol 1-Benzoylamino-8-hydroxynaphthalin-4,6-disulfonsäure in 500 ml Wasser. Der pH-Wert wird durch Eintropfen von Sodalösung auf 6–7 gehalten. Der Farbstoff der Formel

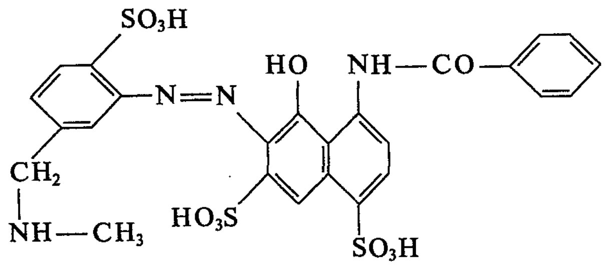

wird ausgesalzen, abgesaugt und sofort in 800 ml Wasser gelöst. In diese Lösung gibt man tropfenweise 31 g 3-Chlor-3-phenylsulfonylpropionylchlorid in 90 ml Aceton und hält den pH-Wert mit Sodalösung bei 6–7. Es wird 2 Stunden gerührt, ausgesalzen, isoliert und getrocknet. Man erhält einen Farbstoff, der Wolle und Baumwolle in brillanten Rottönen färbt.

Verwendet man anstelle von 3-Amino-N-methylbenzylamino-4-sulfonsäure 5-Amino-2-methoxybenzylamino-4-sulfonsäure als Diazokomponente und acyliert nach der angegebenen Vorschrift, so erhält man einen Farbstoff, der Wolle und Baumwolle in brillanten blaustichigen Rottönen färbt.

Das Gleiche gilt für den Farbstoff, den man aus 1-Benzoylamino-8-hydroxynaphthalin-4,6-disulfonsäure und 2-Amino-5-aminomethylennaphthalin-1-sulfonsäure aufbaut und nach obiger Vorschrift acyliert.

Nach dem gleichen Verfahren liefern auch die in Spalte 1 der folgenden Tabelle aufgeführten Kupplungskomponenten und die in Zeile 1 aufgeführten Diazokomponente Farbstoffe, die nach der ebenfalls oben beschriebenen Acylierung, Wolle und Baumwolle in guten Naßechtheiten färben.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

| Kupplungskomponente | Farbton | | |
|---|---|---|---|
| | Diazokomponente | | |
| | 3-Amino-N-methylbenzylamin-4-sulfonsäure | 5-Amino-2-methoxy-benzylamin-4-sulfonsäure | 2-Amino-5-aminomethylennaphthalin-1-sulfonsäure |
| 1-Acetylamino-8-hydroxynaphthalin-3,6-disulfonsäure | rot | blaust. rot | rot |
| 1-Acetylamino-8-hydroxynaphthalin-4,6-disulfonsäure | rot | blaust. rot | rot |
| 1-Propionylamino-8-hydroxynaphthalin-4,6-disulfonsäure | rot | blaust. rot | rot |
| 1-n-Butyrylamino-8-hydroxynaphthalin-4,6-disulfonsäure | rot | blaust. rot | rot |
| 1-Benzoylamino-8-hydroxynaphthalin-3,6-disulfonsäure | rot | blaust. rot | rot |
| 1-Acetylamino-8-hydroxynaphthalin-3,6-disulfonsäure | rot | blaust. rot | rot |
| 1-Acrylamino-8-hydroxynaphthalin-4,6-disulfonsäure | rot | blaust. rot | rot |

Fortsetzung

| Kupplungskomponente | Farbton<br>Diazokomponente<br>3-Amino-N-methylbenzyl-amin-4-sulfon-säure | <br><br>5-Amino-2-methoxy-benzyl-amin-4-sulfon-säure | <br><br>2-Amino-5-aminomethylen-naphthalin-1-sulfonsäure |
|---|---|---|---|
| 1-Acrylamino-8-hydroxynaphthalin-3,6-disulfonsäure | rot | blaust. rot | rot |
| 1-(α,β-Dibrompropionylamino)-8-hydroxynaphthalin-3,6-disulfonsäure | rot | blaust. rot | rot |
| 1-(α,β-Dibrompropionylamino)-8-hydroxynaphthalin-4,6-disulfonsäure | rot | blaust. rot | rot |
| 1-[4′-(α,β-Dibrompropionylamino)-benzoylamino]-8-hydroxynaphthalin-3,6-disulfonsäure | rot | blaust. rot | rot |
| 1-[4′-(α,β-Dibrompropionylamino)-benzoylamino]-8-hydroxynaphthalin-4,6-disulfonsäure | rot | blaust. rot | rot |
| 1-[3′-(α,β-Dibrompropionylamino)-benzoylamino]-8-hydroxynaphthalin-3,6-disulfonsäure | rot | blaust. rot | blaust. rot |
| 1-[3′-(α,β-Dibrompropionylamino)-benzoylamino]-8-hydroxynaphthalin-4,6-disulfonsäure | rot | blaust. rot | rot |
| 1-[2′-(2″-sulfophenylamino)-4′-fluor-triazin-1′,3′,5′-yl-6′)-8-hydroxy-naphthalin-3,6-disulfonsäure | rot | blaust. rot | rot |
| 1-(2′,3′-Dichlorchinoxalin-6′-carbo-nylamino)-8-hydroxynaphthalin-4,6-disulfonsäure | rot | blaust. rot | rot |
| 1-Amino-8-hydroxynaphthalin-2,4-disulfonsäure | blaust. rot | rotst. violett | blaust. rot |
| 1-Hydroxy-naphthalin-4-sulfonsäure | rot | rot | rot |
| 1-Hydroxy-naphthalin-5-sulfonsäure | rot | rot | rot |
| 1-Hydroxy-naphthalin-4,6-disulfonsäure | scharlach | rot | rot |
| 1-Hydroxy-naphthalin-4,7-disulfonsäure | rot | rot | rot |
| 1-Hydroxy-naphthalin-3,7-disulfonsäure | rot | rot | rot |
| 2-Acetylamino-5-hydroxynaphthalin-1,7-disulfonsäure | orange | scharlach | orange |
| 2-(2′,3′-dibrompropionylamino)-5-hydroxynaphthalin-1,7-disulfonsäure | orange | scharlach | orange |
| 2-Acetylamino-8-hydroxynaphthalin-6-sulfonsäure | scharlach | rot | scharlach |

Fortsetzung

| Kupplungskomponente | Farbton<br>Diazokomponente<br>3-Amino-N-methylbenzyl-amin-4-sulfonsäure | <br><br>5-Amino-2-methoxy-benzyl-amin-4-sulfonsäure | <br><br>2-Amino-5-aminomethylen-naphthalin-1-sulfonsäure |
|---|---|---|---|
| 2-Acetylamino-8-hydroxynaphthalin-3,6-disulfonsäure | scharlach | rot | scharlach |
| 2-Acetylamino-5-hydroxynaphthalin-7-sulfonsäure | orange | scharlach | orange |
| 1-Acetylamino-5-hydroxynaphthalin-7-sulfonsäure | scharlach | rot | scharlach |
| 2-(2′,3′-Dibrompropionylamino)-8-hydroxynaphthalin-6-sulfonsäure | scharlach | rot | scharlach |
| 2-(2′,3′-Dibrompropionyl-N-methyl-amino)-8-hydroxynaphthalin-6-sulfonsäure | scharlach | rot | scharlach |
| 2-(2′,3′-Dibrompropionylamino)-5-hydroxynaphthalin-7-sulfonsäure | orange | scharlach | orange |
| 2-(2′,3′-Dibrompropional-N-methyl amino)-5-hydroxynaphthalin-7-sulfonsäure | orange | scharlach | orange |
| 1-[2′-(2″-sulfophenylamino)-4′-fluortriazin-1′,3′,5′-yl-6′]-8-hydroxy-naphthalin-6-sulfonsäure | scharlach | rot | scharlach |
| 1-(2′,3′-Dichlorchinoxalin-6′-carbonylamino)-8-hydroxynaphthalin-6-sulfonsäure | scharlach | rot | scharlach |
| 1-(5′-Chlor-2′,6′-difluordiazin-1′,3′-yl-4′-amino)8-hydroxynaphthalin-6-sulfonsäure | scharlach | rot | scharlach |
| 2-[2′-(2″-sulfophenylamino)-4′-fluortriazin-1′,3′,5′-yl-6′)-5-hydroxy-naphthalin-7-sulfonsäure | orange | scharlach | orange |
| 2-(2′,3′-Dichlorchinoxalin-6′-carbonylamino)-5-hydroxynaphthalin-7-sulfonsäure | orange | scharlach | orange |
| 2-(5′-Chlor-2′,6′-difluordiazin-1′,3′-yl-4′-amino)-5-hydroxynaphthalin-7-sulfonsäure | orange | scharlach | orange |
| 6-Acetylamino-2-hydroxynaphthalin-4-sulfonsäure | orange | orange | orange |
| 2-Hydroxynaphthalin-5-sulfonsäure | orange | orange | orange |
| 2-Hydroxynaphthalin-6 sulfonsäure | orange | orange | orange |
| 2-Hydroxynaphthalin-7-sulfonsäure | orange | orange | orange |

Fortsetzung

| Kupplungskomponente | Farbton Diazokomponente 3-Amino-N-methylbenzylamin-4-sulfonsäure | 5-Amino-2-methoxy-benzylamin-4-sulfonsäure | 2-Amino-5-aminomethylennaphthalin-1-sulfonsäure |
|---|---|---|---|
| 2-Hydroxynaphthalin-6,8-disulfonsäure | orange | orange | orange |
| 2-Hydroxynaphthalin-5,7-disulfonsäure | orange | orange | orange |
| 2-Hydroxynaphthalin-3,7-disulfonsäure | orange | orange | orange |
| 2-Hydroxynaphthalin-3,6-disulfonsäure | orange | orange | orange |

Beispiel 16

Wie in Beispiel 15 beschrieben, werden 0,1 Mol 3-Amino-N-methylbenzylamino-4-sulfonsäure diazotiert und mit 0,1 Mol 1-(4'-Aminobenzoylamino)-8-hydroxynaphthalin-3,6-disulfonsäure zum Farbstoff der Formel

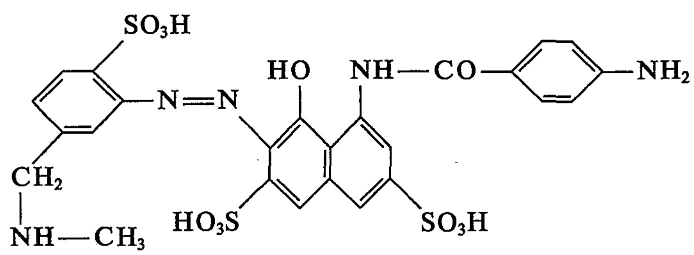

gekuppelt. Der ausgesalzene isolierte Farbstoff wird in 1000 ml Wasser gelöst und tropfenweise mit einer Lösung vn 61 g 3-Chlor-3-phenylsulfonylpropionylchlorid in 180 ml Aceton und hält den pH-Wert mit Sodalösung bei 6–7. Es wird 2 Stunden nachgerührt, ausgesalzen, isoliert und getrocknet. Man erhält einen Farbstoff, der Wolle und Baumwolle in brillanten roten Tönen färbt.

Verwendet man anstelle von 3-Amino-N-methylbenzylamin-4-sulfonsäure, 5-Amino-2-methoxybenzylamin-4-sulfonsäure als Diazokomponente und acyliert nach der angegebenen Vorschrift, so erhält man einen Farbstoff, der Wolle und Baumwolle in brillanten blaustichigen Rottönen färbt.

Das gleiche gilt für den Farbstoff, den man aus 1-Benzoylamino-8-hydroxynaphthalin-4,6-disulfonsäure und 2-Amino-5-aminomethylennaphthalin-1-sulfonsäure aufbaut und nach obiger Vorschrift acyliert.

Nach dem gleichen Verfahren liefern auch die in Spalte 1 der folgenden Tabelle aufgeführten Kupplungskomponenten und die in Zeile 1 aufgeführten Diazokomponenten Farbstoffe, die nach der ebenfalls oben beschriebenen Acylierung Wolle und Baumwolle in guten Naßechtheiten färben.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

| Kupplungskomponente | Farbton | | |
|---|---|---|---|
| | Diazokomponente | | |
| | 3-Amino-N-methylbenzyl-amin-4-sulfon-säure | 5-Amino-2-methoxy-benzyl-amin-4-sulfon-säure | 2-Amino-5-aminomethylen-naphthalin-1-sulfonsäure |
| 1-[3'-(2"-chlor-3"-phenylsulfonyl-propionylamino)-benzoylamino]-8-hydroxynaphthalin-3,6-disulfonsäure | rot | blaust. rot | blaust. rot |
| 1-[4'-(2"-chlor-3"-phenylsulfonyl-propionylamino)-benzoylamino]-8-hydroxynaphthalin-4,6-disulfonsäure | rot | blaust. rot | rot |
| 1-[3'-(2"-chlor-3"-phenylsulfonyl-propionylamino)-benzoylamino]-8-hydroxynaphthalin-4,6-disulfonsäure | rot | blaust. rot | rot |

Beispiel 17

In eine Suspension von 0,1 Mol des Diazoniumsalzes von 1-Amino-5-(2'-chlor-3'-phenylsulfonylpropionylamin)-benzol-2-sulfonsäure (hergestellt nach Beispiel 1) wird eine mit Natriumacetat gepufferte Lösung von 24 g 2-Amino-8-hydroxy-naphthalin-6-sulfonsäure in 80 ml Wasser bei pH 2–3 gegeben. Es erfolgt Kupplung zu dem Farbstoff der Formel

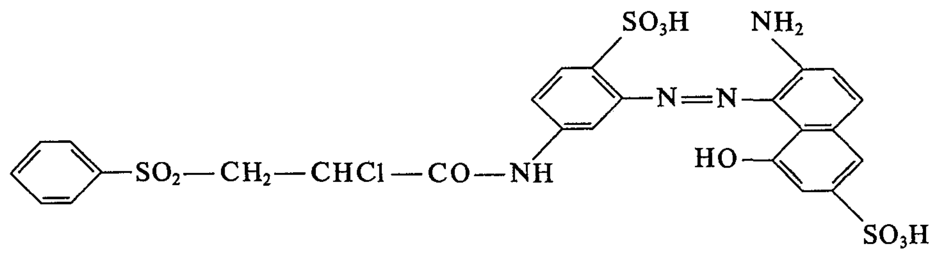

Nach beendeter Kupplung wird der Farbstoff ausgesalzen, isoliert und bei 30–40°C im Vakuum getrocknet. Er löst sich in Wasser und liefert auf Wolle rote Färbungen mit guten Naß- und Lichtechtheiten.

Verwendet man anstelle von 1-Amino-5-(2'-chlor-3'-phenylsulfonylpropionylamino)-benzol-2-sulfonsäure 1-Amino-4-(2'-chlor-3'-phenylsulfonylpropionylamino)-benzol-2-sulfonsäure, so erhält man einen Farbstoff, der Wolle in echten blaustichig roten Tönen färbt. Nach dem gleichen Verfahren liefern auch die in Spalte 1 der folgenden Tabelle aufgeführten Kupplungskomponenten und die in Zeile 1 aufgeführten Diazokomponenten Farbstoffe, die Wolle in guten Naß- und Lichtechtheiten färben.

Statt der 2-Chlor-3-phenylsulfonylpropionylderivaten können auch entsprechend 1-Amino-5(3'-chlor-3'-phenylsulfonylpropionylamino)-, 1-Amino-5(3'-brom-3'-phenylsulfonylpropionylamino)-, 1-Amino-5(2'-brom-3'-phenylsulfonylpropionylamino)-, 1-Amino-4(3'-chlor-3'-phenylsulfonylpropionylamino)-, 1-Amino-4(3'-brom-3'-phenylsulfonylpropionylamino)-, bzw. 1-Amino-4(2'-brom-3'-phenylsulfonylpropionylamino)-benzol-2-sulfonsäure eingesetzt werden. Sie liefern Färbungen mit guten Naß- und Lichtechtheiten.

| Kupplungskomponente | Farbton Diazokomponente 1-Amino-4-(2'-chlor-3'-phenylsulfonylpropionylamino)-benzol-2-sulfonsäure | 1-Amino-5-(2'-chlor-3'-phenylsulfonylpropionylamino)-benzol-2-sulfonsäure |
|---|---|---|
| 2-N-Methylamino-8-hydroxynaphthalin-6-sulfonsäure | blaust. rot | blaust. rot |
| 2-Amino-8-hydroxynaphthalin-5-sulfonsäure | rot | rot |
| 2-Amino-8-hydroxynaphthalin-3,6-sulfonsäure | blaust. rot | blaust. rot |
| 2-Aminonaphthalin-5-sulfonsäure | orange | orange |
| 2-Aminonaphthalin-6-sulfonsäure | orange | orange |
| 2-Aminonaphthalin-7-sulfonsäure | orange | orange |
| 7-Aminonaphthalin-1-sulfonsäure | orange | orange |
| 2-Aminonaphthalin-3,6-disulfonsäure | orange | orange |
| 2-Aminonaphthalin-3,7-disulfonsäure | orange | orange |
| 6-Aminonaphthalin-1,3-disulfonsäure | orange | orange |
| 7-Aminonaphthalin-1,3-disulfonsäure | orange | orange |
| 2-N-Methylaminonaphthalin-7-sulfonsäure | orange | orange |
| 2-Amino-8-hydroxynaphthalin-5,7-disulfonsäure | rot | rot |

Beispiel 18

Man löst 0,1 Mol des Farbstoffs der Formel

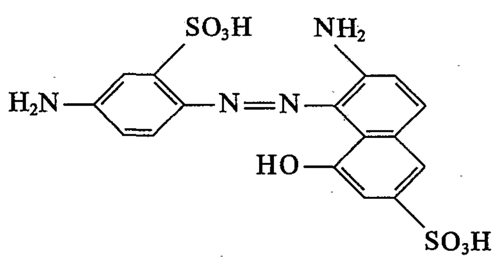

der durch Kuppeln des Diazoniumsalzes der 1-Amino-4-nitro-benzol-2-sulfonsäure auf 2-Amino-8-hydroxy-naphthalin-6-sulfonsäure und anschließender Reduktion der Nitrogruppe mit Natriumsulfid hergestellt wurde, in 750 Teilen Wasser und läßt innerhalb einer Stunde bei 0–5°C 29,4 g 3-Chlor-3-phenylsulfonylpropionylchlorid gelöst in 80 ml Aceton eintropfen, wobei die freiwerdende Salzsäure mit 10%iger Sodalösung ständig auf pH 5–6 abgestumpft wird. Dann läßt man 30 Minuten nachrühren. Der Farbstoff wird ausgesalzen, isoliert und bei 30–40°C im Vakuum getrocknet.

Der Farbstoff ist identisch mit dem in Beispiel 17 beschriebenen.

Acyliert man den Farbstoff der Formel

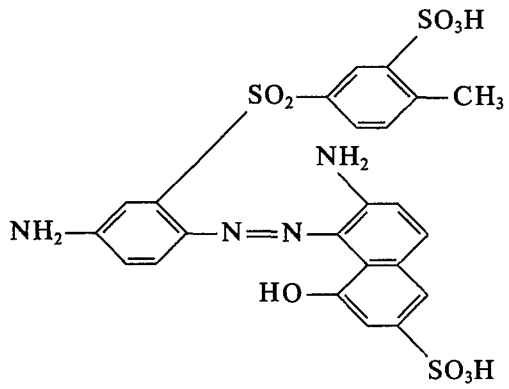

nach dem oben beschriebenen Verfahren mit 3-Chlor-3-phenylsulfonylpropionylchlorid, so erhält man einen Farbstoff, der Wolle naß- und lichtecht in blaustichig roten Tönen färbt.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Setzt man die in der Tabelle in Spalte 1 aufgeführten Kupplungskomponente und den in Zeile 1 aufgeführten diazotierten Diazokomponente um, verseift die Acetylaminogruppe bzw. reduziert die Nitrogruppe und Acyliert die entstandenen Farbstoffe nach dem oben angegebenen Verfahren mit den oben angegebenen Säurechloriden, so erhält man Farbstoffe in orange bis blaustichig roten Tönen, die Wolle in guten Naßechtheiten färben.

| Kupplungskomponente | Farbton | |
|---|---|---|
| | Diazokomponente | |
| | 1-Amino-4-nitro-benzol-2-sulfon-säure | 5-Acetamino-2-amino-4'-methyl-3'-sulfo-1,1'-diphenylsulfon |
| 2-N-Methylamino-8-hydroxynaphthalin-6-sulfonsäure | blaust. rot | blaust. rot |
| 2-Amino-8-hydroxynaphthalin-5-sulfonsäure | blaust. rot | blaust. rot |
| 2-Amino-8-hydroxynaphthalin-3,6-disulfonsäure | blaust. rot | blaust. rot |
| 2-Aminonaphthalin-5-sulfonsäure | gelbst. rot | gelbst. rot |
| 2-Aminonaphthalin-6-sulfonsäure | gelbst. rot | gelbst. rot |
| 2-Aminonaphthalin-7-sulfonsäure | gelbst. rot | gelbst. rot |
| 7-Aminonaphthalin-1-sulfonsäure | gelbst. rot | gelbst. rot |
| 2-Aminonaphthalin-3,6-disulfonsäure | gelbst. rot | gelbst. rot |
| 2-Aminonaphthalin-3,7-disulfonsäure | gelbst. rot | gelbst. rot |
| 6-Aminonaphthalin-1,3-disulfonsäure | gelbst. rot | gelbst. rot |
| 7-Aminonaphthalin-1,3-disulfonsäure | gelbst. rot | gelbst. rot |
| 2-N-Methylaminonaphthalin-7-sulfonsäure | rot | rot |
| 2-Amino-8-hydroxynaphthalin-5,7-disulfonsäure | blaust. rot | blaust. rot |
| 2(2'-Aminoäthylamino)-8-hydroxynaphthalin-6-sulfonsäure*) | blaust. rot | blaust. rot |

*) Diese Farbstoffe wurden mit den doppelten molaren Mengen der Säurechloride acyliert.

Beispiel 19

Man löst 0,1 Mol des Azofarbstoffs der Formel

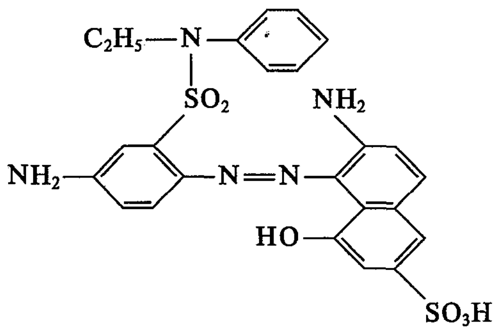

neutral in 1200 ml Wasser und läßt innerhalb von 1 Stunde bei 0–5°C 29,4 g 3-Chlor-3-phenylsulfonylpropionylchlorid gelöst in 80 ml Aceton eintropfen, wobei die freiwerdende Salzsäure mit 10%iger Sodalösung ständig auf 6–7 abgestumpft wird. Man rührt bis zur vollständigen Umsetzung nach, salzt den Farbstoff mit Kaliumchlorid aus, isoliert und trocknet bei 30–40° im Vakuum. Der Farbstoff liefert auf Wolle blaustichig rote Färbungen von guten Naß- und Lichtechtheiten.

Man erhält Farbstoffe mit ähnlichen Eigenschaften, wenn man zur Acylierung 3-Brom-3-phenylsulfonylpropionylchlorid, 2-Chlor- und 2-Brom-3-phenylsulfonylpropionylchlorid verwendet.

Acyliert man Farbstoffe des oben beschriebenen Typs nach dem oben beschriebenen Verfahren mit den oben genannten Säurechloriden, die anstelle der 2-Amino-8-hydroxynaphthalin-6-sulfonsäure die in der folgenden Tabelle genannte Kupplungskomponente enthalten, so gelangt man zu Farbstoffen, die Wolle mit guten Naßechtheiten in gelbstichig roten bis blaustichig roten Tönen färben.

| Kupplungskomponente | Farbton |
|---|---|
| 2-N-Methylamino-8-hydroxynaphthalin-6-sulfonsäure | blaust. rot |
| 2-Amino-8-hydroxynaphthalin-5-sulfonsäure | blaust. rot |
| 2-Aminonaphthalin-5-sulfonsäure | gelbst. rot |
| 2-Aminonaphthalin-6-sulfonsäure | gelbst. rot |
| 2-Aminonaphthalin-7-sulfonsäure | gelbst. rot |
| 7-Aminonaphthalin-1-sulfonsäure | gelbst. rot |
| 2-N-Methylaminonaphthalin-7-sulfonsäure | rot |
| 2-Amino-8-hydroxynaphthalin-5,7-disulfonsäure | blaust. rot |

Beispiel 20

Wie in Beispiel 15 beschrieben werden 0,1 Mol 3-Amino-N-methylbenzylamin-4-sulfonsäure diazotiert und mit 0,1 Mol 2-Amino-8-hydroxynaphthalin-6-sulfonsäure wie in Beispiel 17 gekuppelt. Der Farbstoff der Formel

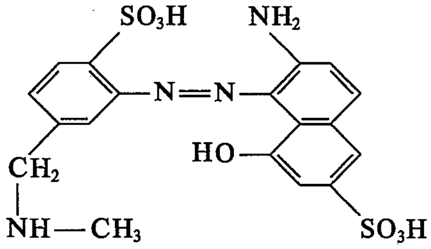

wird ausgesalzen und isoliert. Die feuchte Paste wird in 1000 ml Wasser gelöst und tropfenweise mit

31 g 3-Chlor-3-phenylsulfonylpropionylchlorid in 90 ml Aceton versetzt. Der pH-Wert wird mit Sodalösung bei 6–7 gehalten. Nach Isolierung und Trocknung ehält man einen wasserlöslichen Farbstoff, der Wolle mit guten Licht- und Naßechtheiten in roten Tönen färbt.

Verwendet man 5-Amino-2-methoxy-benzylamin-4-sulfonsäure als Diazokomponente und verfährt sonst nach der angegebenen Vorschrift, so erhält man einen Farbstoff, der Wolle in blaustichigen Rottönen färbt.

Nach dem gleichen Verfahren liefern auch die in Spalte 1 der folgenden Tabelle aufgeführten Kupplungskomponenten und die in Zeile 1 aufgeführten Diazokomponenten Farbstoffe, die nach der ebenfalls oben beschriebenen Acylierung Wolle und Baumwolle in guten Naßechtheiten färben.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

| Kupplungskomponente | Farbton<br>Diazokomponente<br>3-Amino-N-methylbenzyl-amin-4-sulfon-säure | <br><br>5-Amino-2-meth-oxybenzyl-amin-4-sulfon-säure |
|---|---|---|
| 2-N-Methylamino-8-hydroxynaphthalin-6-sulfonsäure | blaust. rot | violett |
| 2-Amino-8-hydroxynaphthalin-5-sulfonsäure | rot | rotst. violett |
| 2-Amino-8-hydroxynaphthalin-3,6-disulfonsäure | blaust. rot | rotst. violett |
| 2-Aminonaphthalin-5-sulfonsäure | orange | rotst. orange |
| 2-Aminonaphthalin-6-sulfonsäure | orange | rotst. orange |
| 2-Aminonaphthalin-7-sulfonsäure | orange | rotst. orange |
| 7-Aminonaphthalin-1-sulfonsäure | orange | rotst. orange |
| 2-Aminonaphthalin-3,6-disulfonsäure | orange | gelbst. rot |
| 2-Aminonaphthalin-3,7-disulfonsäure | orange | gelbst. rot |
| 6-Aminonaphthalin-1,3-disulfonsäure | orange | gelbst. rot |
| 7-Aminonaphthalin-1,3-disulfonsäure | orange | gelbst. rot |
| 2-N-Methylaminonaphthalin-7-sulfonsäure | rotst. orange | scharlach |
| 2-Amino-8-hydroxynaphthalin-5,7-disulfonsäure | blaust. rot | rotst. violett |

Beispiel 21

0,1 Mol des durch Kuppeln von diazotierter 2-Amino-naphthalin-6,8-disulfonsäure auf Anilin-N-methansulfonsäure und anschließender Hydrolyse des Methansulfonsäurerestes erhaltenen Monoazofarbstoffs werden in 900 Teilen Wasser gelöst. Bei einer Temperatur von 0–5°C werden 29,4 g 2-Chlor-3-phenylsulfonylpropionylchlorid in 50 ml Methylenchlorid zugetropft und dabei ein pH von 5–6 mit 10%iger Sodalösung eingehalten.

Nach beendeter Reaktion wird der entstandene Farbstoff der Formel

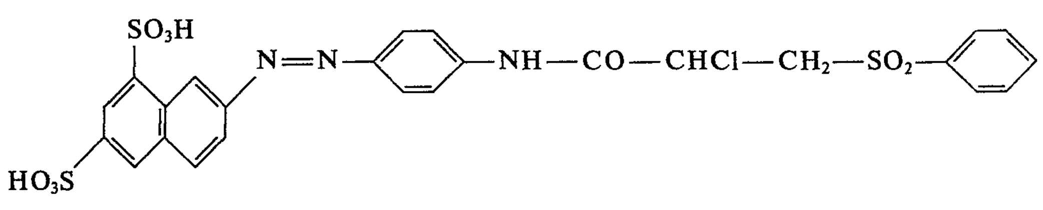

mit Kaliumchlorid ausgesalzen, abgesaugt und im Vakuum bei 30–40°C getrocknet.

Der Farbstoff liefert gelbe Färbungen auf Wolle und Baumwolle, die sich durch gute Naßechtheiten auszeichnen.

Farbstoffe mit ähnlichen Eigenschaften erhält man, wenn zur Acylierung anstelle von 2-Chlor-3-phenylsulfonylpropionylchlorid 2-Brom-3-phenylsulfonylpropionylchlorid, 3-Chlor-3-phenylsulfonylpropionylchlorid und 3-Brom-3-phenylsulfonylpropionylchlorid eingesetzt wird.

Beispiel 22

0,1 Mol des durch Kuppeln von diazotierter 2-Aminonaphthalin-6,8-disulfonsäure auf 3-Aminophenylharnstoff erhaltenen Monoazofarbstoffs der Formel

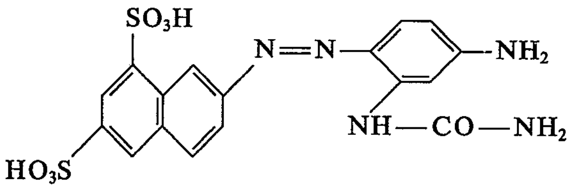

werden in 900 Teilen Wasser gelöst. Bei einer Temperatur von 0 bis 5° werden 29,4 g 3-Chlor-3-phenylsulfonylpropionylchlorid in 80 ml Aceton zugetropft mit Sodalösung ein pH-Wert von 5–6 gehalten. Nach beendeter Reaktion wird der entstandene Farbstoff mit Kaliumchlorid ausgesalzen, abgesaugt und im Vakuum getrocknet. Der Farbstoff liefert gelbe Färbungen auf Wolle und Baumwolle, die sich durch gute Naß- und Lichtechtheiten auszeichnen.

Nach dem gleichen Verfahren liefern auch die in der folgenden Tabelle aus den angeführten Diazo- und Kupplungskomponenten aufgebauten Farbstoffe naß- und lichtechte Färbungen in gelben bis orangenen Tönen.

Anstelle des oben angeführten 3-Chlor-3-phenylsulfonylpropionylchlorid kann auch 3-Brom-3-phenylsulfonylpropionylchlorid, 2-Chlor-3-phenylsulfonylpropionylchlorid und 2-Brom-3-phenylsulfonylpropionylchlorid zur Acylierung eingesetzt werden. Die daraus erhaltenen Reaktivfarbstoffe liefern Färbungen mit guten Naßechtheiten.

| Diazokomponente | Kupplungskomponente | Farbton |
|---|---|---|
| 2-Amino-naphthalin-4,8-disulfonsäure | 3-Aminotoluol | gelb |
| 2-Amino-naphthalin-4,8-disulfonsäure | 1-Amino-2-methoxy-5-methylbenzol | gelb |
| 1-Amino-naphthalin-3,6-disulfonsäure | 1-Amino-3-methylbenzol | gelb |
| 2-Amino-naphthalin-5,7-disulfonsäure | desgl. | gelb |
| 2-Amino-naphthalin-6,8-disulfonsäure | desgl. | gelb |
| 2-(3'-Sulfo-4'-aminophenyl)-6-methyl-benzthiazol-7-sulfonsäure | desgl. | gelb |
| 4-Aminoazobenzol-3,4'-disulfonsäure | desgl. | braungelb |
| 2-Amino-naphthalin-3,6,8-trisulfonsäure | 1-Amino-3-acetylaminobenzol | gelb |
| 1-Aminobenzol-4-sulfonsäure- → 1-Amino-naphthalin-6-sulfonsäure | 1-Amino-3-methylbenzol | braungelb |
| 2-Amino-naphthalin-4,8-disulfonsäure | 1-Methylamino-3-methoxybenzol | gelb |
| desgl. | 1-Amino-3-acetylaminobenzol | gelb |
| desgl. | Anilin | gelb |
| 2-Amino-naphthalin-1,5-disulfonsäure | 1-Amino-3-methyl-6-methoxybenzol | stark rotst. gelb |

Fortsetzung

| Diazokomponente | Kupplungskomponente | Farbton |
|---|---|---|
| 2-Amino-naphthalin-1,5-disulfonsäure | 1-Amino-3-methylbenzol | gelb |
| desgl. | 1-Amino-naphthalin-6-sulfonsäure | rotst. gelb |
| desgl. | 1-Amino-3-acetylaminobenzol | rotst. gelb |
| desgl. | 3-Aminophenylharnstoff | rotst. gelb |
| desgl. | 1-Amino-3-hydroxyacetyl-aminobenzol | rotst. gelb |
| 2-Amino-naphthalin-5,7-disulfonsäure | 1-Amino-3-methyl-6-methoxybenzol | stark rotst. gelb |
| desgl. | 1-Amino-naphthalin-7-sulfonsäure | rotst. gelb |
| desgl. | 1-Amino-3-acetylaminobenzol | rotst. gelb |
| desgl. | 3-Aminophenylharnstoff | rotst. gelb |
| desgl. | 1-Amino-3-hydroxy-acetylaminobenzol | rotst. gelb |
| 1-Amino-naphthalin-3,7-disulfonsäure | 1-Amino-3-methyl-6-methoxybenzol | stark rotst. gelb |
| desgl. | 1-Amino-3-methylbenzol | rotst. gelb |
| desgl. | 1-Amino-naphthalin-6-sulfonsäure | rotst. gelb |
| 2-Amino-naphthalin-3,6-disulfonsäure | 1-Amino-3-methylbenzol | rotst. gelb |
| desgl. | 1-Amino-3-methyl-6-methoxybenzol | stark rotst. gelb |
| desgl. | 1-Amino-3-acetylaminobenzol | rotst. gelb |
| desgl. | 3-Aminophenylharnstoff | rotst. gelb |
| desgl. | 1-Amino-3-hydroxyacetyl-aminobenzol | rotst. gelb |
| desgl. | 1-Amino-naphthalin-6-sulfonsäure | rotst. gelb |
| 2-Amino-naphthalin-6,8-disulfonsäure | 1-Amino-3-acetyl-aminobenzol | rotst. gelb |
| desgl. | 1-Amino-2-methoxy-naphthalin-6-sulfonsäure | stark rotst. gelb |
| desgl. | 1-Amino-naphthalin-6-sulfonsäure | rotst. gelb |
| 2-Amino-naphthalin-4,8-disulfonsäure | 1-Amino-naphthalin-6-sulfonsäure | gelb |
| desgl. | 1-Amino-naphthalin-7-sulfonsäure | gelb |
| desgl. | 1-Amino-2-methoxy-naphthalin-6-sulfonsäure | stark rotst. gelb |
| desgl. | 1-Methylamino-3-methylbenzol | gelb |
| desgl. | 1-Äthylamino-3-methylbenzol | gelb |
| desgl. | N-Methylanilin | gelb |

Fortsetzung

| Diazokomponente | Kupplungskomponente | Farbton |
|---|---|---|
| 2-Amino-naphthalin-4,8-disulfonsäure | N-Äthylanilin | gelb |
| desgl. | N-Butylanilin | gelb |
| 2-Amino-naphthalin-3,6,8-trisulfonsäure | Anilin | rotst. gelb |
| desgl. | 3-Aminophenylharnstoff | rotst. gelb |
| desgl. | 1-Amino-3-hydroxy-acetyl-aminobenzol | rotst. gelb |
| desgl. | 1-Amino-3-acetylamino-6-methoxybenzol | gelbst. orange |
| desgl. | 1-Amino-3-acetyl-amino-6-methylbenzol | rotst. gelb |
| desgl. | 1-Amino-3-methan-sulfonyl-aminobenzol | rotst. gelb |
| desgl. | 2,5-Dimethoxyanilin | gelbst. orange |
| desgl. | 3-Methyl-6-methoxyanilin | gelbst. orange |
| desgl. | N-Methylanilin | rotst. gelb |
| desgl. | N-Äthylanilin | rotst. gelb |
| desgl. | 1-Amino-3-methylbenzol | rotst. gelb |
| desgl. | N-Butylanilin | rotst. gelb |
| desgl. | 3-(N-Äthylamino)-toluol | rotst. gelb |
| desgl. | 2-Aminotoluol | rotst. gelb |
| desgl. | 1-Amino-2,5-dimethylbenzol | stark rotst. gelb |
| desgl. | 1-Amino-2-methoxybenzol | stark rotst. gelb |
| desgl. | 1-Amino-3-methoxybenzol | rotst. gelb |
| desgl. | 1-Äthylamino-3-methoxybenzol | rotst. gelb |
| desgl. | 1-Amino-naphthalin-6-sulfonsäure | rotst. gelb |
| desgl. | 1-Amino-naphthalin-7-sulfonsäure | rotst. gelb |
| 2-Amino-naphthalin-4,6,8-trisulfonsäure | 1-Amino-3-methylbenzol | rotst. gelb |
| desgl. | 1-Amino-3-acetylaminobenzol | rotst. gelb |
| 1-Amino-naphthalin-2,4,7-trisulfonsäure | 1-Amino-3-methylbenzol | gelb |
| desgl. | 1-Amino-naphthalin-6-sulfonsäure | gelb |
| 4-Nitro-4'-aminostilben-2,2'-disulfonsäure | 1-Amino-3-acetylaminobenzol | rotst. gelb |
| desgl. | 3-Aminophenylharnstoff | rotst. gelb |

Fortsetzung

| Diazokomponente | Kupplungskomponente | Farbton |
|---|---|---|
| 4-Nitro-4'-aminostilben-2,2'-disulfonsäure | 1-Amino-3-hydroxy-acetyl-aminobenzol | rotst. gelb |
| desgl. | N-Methylanilin | rotst. gelb |
| desgl. | N-Äthylanilin | rotst. gelb |
| desgl. | N-Butylanilin | rotst. gelb |
| desgl. | 1-(N-Äthylamino)-3-methylbenzol | rotst. gelb |
| 4-Amino-azobenzol-3,4'-disulfonsäure | 1-Amino-3-hydroxy-acetyl-aminobenzol | gelbbraun |
| desgl. | 1-Amino-naphthalin-6-sulfonsäure | gelbbraun |
| desgl. | 1-Amino-naphthalin-7-sulfonsäure | gelbbraun |
| desgl. | 1-Amino-3-acetyl-aminobenzol | gelbbraun |
| Anilin-2,4-disulfonsäure | 1-Amino-naphthalin-6-sulfonsäure | gelbbraun |
| desgl. | 1-Amino-naphthalin-7-sulfonsäure | gelbbraun |
| desgl. | 1-Amino-3-methylbenzol | gelb |
| desgl. | 1-Amino-3-acetyl-aminobenzol | gelb |
| desgl. | 1-Amino-2-methoxy-5-methylbenzol | rotst. gelb |
| desgl. | 1-Amino-2,5-dimethoxybenzol | rotst. gelb |
| desgl. | 3-Aminophenylharnstoff | gelb |
| Anilin-2,5-disulfonsäure | 1-Amino-2-methoxy-5-methylbenzol | rotst. gelb |

Beispiel 23

Die Lösung von 0,1 Mol des Natriumsalzes der 1-Amino-benzol-4-sulfonsäure und 7 g Natriumnitrit in 200 ml Wasser wird in eine Mischung aus 100 g Eis und 28 ml konz. Salzsäure einlaufen gelassen; dann wird eine halbe Stunde bei 0–10°C geührt, und anschließend wird überschüssige salpetrige Säure entfernt. Zu der so erhaltenen Diazosuspension gibt man bei 0–10°C die abgekühlte und dadurch wieder teilweise auskristallisierte Lösung von 26,2 g des Kaliumsalzes der 1-Amino-naphthalin-8-sulfonsäure in 250 ml heißem Wasser und stumpft die stark saure Kupplungsmischung bei 10–20°C durch vorsichtige Zugabe von Natronlauge auf pH 4 ab. Die Kupplung ist rasch beendet; der gebildete Aminoazofarbstoff wird mit 100 g Kochsalz vollständig ausgesalzen, abgesaugt, gewaschen und wieder in 500 ml Wasser bei 10°C und pH 6–7 gelöst.

Die wäßrige Lösung wird tropfenweise mit 29,4 g 2-Chlor-3-phenylsulfonylpropionylchlorid in 80 ml Chlorbenzol versetzt und unter laufendem Abstumpfen der freiwerdenden Säure mit Sodalösung auf pH 6–7 bei −1°C bis +1°C gerührt. Wenn kein Aminoazofarbstoff mehr nachweisbar ist, wird der teilweise ausgefallene Reaktivfarbstoff der Formel

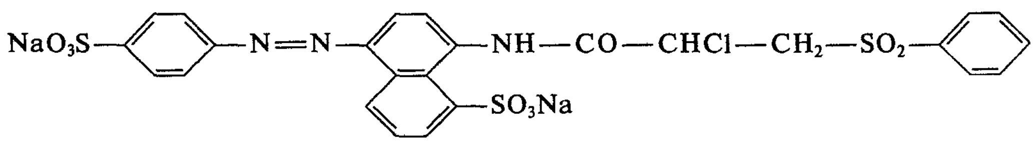

mit 40 g Kochsalz ausgesalzen, abfiltriert und zur Reinigung nochmals in 800 ml warmem Wasser gelöst. Nach Klären der Lösung wird aus dem Filtrat durch Zugabe von 80 bis 100 g Kochsalz der reine Farbstoff abgeschieden.

Nach dem Abfiltrieren, Trocknen bei 35°C und Mahlen erhält man ein gelbes Pulver, das sich in Wasser leicht mit gelber Farbe löst und das Cellulosefasern in Gegenwart säurebindender Mittel in sehr guten naß-, licht- und chlorechten Gelbtönen färbt. Auch auf Wolle und Polyamidfasern werden echte Gelbfärbungen erhalten.

Wenn man wie oben angegeben verfährt, jedoch anstelle des Natriumsalzes der 1-Amino-benzol-4-sulfonsäure äquivalente Mengen der in nachfolgender Tabelle angeführten Diazokomponenten auf die 1-Amino-naphthalin-8-sulfonsäure kuppelt, erhält man nach Acylierung ebenfalls wertvolle gelbe bis braune Reaktivfarbstoffe.

Ebenfalls wertvolle Reaktivfarbstoffe erhält man, wenn man statt 2-Chlor-3-phenylsulfonylpropionylchlorid 3-Brom-3-phenylsulfonylpropionylchlorid, 3-Chlor-3-phenylsulfonylpropionylchlorid und 2-Brom-3-phenylsulfonylpropionylchlorid verwendet.

| Diazokomponente | Farbton auf Cellulosefaser |
|---|---|
| 1-Amino-benzol-2,5-disulfonsäure | rotstichiges Gelb |
| 2-Amino-naphthalin-4,8-disulfonsäure | stark rotstichiges Gelb |
| 2-Amino-naphthalin-5,7-disulfonsäure | stark rotstichiges Gelb |
| 2-Amino-naphthalin-6,8-disulfonsäure | stark rotstichiges Gelb |
| 2-Amino-naphthalin-3,6,8-trisulfonsäure | stark rotstichiges Gelb |
| 2-Amino-naphthalin-4,6,8-trisulfonsäure | stark rotstichiges Gelb |
| 4-Amino-azobenzol-3,4'-disulfonsäure | gelbstichiges Braun |
| 4-Amino-2-acetylamino-azobenzol-2',5'-disulfonsäure | orangebraun |

Braune Farbstoffe erhält man, wenn man nach dem oben angegebenen Verfahren die in der folgenden Tabelle angegebene Farbstoffe mit den oben angeführten Säurechloriden acyliert.

| Diazokomponente | Farbton auf Cellulosefaser |
| --- | --- |
| 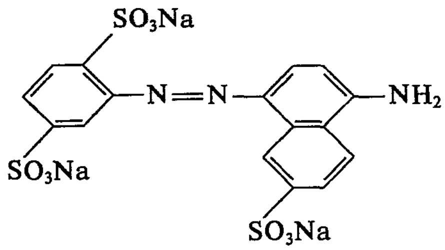 (1-Amino-benzol-2,5-disulfonsäure sauer auf 1-Amino-naphthalin-6-sulfonsäure gekuppelt) | rotstichiges Braun |
| 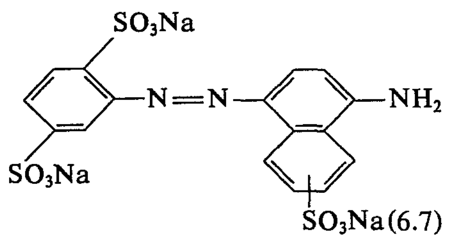 (1-Amino-benzol-2,5-disulfonsäure sauer auf die technische Mischung von 1-Aminonaphthalin-6- und -7-sulfonsäure gekuppelt) | rotstichiges Braun |
| 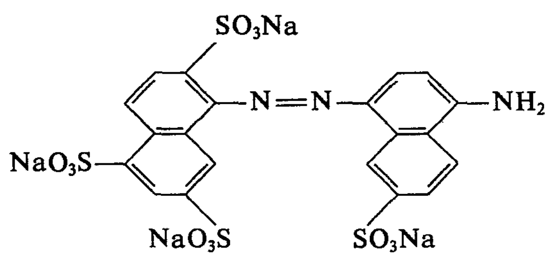 (1-Amino-naphthalin-2,5,7-trisulfonsäure sauer auf 1-Amino-naphthalin-6-sulfonsäure gekuppelt) | violettstichiges Braun |
| 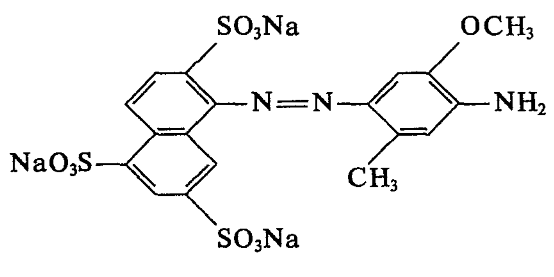 (1-Amino-naphthalin-2,5,7-trisulfonsäure sauer auf 1-Amino-2-methoxy-5-methylbenzol gekuppelt) | rotstichiges Braun |

## Beispiel 24

In eine neutrale Lösung von 0,1 Mol des nach den Angaben in Beispiel 1 hergestellten Kondensationsproduktes aus 1,3-Diamino-benzol-4-sulfonsäure und 2-Brom-3-phenylsulfonylpropionylchlorid in 500 Teilen Wasser wird bei 10–15°C in die nach üblichen Methoden zu erhaltende Lösung der Diazoniumverbindung aus 38,3 g 2-Amino-naphthalin-4,6,8-trisulfonsäure in 450 ml Wasser gegeben und das Gemisch mit 140 ml einer 20%igen Natriumacetatlösung versetzt.

Die Kupplung verläuft bei pH 4 rasch und vollständig. Nach 15 Minuten scheidet sich der Farbstoff kristallin ab. Er wird isoliert und bei 30–40°C im Vakuum getrocknet. Der erhaltene Monoazofarbstoff

entspricht der Formel

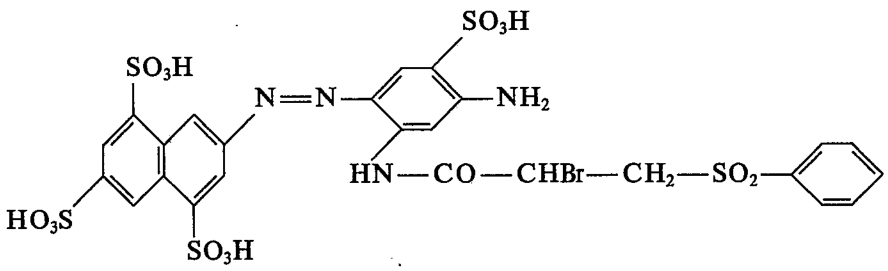

und stellt getrocknet ein orangefarbenes Pulver dar, das sich in Wasser mit gelber Farbe löst und Baumwolle nach den üblichen Techniken des Reaktivdruckes oder der Reaktivfärbung in rotstichig-gelben Tönen färbt.

Verwendet man anstelle von 2-Amino-naphthalin-4,6,8-trisulfonsäure 4-Aminoazobenzol-4'-sulfonsäure und acyliert wie oben beschrieben, so erhält man einen Farbstoff, der Wolle und Baumwolle sowie Polyamid in rotstichig-gelben Tönen von guter Naß- und Lichtechtheit färbt.

Verwendet man anstelle von 1-Amino-5-(2'-brom-3'-phenylsulfonylpropionylamino)-benzol-2-sulfonsäure die äquivalente Menge 1-Amino-5-(3'-brom-3'-phenylsulfonylpropionylamino)-benzol-2-sulfonsäure oder 1-Amino-5(3'-chlor-3'-phenylsulfonylpropionylamino)-benzol-2-sulfonsäure bzw. 1-Amino-5(2'-chlor-3'-phenylsulfonylpropionylamino)-benzol-2-sulfonsäure, so erhält man Farbstoffe mit ganz ähnlichen Eigenschaften.

Beispiel 25

0,1 Mol des Aminoazofarbstoffes der Formel

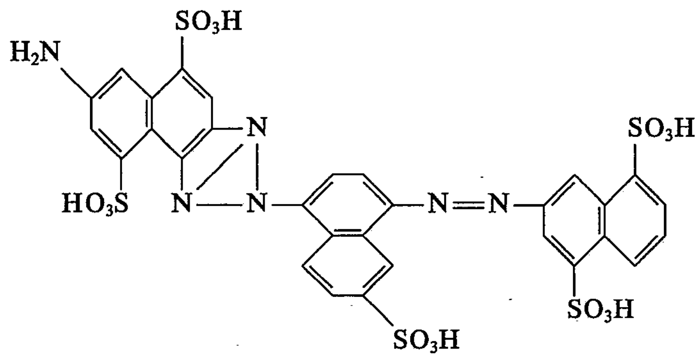

– hergestellt nach den Angaben der deutschen Patentschrift 1 115 865 durch Kuppeln der Diazoniumverbindung aus 2-Amino-naphthalin-4,8-disulfonsäure mit 1-Amino-naphthalin-6-sulfonsäure, Weiterdiazotieren des erhaltenen Aminoazofarbstoffes, Kuppeln mit der äquivalenten Menge 2,5-Diamino-naphthalin-4,8-disulfonsäure und Umwandlung in das Aminotriazol – werden in 1000 ml Wasser bei pH 6 gelöst. Bei einer Temperatur von 0–5°C werden 29,4 g 3-Chlor-3-phenylsulfonylpropionylchlorid zugetropft und gleichzeitig die freiwerdende Salzsäure mit Sodalösung abgestumpft bis die Reaktion beendet ist. Anschließend wird der Farbstoff durch Zugabe von Natriumchlorid abgeschieden, isoliert und bei 30–40°C im Vakuum getrocknet. Er stellt ein gelbes, in Wasser mit gelber Farbe lösliches Pulver dar.

Verwendet man einen Farbstoff der folgenden Formel

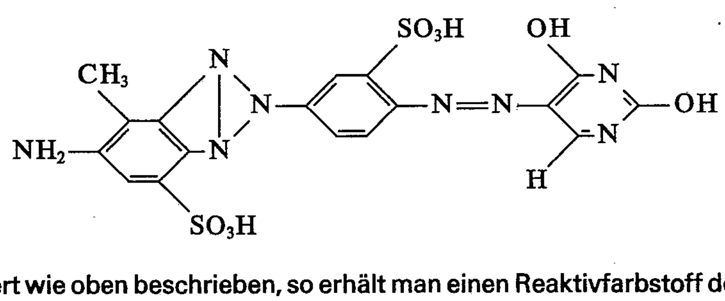

und acyliert wie oben beschrieben, so erhält man einen Reaktivfarbstoff der Wolle in grünstichig gelben Tönen von guter Naßechtheit färbt.

Man erhält Farbstoffe mit ähnlichen Eigenschaften, wenn man zur Acylierung 3-Brom-3-phenylsulfo-

nylpropionylchlorid, 2-Chlor-3-phenylsulfonylpropionylchlorid und 2-Brom-3-phenylsulfonylpropionylchlorid verwendet.

Beispiel 26

Zu einer Lösung von 15,1 g saurem Kupplungsprodukt aus 1-Amino-8-hydroxy-naphthalin-3,6-disulfonsäure und diazotierter o-Sulfanilsäure in 150 ml Wasser werden bei pH 8 und 0–5°C eine Suspension des Diazoniumsalzes aus 1-Amino-5-(2′-brom-3′-phenylsulfonylpropionylamino)-benzol-2-sulfonsäure (hergestellt aus 5,7 g 1,3-Diaminobenzol-4-sulfonsäure entsprechend Beispiel 1) zugegeben. Während der Kupplung hält man einen pH von 8 und stellt nach Beendigung der Reaktion auf pH 6.

Der Farbstoff

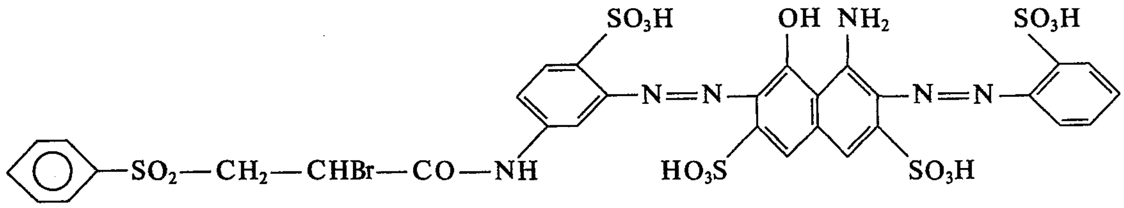

wird mit 100 Teilen Kochsalz ausgesalzen, abgesaugt und im Vakuum bei 40°C getrocknet. Auf Baumwolle erhält man bei Färben aus langer Flotte ein Schwarz. Einen ähnlichen Farbstoff erhält man, wenn man statt 1-Amino-8-hydroxynaphthalin-3,6-disulfosäure 1-Amino-8-hydroxynaphthalin-4,6-disulfosäure verwendet.

Beispiel 27

79,7 g 1-Amino-8-hydroxy-naphthalin-3,6-disulfonsäure werden in 500 ml Wasser gelöst und dazu eine Suspension des Diazoniumsalzes aus 1-Amino-5-(2′-brom-3′-phenylsulfonylpropionyl-amino)-benzol-2-sulfonsäure (aus 47 g 2,4-Diamino-benzolsulfonsäure hergestellt nach Beispiel 1) gegeben. Man stellt mit Natriumacetatlösung einen pH von 4,5 ein und saugt nach beendeter Kupplung das kristalline Reaktionsprodukt ab und wäscht mit 10%iger Natriumchloridlösung. Der Farbstoff wird bei 40°C im Vakuum getrocknet.

Einen ähnlichen Farbstoff erhält man, wenn man 1-Amino-8-hydroxynaphthalin-4,6-disulfonsäure als Kupplungskomponente verwendet.

Beispiel 28

36,6 g Monoazofarbstoff aus Beispiel 27 werden in 460 g Wasser und 6,7 g Soda gelöst und unter Einhaltung eines pH von 8–8,5 die Diazoniumlösung aus 4,7 Teilen Anilin bei 0–5°C zugegeben. Man läßt ca. 3 Stunden nachrühren, stellt mit Salzsäure einen pH von 5,5 ein, saugt ab und wäscht mit 5%iger Kochsalzlösung.

Der Farbstoff

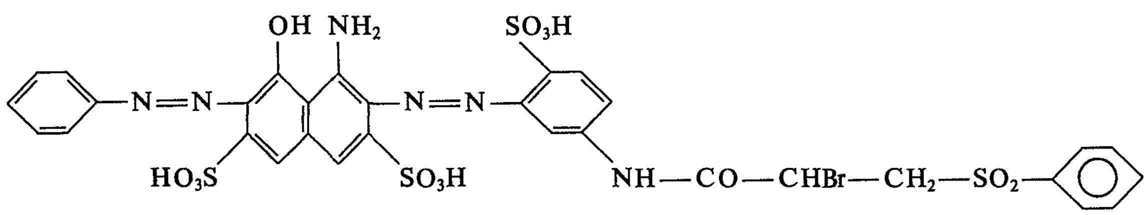

wird bei 40°C im Vakuum getrocknet und liefert bei 8–10%iger Ausfärbung ein Schwarz auf Baum- und Zellwolle.

Verwendet man in diesem Beispiel anstelle von Anilin die in der folgenden Tabelle angegebenen Diazokomponenten in äquivalenter Menge, so erhält man gleichfalls wertvolle Farbstoffe.

| Diazokomponente | Farbton |
|---|---|
| 2-Amino-benzol-1-sulfonsäure | schwarz |
| 2-Amino-5-chlor-benzol-1-sulfonsäure | schwarz |
| 2-Amino-5-methyl-benzol-1-sulfonsäure | schwarz |
| 2-Amino-5-nitro-benzol-1-sulfonsäure | schwarz |
| 2-Amino-naphthalin-1-sulfonsäure | schwarz |
| Dehydro-p-toluidindisulfonsäure | schwarz |
| 2-Amino-naphthalin-1,5-disulfonsäure | schwarz |

Statt der 2-Brom-3-phenylsulfonylpropionylderivate können auch entsprechend 1-Amino-5(3'-chlor-3'-phenylsulfonylpropionylamino)-, 1-Amino-5(3'-brom-3'-phenylsulfonylpropionylamino)-, 1-Amino-5(2'-chlor-3'-phenylsulfonylpropionylamino)-benzol-2-sulfonsäuren eingesetzt werden.

Beispiel 29

Analog dem Beispiel 28 erhält man aus 1,4-Diamino-benzol-2-sulfonsäure den Farbstoff der folgenden Formel

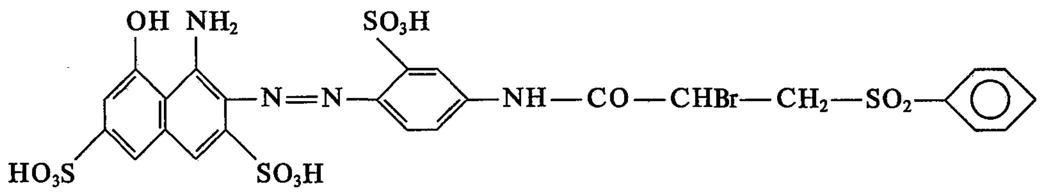

Kuppelt man diesen mit den nachfolgenden Diazokomponenten, so erhält man ebenfalls schwarze Farbstoffe.

| Diazokomponente | Farbton |
|---|---|
| 2-Amino-benzol-1-sulfonsäure | schwarz |
| 2-Amino-5-nitro-benzol-1-sulfonsäure | schwarz |
| 2-Amino-5-methyl-benzol-1-sulfonsäure | schwarz |
| 2-Amino-naphthalin-1,6-disulfonsäure | schwarz |
| 2-Amino-naphthalin-1,7-disulfonsäure | schwarz |
| p-Toluidin | schwarz |
| 4-Amino-azobenzol-3,4'-disulfonsäure | schwarz |

Statt des 2-Brom-3-phenylsulfonylpropionylderivates können auch die 1-Amino-4(3'-chlor-3'-phenylsulfonylpropionylamino)-, 1-Amino-4(3'-brom-3'-phenylsulfonylpropionylamino)-, bzw. 1-Amino-4(2'-brom-3'-phenylsulfonylpropionylamino)-benzol-2-sulfonsäure eingesetzt werden. Sie liefern Färbungen mit guten Naß- und Lichtechtheiten.

Schwarze Farbstoffe mit ähnlichen Eigenschaften erhält man, wenn man 1-Amino-8-hydroxynaphthalin-4,6-disulfonsäure als Kupplungskomponente verwendet.

Beispiel 30

0,1 Mol der Aminoazoverbindung der Formel

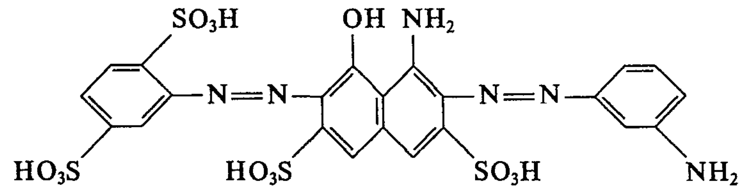

die durch Kupplung der Diazoniumverbindungen aus 3-Acetamino-anilin und Anilin-2,5-disulfonsäure mit 1-Amino-8-hydroxy-naphthalin-3,6-disulfonsäure und Verseifung der Acetylgruppe hergestellt wird, werden bei 0–5°C mit 29,4 g 3-Chlor-3-phenylsulfonylpropionylchlorid acyliert, wobei der pH-Wert unter ständigem Abstumpfen der freiwerdenden Salzsäure bei 5–6 gehalten wird.

Der Farbstoff liefert nach einem der oben beschriebenen Verfahren schwarze Färbungen und Drucke.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Auch hier erhält man schwarze Farbstoffe mit ähnlichen Eigenschaften, wenn man 1-Amino-8-hydroxynaphthalin-4,6-disulfonsäure als Kupplungskomponente verwendet.

Beispiel 31

Zu einer Lösung von 15,6 g 1-Amino-8-hydroxy-naphthalin-3,6-disulfonsäure in 100 ml 3%iger Sodalösung läßt man bei 0–5°C eine Suspension des Diazoniumsalzes aus 1-Amino-5-(2'-brom-3'-phenylsulfonylpropionylamino)-benzol-2-sulfonsäure (hergestellt aus 29 g 1,3-Diamino-benzol-4-sulfonsäure nach Beispiel 1) zulaufen und hält durch Zugabe von Na-acetat einen pH von 4–4,5. Nach beendeter Kupplung gibt man Sodalösung zu und rührt bei einem pH von 7,5–8 noch 3 Stunden nach. Der entstandene Farbstoff wird mit 100 g Kochsalz ausgesalzen, abgesaugt und mit 15%iger Kochsalzlösung gewaschen. Man trocknet bei 30–40°C im Vakuum. Auf Baumwolle ergibt der erhaltene Farbstoff eine schwarze Färbung von sehr guten Naßechtheiten.

Ähnliche Farbstoffe erhält man, wenn in diesem Beispiel folgende Diazokomponenten eingesetzt werden:

1'-Amino-5-(3'-brom-3'-phenylsulfonylpropionylamino)-benzol-2-sulfonsäure oder 1-Amino-5-(3'-chlor-3'-phenylsulfonylpropionylamino)-benzol-2-sulfonsäure, 1-Amino-5-(2'-chlor-3'-phenylsulfonylpropionylamino)-benzol-2-sulfonsäure, 1-Amino-4-(3'-chlor-3'-phenylsulfonylpropionylamino)-benzol-2-sulfonsäure, 1-Amino-4-(3'-brom-3'-phenylsulfonylpropionylamino)-benzol-2-sulfonsäure oder 1-Amino-4-(2'-chlor-3'-phenylsulfonylpropionylamino)-benzol-2-sulfonsäure und 1-Amino-4-(2'-brom-3'-phenylsulfonylpropionylamino)-benzol-2-sulfonsäure.

Ebenfalls schwarze Farbstoffe mit ähnlichen Eigenschaften erhält man mit 1-Amino-8-hydroxy-4,6-disulfonsäure als Kupplungskomponente.

Beispiel 32

0,1 Mol der Kupferkomplexverbindung der Formel

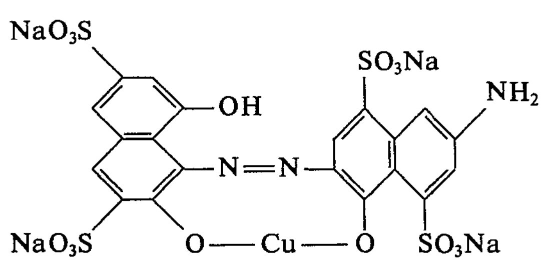

(hergestellt nach den Angaben der deutschen Patentschrift 1 117 235) durch Kuppeln von diazotierter 1-Amino-8(benzolsulfonyloxy)-naphthalin-disulfonsäure-(3,6) in sodaalkalischem Medium mit der äquivalenten Menge der 2-Acetylamino-5-hydroxy-naphthalin-disulfonsäure-(4,8), Umwandlung der Monoazoverbindung in den Kupferkomplex durch oxydative Kupferung und Hydrolyse der Acetyl- und der Benzolsulfonylgruppe werden in 2500 ml Wasser von 60–65°C bei pH 6–6,5 gelöst. Bei –1 bis 0°C werden 29,4 g 3-Chlor-3-phenylsulfonylpropionylchlorid eingetragen. Während der Acylierung wird durch Zugabe von Natriumcarbonatlösung ein pH von 6–6,5 eingehalten. Nach beendeter Reaktion wird der Farbstoff ausgesalzen und isoliert. Der Farbstoff stellt ein dunkles Pulver dar, das sich in Wasser mit blauer Farbe löst und auf Baumwolle klare blaue Färbungen liefert.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Ähnliche blaue Farbstoffe erhält man, wenn man statt des 1-Amino-8-hydroxynaphthalin-3,6-disulfonsäure-Derivates 1-Amino-8-(benzolsulfonyloxy)-naphthalin-4,6-disulfonsäure verwendet.

Beispiel 33

51,6 g des durch Diazotieren von 1-Hydroxy-2-amino-benzol-4-sulfonsäure und Kuppeln auf 2-Amino-5-hydroxy-naphthalin-7-sulfonsäure in Wasser/Pyridin in Gegenwart von Soda und nachfolgende Behandlung mit einem Kupfer-abgebenden Mittel erhaltenen Farbstoffs der Formel

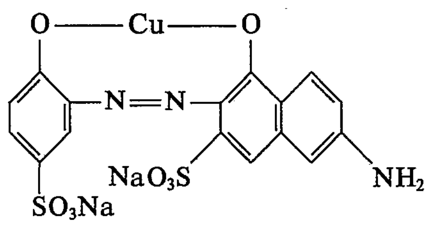

werden in 1500 ml Wasser bei pH 7 gelöst. Unter gutem Rühren trägt man bei −1 bis 0°C 29,4 g 3-Chlor-3-phenylsulfonylpropionylchlorid ein und stumpft die freiwerdende Säure mit Sodalösung laufend auf einen pH von 6−7 ab. Wenn keine freie Aminogruppe mehr nachweisbar ist, wird der gebildete Reaktivfarbstoff der Formel

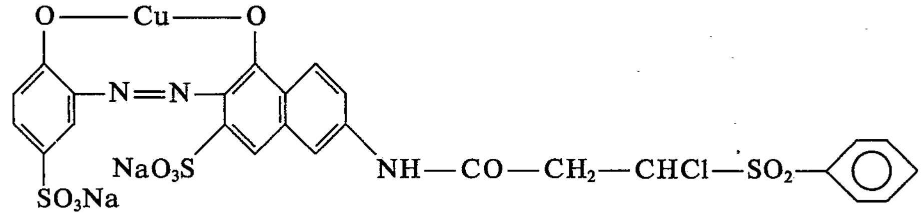

ausgesalzen, abgepreßt, gewaschen und im Vakuum bei 30−40°C getrocknet. Gewebe aus Cellulosematerialien können mit diesem Farbstoff in naß-, reib- und lichtechten Rubintönen gefärbt oder bedruckt werden.

In der folgenden Tabelle sind die Schwermetallkomplexe weiterer Aminoazofarbstoffe sowie die Farbtöne der entsprechenden Reaktivfarbstoffe auf Cellulosematerialien angeführt. Die Herstellung der Aminoazofarbstoffe, ihrer Metallkomplexe und deren Umsatz mit der Reaktivkomponente kann analog den Angaben in Beispiel 32 erfolgen.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

| Aminoazofarbstoff | Komplex gebundenes Schwermetall | Farbton |
|---|---|---|
| 1-Hydroxy-2-aminobenzol-4,6-disulfonsäure → 2-Amino-5-hydroxy-naphthalin-7-sulfonsäure | Cu | rubin |
| 1-Hydroxy-2-aminobenzol-4-sulfonsäure → 2-Ethyl-amino-5-hydroxy-naphthalin-7-sulfonsäure | Cu | rubin |
| 1-Amino-2-hydroxy-6-nitronaphthalin-4-sulfon-säure → 2-Amino-5-hydroxy-naphthalin-7-sulfonsäure | Cu | rubin |
| desgl. | Cr | grünstichig schwarz |
| 1-Amino-2-hydroxy-5-methylsulfonyl-benzol → 1-Amino-8-hydroxy-naphthalin-3,6-disulfonsäure | Cu | violett |
| 1-Amino-2-hydroxy-5-methyl-sulfonyl-benzol → 1-Amino-8-hydroxy-naphthalin-3,6-disulfonsäure | Cr | grünstichig schwarz |
| 1-Amino-2-methylbenzol-4-sulfonsäure → 1-Amino-2-hydroxy-5-methylbenzol → 1-Amino-8-hydroxy-naphthalin-4,6-disulfonsäure | Cu | blau |
| desgl. | Cr | grünstichig schwarz |
| (1-Amino-2-chlorbenzol-4-sulfonsäure → 1-Hydroxy-2-acetylaminobenzol), verseift → 1-Amino-8-hydroxy-naphthalin-3,6-disulfonsäure | Cu | marineblau |

Beispiel 34

0,1 Mol der Paste der Aminoazoverbindung der Formel,

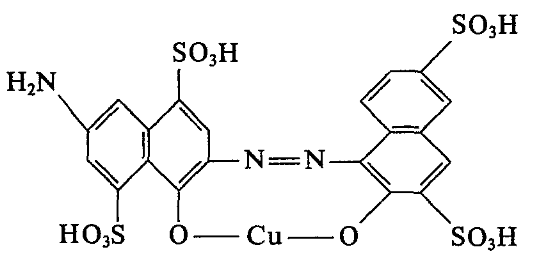

die durch Kupplung der Diazoniumverbindung aus 6-Acetamino-2-aminonaphthalin-4,8-disulfonsäure mit 2-Oxy-naphthalin-3,6-disulfonsäure, Verseifung und Umwandlung der Monoazoverbindung in den Kupferkomplex erhalten wird, werden in 2000 ml Wasser bei pH 6,5 gelöst. Unter gutem Rühren trägt man bei −1 bis 0°C 29,4 g 3-Chlor-3-phenylsulfonylpropionylchlorid ein und hält den pH der Reaktionslösung durch Zugabe von Sodalösung bei 6−7. Nach beendeter Reaktion wird der Farbstoff ausgesalzen, isoliert und im Vakuum getrocknet. Der getrocknete Farbstoff stellt ein dunkles Pulver dar, das sich in Wasser mit violetter Farbe löst und Baumwolle in Gegenwart von Alkali in blaustichig violetten Tönen färbt.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Beispiel 35

Die wäßrige Lösung von 0,1 Mol des Kupferkomplexes der Formel

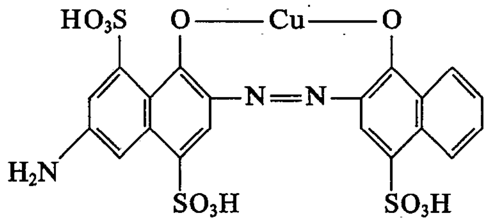

hergestellt nach den Angaben der deutschen Patentschrift 1 061 460 bzw. 1 085 988, wird in üblicher Weise mit 29,4 g 3-Chlor-3-phenylsulfonylpropionylchlorid in 80 ml Aceton zur Reaktion gebracht. Durch Zugabe von Soda hält man den pH auf 6–7 und isoliert den Farbstoff nach beendeter Reaktion durch Aussalzen. Er stellt in getrocknetem Zustand ein dunkles Pulver dar; das sich in Wasser mit violetter Farbe löst. Baumwollgewebe wird in licht- und naßechten violetten Tönen gefärbt. Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Beispiel 36

65 g des Farbstoffs der Formel

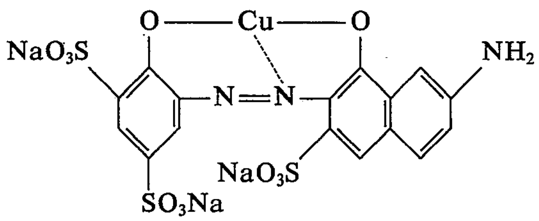

(hergestellt durch Kuppeln von diazotierter 1-Hydroxy-2-aminobenzol-4,6-disulfonsäure auf 2-Amino-8-hydroxy-naphthalin-6-sulfonsäure und Kupferung des erhaltenen Azofarbstoffs) werden in 700 ml Wasser neutral gelöst. Man tropft bei −1 bis 0°C 29,4 g 3-Chlor-3-phenylsulfonylpropionylchlorid in 80 ml Aceton ein und stumpft die freiwerdende Säure mit Sodalösung ständig auf einen pH von 6–7 ab, bis keine freie Aminogruppe mehr nachweisbar ist.

Der entstandene Reaktivfarbstoff der Formel

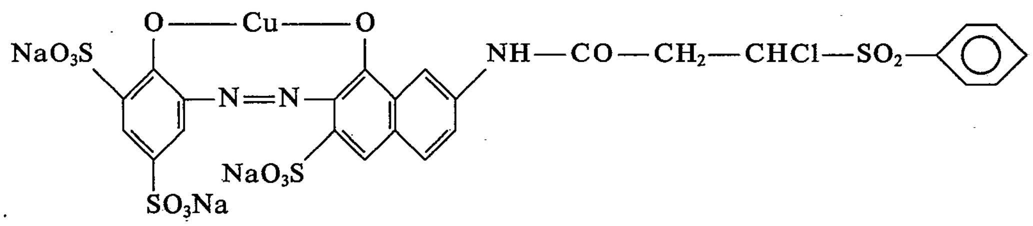

wird ausgesalzen, abfiltriert, gewaschen und bei 30–40°C im Vakuum getrocknet. Er färbt Cellulosematerialien in sehr echten Rubintönen.

Farbstoffe von ähnlichen Eigenschaften erhält man analog der oben geschilderten Arbeitsweise aus den in nachfolgender Tabelle aufgeführten Diazo- und Azokomponenten hergestellten Azofarbstoffen.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

| Diazokomponente | Kupplungskomponente | Farbton auf Baumwolle |
|---|---|---|
| 1-Hydroxy-2-aminobenzol-4-sulfonsäure | 2-Methylamino-5-hydroxy-naphthalin-7-sulfonsäure | rubin |
| desgl. | 2-Ethylamino-5-hydroxy-naphthalin-7-sulfonsäure | rubin |
| desgl. | 2-Amino-8-hydroxy-naphthalin-3,6-disulfonsäure | rubin |
| 1-Hydroxy-2-aminobenzol-4,6-disulfonsäure | 2-Amino-5-hydroxy-naphthalin-1,7-disulfonsäure | rubin |
| desgl. | 2-Amino-8-hydroxy-naphthalin-3,6-disulfonsäure | rubin |
| desgl. | 2-Methylamino-5-hydroxy-naphthalin-7-sulfonsäure | rubin |
| desgl. | 2-Ethylamino-5-hydroxy-naphthalin-7-sulfonsäure | rubin |
| desgl. | 1-Amino-8-hydroxy-naphthalin-3,6-disulfonsäure | violett |
| desgl. | 1-Amino-8-hydroxy-naphthalin-4,6-disulfonsäure | violett |
| 1-Hydroxy-2-aminobenzol-5-sulfonsäure | 1-Amino-8-hydroxy-naphthalin-3,6-disulfonsäure | violett |
| desgl. | 1-Amino-8-hydroxy-naphthalin-4,6-disulfonsäure | violett |
| 1-Hydroxy-2-amino-4-acetylaminobenzol-6-sulfonsäure | 1-Amino-8-hydroxy-naphthalin-3,6-disulfonsäure | blaust. violett |
| desgl. (4ständige Acetylaminogruppe anschließend verseift) | 1-Ethoxy-8-hydroxy-naphthalin-3,6-disulfonsäure | blaust. violett |
| desgl. (4ständige Acetylaminogruppe anschließend verseift) | 1-Amino-8-hydroxy-naphthalin-2,4-disulfonsäure | blau |
| desgl. | 1-Amino-8-hydroxy-naphthalin-2,4,6-trisulfonsäure | blau |
| 1-Hydroxy-2-amino-6-acetylaminobenzol-4-sulfonsäure (6ständige Acetylaminogruppe verseift) | 1-Amino-8-hydroxy-naphthalin-2,4-disulfonsäure | blau |
| 1-Amino-2-hydroxy-6-nitronaphthalin-4-sulfonsäure (6ständige Nitrogruppe anschließend reduziert zu $-NH_2$) | desgl. | blau |
| desgl. | 1-Amino-8-hydroxy-naphthalin-2,4,6-trisulfonsäure | blau |
| 1-Hydroxy-2-amino-6-Acetylaminobenzol-4-sulfonsäure (6ständige Acetylaminogruppe verseift) | 1-Amino-8-hydroxy-naphthalin-2,4,6-trisulfonsäure | blau |

Beispiel 37

58 g des Farbstoffs der Formel

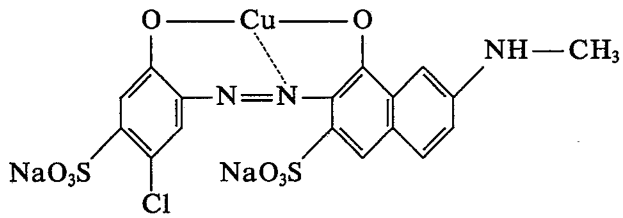

(hergestellt durch Kuppeln von diazotierter 1-Hydroxy-2-amino-4-chlor-benzol-5-sulfonsäure auf 2-Methylenamino-8-hydroxy-naphthalin-6-sulfonsäure und Kupferung des erhaltenen Azofarbstoffs) werden in 700 ml Wasser neutral gelöst. Man tropft 29,4 g 3-Chlor-3-phenylsulfonylpropionylchlorid in 80 ml Aceton und rührt bei −1 bis 0°C unter ständigem Abstumpfen der freiwerdenden Säure mit Sodalösung auf pH 6,0−6,5 bis keine freie Aminogruppe mehr nachweisbar ist.

Der gebildete Reaktivfarbstoff der Formel

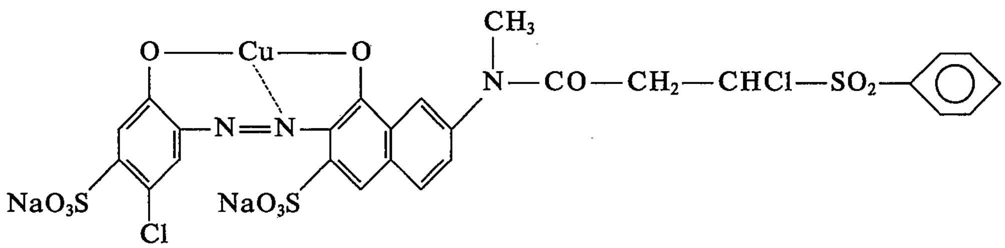

wird ausgesalzen, abfiltriert, gewaschen und bei 30−40°C im Vakuum getrocknet. Er färbt Cellulosematerialien in sehr echten Violett-Tönen.

Farbstoffe von ähnlichen Eigenschaften erhält man analog der oben geschilderten Arbeitsweise aus den – durch einfache, entmethylierende oder oxydierende Kupferung erhaltenen – Kupferkomplexen der aus den in nachfolgender Tabelle aufgeführten Diazo- und Kupplungskomponenten hergestellten Mono- und Disazofarbstoffe.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 3-Brom-3-phenylsulfonylpropionylchlorid verwendet.

| Diazokomponente | Kupplungs-komponente | Kupplungs-pH | Farbton |
|---|---|---|---|
| 1-Hydroxy-2-amino-4-chlor-benzol-5-sulfonsäure | 2-Amino-8-hydroxy-naphthalin-3,6-disulfonsäure | 10 | rotst. violett |
| desgl. | 1-Amino-8-hydroxy-naphthalin-3,6-disulfonsäure | 10 | blaust. violett |
| 2-Amino-naphthalin-4,6,8-trisulfonsäure | 2-Hydroxy-6-acetylamino-naphthalin-4-sulfonsäure (verseift) | 8–9 | rotst. blau |
| 1-Amino-2-hydroxy-6-nitro-naphthalin-4-sulfonsäure (reduziert) | 1-Hydroxy-8-ethoxynaphthalin-3,6-disulfonsäure | 10 | blau |
| 1-Hydroxy-2-aminobenzol-4,6-disulfonsäure | 2-Hydroxy-3-aminonaphthalin-5,7-disulfonsäure | 10 | rot |
| 2-Amino-naphthalin-4,8-disulfonsäure (oxydierend gekupfert) | 2-Hydroxy-3-aminonaphthalin-5,7-disulfonsäure | 8–9 | blau |
| 2-Amino-naphthalin-4,6,8-trisulfonsäure (oxydierend gekupfert) | 2-Hydroxy-3-amino-naphthalin-7-sulfonsäure | 8–9 | blau |
| 3-Methoxy-4-amino-6-methyl-azobenzol-2',4'-disulfonsäure (entmethylierend gekupfert) | 2-Methylamino-5-hydroxy-naphthalin-7-sulfonsäure | 10 | marineblau |
| desgl. | 2-Amino-8-hydroxy-naphthalin-3,6-disulfonsäure | 10 | marineblau |
| desgl. | 2-Amino-5-hydroxy-naphthalin-1,7-disulfonsäure | 10 | marineblau |
| 3-Methoxy-4-amino-6-methyl-azobenzol-2',5'-disulfonsäure (entmethylierend gekupfert) | 2-Methylamino-5-hydroxy-naphthalin-7-sulfonsäure | 10 | marineblau |
| desgl. | 2-Amino-8-hydroxy-naphthalin-3,6-disulfonsäure | 10 | marineblau |
| 3-Methoxy-4-amino-6-methyl-azobenzol-2',5'-disulfonsäure (entmethylierend gekupfert) | 2-Amino-5-hydroxy-naphthalin-1,7-disulfonsäure | 10 | marineblau |

Beispiel 38

0,1 Mol 4-Ureido-2-amino-1-hydroxybenzol-5-sulfonsäure werden diazotiert und sodaalkalisch mit 0,1 Mol 1-Amino-8-hydroxy-naphthalin-2,4-disulfonsäure gekuppelt. Die Kupplungslösung wird mit Ätznatron auf einen Gehalt von 2 Mol/Liter eingestellt und dann 3 Stunden unter Rückfluß zur Verseifung der Ureidogruppe gekocht. Nach dem Erkalten wird mit Salzsäure neutralisiert. Durch Zusatz von 25 g Kupfersulfat und 100 ml 2n Natronlauge wird der Farbstoff bei 45°C und einem pH-Wert von 4–6 metallisiert und nach 30 Minuten bei pH 6–7 und Temperaturen von 0–5°C mit 29,4 g 3-Chlor-3-phenylsulfonylpropionylchlorid acyliert.

Der erhaltene Farbstoff der Formel

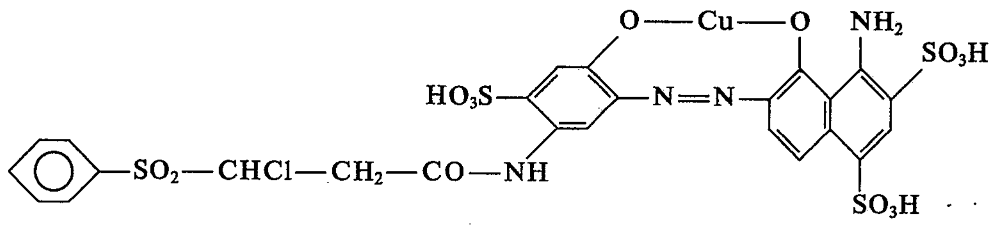

wird ausgesalzen.

Auf Baumwolle erhält man eine blaue Färbung.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Beispiel 39

0,1 Mol der Kupferkomplexverbindung der Formel

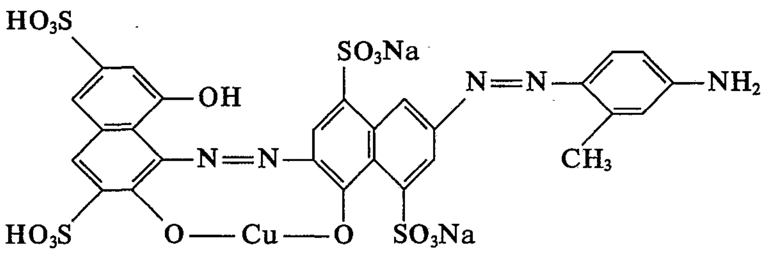

werden in 3000 ml Wasser bei pH 6 gelöst unter Rühren werden bei einer Temperatur von 0–5°C 29,4 g 3-Chlor-3-phenylsulfonylpropionylchlorid in 80 ml Aceton eingetropft und mit 2n Kaliumcarbonatlösung ein pH von 6 eingehalten. Das Gemisch wird gerührt, bis die Kondensation beendet ist, der Farbstoff durch Zugabe von wenig Natriumchlorid abgeschieden und isoliert. Der Rückstand wird mit Aceton gewaschen und bei Raumtemperatur unter vermindertem Druck getrocknet. Man erhält ein dunkles Pulver, das sich in Wasser mit grüner Farbe löst und Baumwolle in grünen Tönen färbt.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Beispiel 40

Man diazotiert 28,9 g 2-Amino-1-methylbenzol-3,5-disulfonsäure (Mononatriumsalz) und kuppelt die Diazoverbindung mit 13,7 g 1-Amino-2-methoxy-5-methyl-benzol in schwach saurem Medium. Der erhaltene Monoazofarbstoff wird isoliert und anschließend oder auch ohne Isolierung sofort in Lösung diazotiert und mit 25,3 g 2-Methylamino-5-hydroxy-naphthalin-7-sulfonsäure alkalisch gekuppelt. Der erhaltene Disazofarbstoff wird durch Zugabe von Natriumchlorid ausgesalzen, abgesaugt und das isolierte Produkt mit ca. 50 g kristallisiertem Kupfersulfat, 40 g Diethanolamin, 50 g Ammoniak (D : 0,88) in 5 Stunden bei 95–100°C metallisiert. Aus der Kupferungslösung wird der Farbstoff durch Salzzugabe und vorsichtiges Ansäuern isoliert.

Der gekupferte Amino-disazofarbstoff wird nun in wäßriger Lösung bei pH 6–7 bei einer Temperatur von 0–5°C mit 29,4 g 3-Chlor-3-phenylsulfonylpropionylchlorid acyliert, wobei der pH-Wert durch Sodazusatz im angegebenen Bereich gehalten wird. Nach beendeter Acylierung wird der Farbstoff mit Natriumchlorid isoliert und bei 35°C getrocknet. Der Farbstoff entspricht in Form der freien Sulfonsäure der Formel:

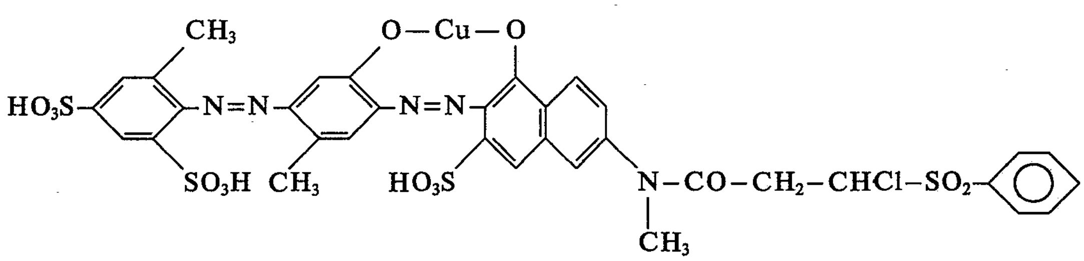

Er färbt Cellulosegewebe nach den für Reaktivfarbstoffe bekannten Verfahren in naß- und lichtechten marineblauen Tönen.

In ähnlicher Weise lassen sich weitere erfindungsgemäße Farbstoffe herstellen, wenn man den obengenannten Monoazofarbstoff aus 2-Amino-1-methylbenzol-3,5-disulfonsäure und 1-Amino-2-methoxy-5-methylbenzol mit den in der folgenden Tabelle angeführten Aminonaphtholsulfonsäuren und 3-Chlor-3-phenylsulfonyl-, 3-Brom-3-phenylsulfonyl-, 2-Chlor-3-phenylsulfonyl bzw. 2-Brom-3-phenylsulfonylpropionylchlorid, entsprechend der oben angegebenen Vorschrift kombiniert.

Kupplungskomponente

2-Amino-5-hydroxy-naphthalin-1,7-disulfonsäure,
2-Amino-8-hydroxy-naphthalin-3,6-disulfonsäure.

### Beispiel 41

62,0 g Trinatriumsalz der durch sodaalkalische Kupplung aus diazotierter 4-Chlor-2-amino-1-hydroxy-benzol-6-sulfonsäure und 1-Amino-8-hydroxy-naphthalin-3,6-disulfonsäure erhaltenen Farbstoffe werden in 300 ml Wasser bei 70–80°C und einem pH von 8–9 mit 54,2 g des 1 : 1-Chromkomplexes des Farbstoffs aus 6-Nitro-1-diazo-2-hydroxynaphthalin-4-sulfonsäure und 2-hydroxynaphthalin versetzt. Nach 10 Minuten hat sich eine tiefblaue Lösung gebildet.

Der Mischkomplex wird in ca. einer Stunde bei 0–5°C und einem pH von 6–7 mit 29,4 g 3-Chlor-3-phenylsulfonylpropionylchlorid acyliert. Hierbei wird der pH-Wert durch Zutropfen von Sodalösung konstant gehalten. Der acylierte Farbstoff wird mit 20% Natriumchlorid abgeschieden, abgesaugt und bei 30°C getrocknet.

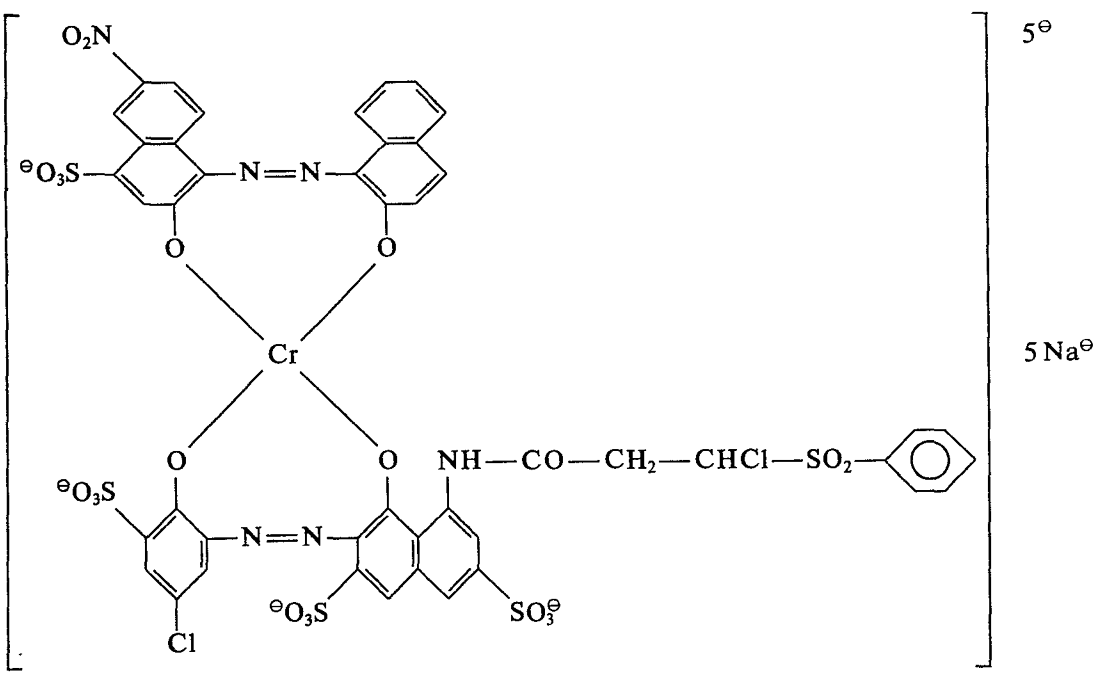

Auf Baumwolle erhält man einen blauschwarzen Druck von ausgezeichneter Licht- und Waschechtheit.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

### Beispiel 42

38,9 g des durch sodaalkalische Kupplung aus 6-Nitro-2-diazo-1-hydroxybenzol-4-sulfonsäure und 2-Hydroxynaphthalin erhaltenen Farbstoffs werden in 200 ml Wasser bei pH 8 bei einer Temperatur von 70–80°C angerührt. In diese Suspension trägt man 67,9 g der auf 1 Molekül Farbstoff 1 Chromatom enthaltenden Chromkomplexverbindung des Azofarbstoffs aus 4-Chlor-2-diazo-1-hydroxybenzol-6-sulfonsäure und 1-Amino-8-hydroxy-naphthalin-3,6-disulfonsäure ein, wobei der pH durch Zutropfen von Sodalösung zwischen 7 und 9 gehalten wird. Nach 20 Minuten bei 70–80°C hat sich

eine dunkelblaue Lösung gebildet. Das Papierchromatogramm zeigt, daß ein einheitlicher Mischkomplex entstanden ist. Der Mischkomplex wird bei −1 bis 0°C und pH 6,5−7,0 mit 29,4 g 3-Chlor-3-phenylsulfonylpropionylchlorid acyliert, wobei der pH durch Zutropfen einer Sodalösung im angegebenen Bereich gehalten wird. Der acylierte Farbstoff wird mit 20% Kaliumchlorid ausgesalzen, abfiltriert und bei 30°C getrocknet. Man erhält ein dunkles Pulver, das sich in Wasser mit blaugrauer Farbe löst. Der Farbstoff entspricht als Pentanatriumsalz der Formel

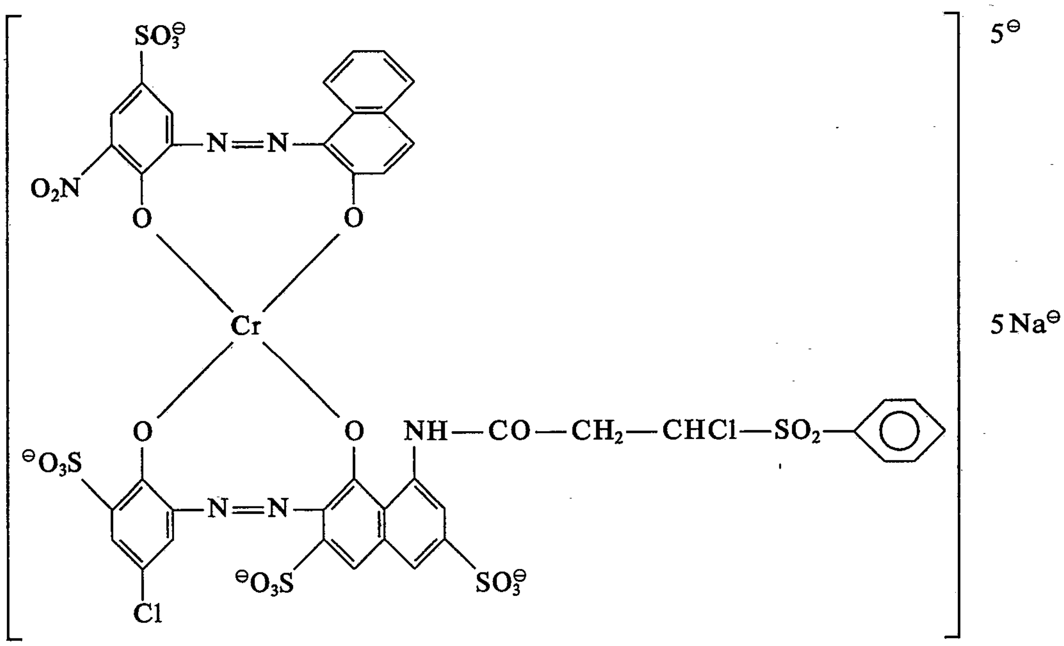

Er färbt Baumwolle in grauen bis schwarzen Tönen.

Aus den in der folgenden Tabelle angegebenen Ausgangskomponenten lassen sich ebenfalls wertvolle Farbstoffe in der in diesem Beispiel angegebenen Weise erhalten.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Farbstoffe mit zwei Aminogruppen werden mit zwei Äquivalenten Säurechlorid acyliert.

| 1 : 1-Chromkomplex | Metallfreier Farbstoff | Farbton auf Baumwolle |
|---|---|---|
| 4-Nitro-2-amino-1-hydroxybenzol-6-sulfonsäure → 1-Amino-8-hydroxy-naphthalin-3,6-disulfonsäure | 4-Nitro-2-amino-1-hydroxybenzol → 2-Hydroxy-naphthalin- | schwarz |
| desgl. | 4-Nitro-2-amino-1-hydroxybenzol → 2-Hydroxy-naphthalin-6-sulfonsäure | schwarz |
| desgl. | 4-Nitro-2-amino-1-hydroxybenzol → 1-Hydroxy-naphthalin-4-sulfonsäure | marineblau |
| desgl. | 6-Nitro-2-amino-1-hydroxybenzol-4-sulfonsäure → 1-Hydroxynaphthalin | schwarz |
| desgl. | 4-Nitro-2-amino-1-hydroxybenzol → 1-Acetylamino-7-hydroxy-naphthalin | schwarz |
| desgl. | 6-Nitro-1-amino-2-hydroxy-naphthalin-4-sulfonsäure → 2-Hydroxynaphthalin | schwarz |
| 4-Nitro-2-amino-1-hydroxybenzol-6-sulfonsäure → 1-Amino-8-hydroxy-naphthalin-4,6-disulfonsäure | 4-Nitro-2-amino-1-hydroxy-naphthalin-6-sulfonsäure → 1-Hydroxy-naphthalin | schwarz |

Fortsetzung

| 1 : 1-Chromkomplex | Metallfreier Farbstoff | Farbton auf Baumwolle |
|---|---|---|
| 4-Chlor-2-amino-1-hydroxybenzol-6-sulfonsäure→1-Amino-8-hydroxy-naphthalin-3,6-disulfonsäure | 4-Nitro-2-amino-1-hydroxybenzol-→2-Hydroxy-naphthalin | blauschwarz |
| desgl. | 4-Nitro-2-amino-1-hydroxybenzol→2-Hydroxy-naphthalin-6-sulfonsäure | blauschwarz |
| desgl. | 4-Chlor-2-amino-1-hydroxybenzol→2-Hydroxy-naphthalin | marineblau |
| desgl. | 4-Nitro-2-amino-1-hydroxybenzol→1-Acetylamino-8-hydroxy-naphthalin-3,6-disulfonsäure | blau |
| 1-Amino-2-hydroxy-7-nitronaphthalin-4-sulfonsäure→2-Amino-5-hydroxy-naphthalin-7-sulfonsäure | 2-Amino-1-hydroxy-4-nitrobenzol→2-Amino-8-hydroxynaphthalin-6-sulfonsäure | schwarz |
| 4-Chlor-2-amino-1-hydroxybenzol-6-sulfonsäure→1-Amino-8-hydroxy-naphthalin-3,6-disulfonsäure | 4-Nitro-2-amino-1-hydroxybenzol→1-Amino-8-hydroxy-naphthalin-2,4-disulfonsäure | marineblau |
| desgl. | 4-Nitro-1-amino-2-hydroxy-naphthalin-4-sulfonsäure→2-Hydroxynaphthalin | blauschwarz |
| desgl. | 2-Aminobenzol-1-carbonsäure-5-sulfonsäure→1-Phenyl-3-methyl-5-pyrazolon | graugrün |
| 4-Nitro-2-amino-1-hydroxybenzol-6-sulfonsäure→1-Amino-8-hydroxy-naphthalin-3,6-disulfonsäure | 6-Nitro-1-amino-2-hydroxy-naphthalin-4-sulfonsäure→2-Hydroxynaphthalin | schwarz |
| 4-Chlor-2-amino-1-hydroxybenzol-6-sulfonsäure→1-Amino-8-hydroxy-naphthalin-3,6-disulfonsäure | 4-Chlor-2-amino-1-hydroxybenzol→1-(4'-Sulfophenyl)-3-methyl-5-pyrazolon | violett |
| 4-Methyl-2-amino-1-hydroxybenzol-6-sulfonsäure→1-Amino-8-hydroxy-naphthalin-3,6-disulfonsäure | 4-Chlor-2-amino-1-hydroxybenzol→2-Hydroxy-naphthalin-6-sulfonsäure | rotstichig blau |
| 4-Nitro-2-amino-1-hydroxybenzol-6-sulfonsäure→1-Amino-8-hydroxy-naphthalin-3,6-disulfonsäure | 5-Nitro-2-amino-1-hydroxybenzol→2-Hydroxy-naphthalin-6-sulfonsäure | schwarz |
| desgl. | 4-Nitro-2-amino-1-hydroxybenzol→2-Hydroxy-naphthalin-8-sulfonsäure | schwarz |
| desgl. | 4-Nitro-2-amino-1-hydroxybenzol→2-Hydroxy-naphthalin-5-sulfonsäure | schwarz |
| desgl. | 6-Nitro-4-chlor-1-hydroxybenzol→1-Hydroxy-naphthalin-5-sulfonsäure | schwarz |

Beispiel 43

Eine Mischung der Lösung von je 65,5 g des Chroms 2 : 1-Komplexes und des Kobalt 2 : 1-Komplexes der Formel

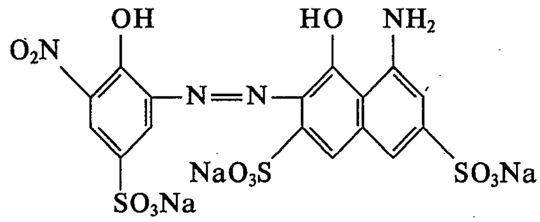

in je 400 ml Wasser wird mit 59 g 3-Chlor-3-phenylsulfonylpropionylchlorid bei −1 bis 0°C unter Aufrechterhaltung von pH 6−7 acyliert. Wenn chromatographisch kein Aminoazofarbstoff (Co-Komplex: blau, Cr-Komplex: blaugrün) mehr nachweisbar ist, wird das gebildete Gemisch der beiden Reaktivfarbstoffe mit Kaliumchlorid ausgesalzen, abfiltriert und getrocknet.

Der Farbstoff liefert auf Cellulosematerialien nach den Klotz-Färbeverfahren oder im Druck in Gegenwart säurebindender Mittel kräftige, sehr gute naß- und lichtechte Schwarztöne.

Wenn man entsprechend verfährt, jedoch die Mischung des Chrom-2 : 1- und Kobalt-2 : 1-Komplexes folgender Aminoazofarbstoffe einsetzt, erhält man ebenfalls wertvolle Schwarzfarbstoffe:

| Diazokomponente | Kupplungskomponente | Kupplungs-pH |
|---|---|---|
| 1-Hydroxy-2-amino-4-nitrobenzol | 1-Hydroxy-8-amino-naphthalin-3,6-disulfonsäure | 9 |
| 1-Hydroxy-2-amino-4-nitro-naphthalin-7-sulfonsäure | desgl. | 9 |

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Beispiel 44

0,1 Mol 1-Amino-4-(3'-amino-anilino)-anthrachinon-2-sulfonsäure werden in einer Mischung von 800 ml Wasser und 400 ml Dioxan unter Zugabe von 5,3 g Natriumcarbonat gelöst. Bei 0°C tropft man 29,4 g 3-Chlor-3-phenylsulfonylpropionylchlorid in 80 ml Dioxan zu und erhält durch Zugabe von 2n-Sodalösung einen pH von 6−6,5. Nach beendeter Acylierung wird der Farbstoff bei 20°C mit 125 g Kochsalz ausgesalzen und das kristalline Produkt abgesaugt, mit 2%iger Kochsalzlösung gewaschen und im Vakuum bei 30°C getrocknet.

Der Farbstoff färbt Wolle in sehr naßechten blauen Tönen.

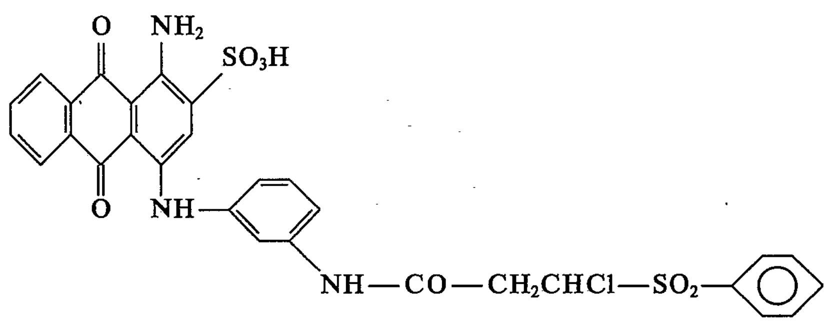

Ähnliche Farbstoffe erhält man, wenn man mit äquivalenten Mengen 3-Brom-3-phenylsulfonylpropionylchlorid, 2-Chlor-3-phenylsulfonyl- bzw. 2-Brom-3-phenylsulfonylpropionylchlorid acyliert.

In der folgenden Tabelle sind weitere Beispiele aufgeführt, die nach den oben angegebenen Verfahren und mit den oben angeführten Säurechloriden waschechte blaue Wollfarbstoffe ergeben

| Aminoanthrachinon-Derivat | Farbton |
|---|---|
| 1-amino-4(4'-aminoanilino)-anthrachinon-2-sulfonsäure | grünst. blau |
| 1-Amino-4-(4'-amino-cyclohexylamino)-anthrachinon-2-sulfonsäure | blau |

Beispiel 45

0,1 Mol 1-Amino-4(3'-amino-2'-methylanilino)-anthrachinon-2,5'-disulfonsäure wird in 350 ml Wasser mit Lithiumhydroxid neutral gelöst. Bei 0°–5°C tropft man 30 g 2-Chlor-3-phenylsulfonylpropionylchlorid in 50 ml Toluol zu und hält den pH-Wert durch Zugabe von 10%iger Sodalösung auf 6–7. Nach beendeter Acylierung wird der pH-Wert mit Salzsäure auf 3,5 gestellt und das Lösungsmittel azeotrop abdestilliert. Man klärt heiß und salzt mit 80 g Natriumchlorid aus. Der isolierte und getrocknete Farbstoff der Formel

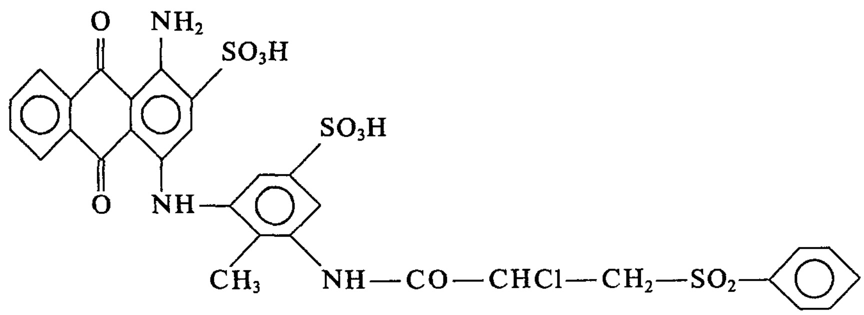

färbt Wolle und Baumwolle in klaren blauen Tönen mit guten Naß- und Lichtechtheiten.

Verwendet man anstelle von 2-Chlor-3-phenylsulfonylpropionylchlorid 2-Brom-3-phenylsulfonylpropionylchlorid, 3-Chlor-3-phenylsulfonylpropionylchlorid bzw. 3-Brom-3-phenylsulfonylpropionylchlorid, so erhält man blaue klare Farbstoffe, die Wolle und Baumwolle ebenfalls mit guten Naß- und Lichtechtheiten färben.

Beispiel 46

0,1 Mol 1-Amino-4(4'-aminoanilino)-anthrachinon-2,2'-disulfonsäure wird in 400 ml Wasser mit Natriumcarbonat neutral gelöst. Bei 0°–5°C tropft man 29,4 g 3-Chlor-3-phenylsulfonylpropionylchlorid in 100 ml Aceton zu und hält den pH-Wert durch Zugabe von 10%iger Sodalösung auf 6–7. Nach beendeter Acylierung wird mit Kaliumchlorid ausgesalzen, abgesaugt und bei 40° getrocknet. Der Farbstoff der Formel

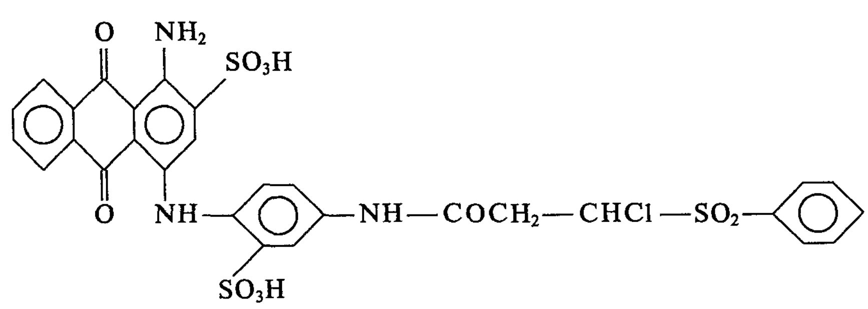

färbt Wolle und Baumwolle in grünstichig blauen Tönen mit guten Naß- und Lichtechtheiten.

Verwendet man anstelle von 3-Chlor-3-phenylsulfonylpropionylchlorid 3-Brom-3-phenylsulfonylpropionylchlorid, 2-Chlor-3-phenylsulfonylpropionylchlorid bzw. 2-Brom-3-phenylsulfonylpropionylchlorid, so erhält man grünstichig blaue Farbstoffe die Wolle und Baumwolle ebenfalls in guten Naß- und Lichtechtheiten färben.

In der folgenden Tabelle sind weitere Beispiele angeführt, die nach dem oben angegebenen Verfahren und mit den oben angeführten Säurechloriden waschechte blaue Woll- und Baumwollfarbstoffe ergeben.

| Wasserlösliches Amino-anthrachinon-Derivat | Farbton |
|---|---|
| 1-Amino-4-(3'-amino-2,6'-dimethylanilino)-anthrachinon-2,5'-disulfonsäure | rotst. Blau |
| 1-Amino-4-(3'-amino-2',4',6'-trimethylanilino)-anthrachinon-2,5'-disulfonsäure | rotst. Blau |
| 1-Amino-4-(3'-amino-anilino)-anthrachinon-2,4'-disulfonsäure | rotst. Blau |
| 1-Amino-4-(4'-amino-2'-carboxy-anilino)-anthrachinon-2-sulfonsäure | grünst. Blau |
| 1-Amino-4(4'-aminoanilino)-anthrachinon-2,3'-disulfonsäure | grünst. Blau |
| 1-Amino-4-(4'-aminoanilino)-anthrachinon-2,6-disulfonsäure | blaugrün |
| 1-Amino-4-(4'-aminoanilino)-anthrachinon-2,5-disulfonsäure | grünst. Blau |
| 1-Amino-4-(3'-aminoanilino)-anthrachinon-2,6-disulfonsäure | blau |
| 1-Amino-4-(3'-aminoanilino)-anthrachinon-2,5-disulfonsäure | blau |
| 1-Amino-4-(3'-aminoanilino)-anthrachinon-2,8-disulfonsäure | etwas rotst. Blau |
| 1-Amino-4-(3'-aminoanilino)-anthrachinon-2,4',6'-trisulfonsäure | rotst. Blau |
| 1-Amino-4-(4'-aminocyclohexylamino)-anthrachinon-2,5,8-trisulfonsäure | klares grünst. Blau |
| 1-Amino-4-(4'-[4"-aminobenzoylamino]-anilino)-anthrachinon-2,5,8-trisulfonsäure | blaugrün |
| 1-Amino-4-(4'-[4"-aminobenzolsulfamido]-anilino)-anthrachinon-2,5,8-trisulfonsäure | grünst. Blau |
| 1-Amino-4-(4"-aminostilbenamino)-anthrachinon-2,2',2"-trisulfonsäure | grün |
| 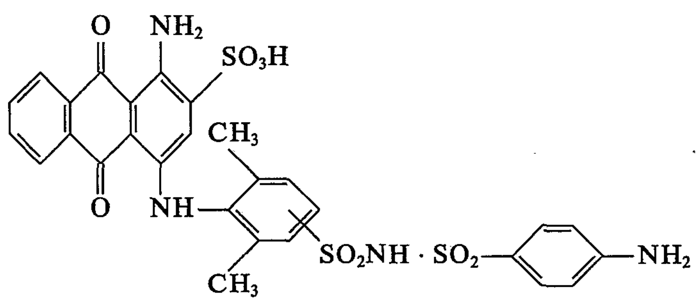 | klares rotst. Blau |
| 1-Amino-4-(4'-amino-phenylamino)-anthrachinon-2,6,2'-trisulfonsäure | blaugrün |
| 1-Amino-4-(4'-amino-anilino)-anthrachinon-2,3',6-trisulfonsäure | grünst. Blau |
| 1-Amino-4-(4'-amino-phenylamino)-anthrachinon-2,2'-disulfon-6-carbonsäure | grünst. Blau |
| 1-Amino-4-(4'-amino-anilino)-anthrachinon-2,7-disulfonsäure | grünst. Blau |
| 1-Amino-4-(3'-amino-anilino)-anthrachinon-2,7-disulfonsäure | rotst. Blau |
| 1-Amino-4-(4'-amino-2'-carboxyanilino)-anthrachinon-2,6-disulfonsäure | blaugrün |
| 1-Amino-4-(4'-amino-2'-carboxy-5'-methylanilino)-anthrachinon-2-sulfonsäure | grünst. Blau |
| 1-Amino-4-(4'-amino-2'-carboxy-5'-methylamino)-anthrachinon-2,6-disulfonsäure | blaugrün |
| 1-Amino-4-(4'-amino-2',3',5',6-tetramethylanilino)-anthrachinon-2,6-disulfonsäure | rotst. Blau |

Fortsetzung

| Wasserlösliches Amino-anthrachinon-Derivat | Farbton |
|---|---|
| 1-Amino-4-(3'-amino-2',4',6'-trimethylanilino)-anthrachinon-2,5',6-trisulfonsäure | rotst. Blau |

Beispiel 47

0,1 Mol 1-Amino-4-(4'-N-methylaminomethylanilino)-anthrachinon-2,2'-disulfonsäure werden in 550 ml Wasser gelöst und mit Natronlauge auf pH gestellt. Dann tropft man bei 0–5°C 29,4 g 3-Chlor-3-phenylsulfonylpropionylchlorid in 80 ml Aceton zu und erhält mit 2n Sodalösung einen pH von 6–7 aufrecht. Die Umsetzung wird chromatographisch verfolgt. Das in blauen Nadeln kristallisierte Reaktionsprodukt saugt man ab und wäscht den Filterrückstand mit 3%iger Kochsalzlösung.

Auf Baumwolle und Wolle erhält man klare blaue Färbungen von guten Naßechtheiten sowie guter Lichtechtheit. Der erhaltene Farbstoff entspricht der Formel

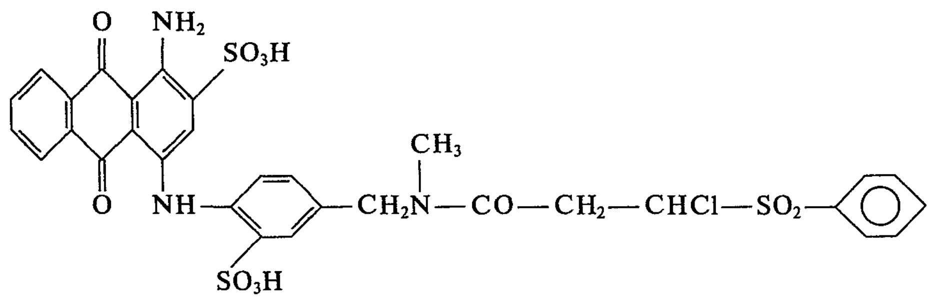

Verwendet man anstelle von 3-Chlor-3-phenylsulfonylpropionylchlorid 3-Brom-3-phenylsulfonyl-, 2-Chlor-3-phenylsulfonyl- und 2-Brom-3-phenylsulfonylpropionylchlorid, so erhält man Farbstoffe, die Wolle und Baumwolle in klaren blauen Tönen und mit ebenfalls guten Naß- und Lichtechtheiten färben.

In der folgenden Tabelle sind weitere Beispiele angeführt, die nach dem oben beschriebenen Verfahren und den oben angegebenen Säurechloriden waschechte blaue Woll- und Baumwollfarbstoffe ergeben.

| Wasserlösliche Amino-anthrachinon-Derivate | Farbton |
|---|---|
| 1-Amino-4-(4'-N-methylaminomethylanilino)-anthrachinon-2,3'-disulfonsäure | blau |
| 1-Amino-4-(4'-N-methylaminomethylanilino)-anthrachinon-2,6,2'-trisulfonsäure | grünst. Blau |
| 1-Amino-4-(4'-N-methylaminomethylanilino)-anthrachinon-2,5,8-trisulfonsäure | grünst. Blau |
| 1-Amino-4-(4'-N-methylaminomethylanilino)-anthrachinon-2,8-disulfonsäure | blau |
| 1-Amino-4-(4'-N-methylaminomethylanilino)-anthrachinon-2,6-disulfonsäure | grünst. Blau |
| 1-Amino-4-(2',6'-dimethyl-3-N-methylaminomethylanilino)-anthrachinon-2,4'-disulfonsäure | rotst. Blau |
| 1-Amino-4-(2',6'-dimethyl-3-N-methylaminomethylanilino)-anthrachinon-2,5'-disulfonsäure | rotst. Blau |
| 1-Amino-4-(3'-N-methylaminomethyl-2',6'-dimethyl-anilino)-anthrachinon-2,7-disulfonsäure | blau |
| 1-Amino-4-(3'-N-methylaminomethyl-2',6'-dimethyl-anilino)-anthrachinon-2,7,5'-trisulfonsäure | blau |
| 1-Amino-4-(3'-N-methylaminomethyl-2',6'-dimethyl-anilino)-anthrachinon-2,6,4'-trisulfonsäure | blau |
| 1-Amino-4-(2'-aminomethyl-4'-methyl-anilino)-anthrachinon-2,6,6'-trisulfonsäure | blau |
| 1-Amino-4-(2'-aminomethyl-4'-methyl-anilino)-anthrachinon-2,6'-disulfonsäure | rotst. Blau |
| 1-Amino-4-(2'-aminomethyl-4'-methyl-anilino)-anthrachinon-2,7,6'-trisulfonsäure | blau |
| 1-Amino-4-(4'-methoxy-3'-methylaminomethylanilino)-anthrachinon-2,6-disulfonsäure | grünst. Blau |
| 1-Amino-4-(4'-methoxy-3'-methylaminomethylanilino)-anthrachinon-2,5'-disulfonsäure | grünst. Blau |
| 1-Amino-4-(4'-methoxy-5'-methylaminomethylanilino)-anthrachinon-2,2'-disulfonsäure | grünst. Blau |

## Beispiel 48

0,1 Mol 1-Amino-4-[4'-(3'-Chlor-3'-phenylsulfonylpropionylamino)-anilino]-anthrachinon-2-sulfonsäure (Beispiel 44) werden in 140 ml 13%iges Oleum bei 0°C eingetragen. Gegen Ende der Reaktion wird die Temperatur auf 20°C gebracht und nach vollständiger Sulfierung von 2200 g Eiswasser und 300 g Kaliumchlorid eingetragen. Das sehr gut kristallisierte Produkt wird abgesaugt und mit gesättigter Kaliumchloridlösung neutral gewaschen. Der Farbstoff der Formel

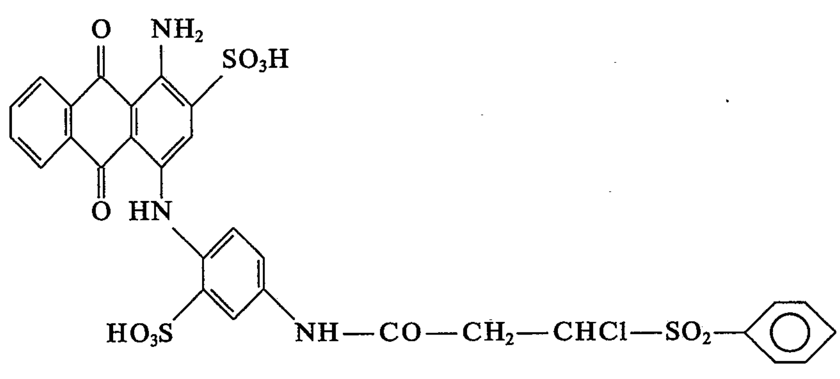

ist identisch mit dem in Beispiel 46 beschriebenen.

Beispiel 49

96 g (bezogen auf 100%ige Ware) des in üblicher Weise durch Einwirkung von Chlorsulfonsäure und Thionylchlorid auf Kupferpththalocyanin frisch hergestellten Kupferphthalocyanin-tetrasulfochlorids oder des isomeren, aus 1-Sulfo-benzol-3,4-dicarbonsäure über die entsprechende Kupferphthalocyanin-tetrasulfonsäure aufgebauten Kupferphthalocyanin-tetrasulfochlorids werden in Form des feuchten, gut gewaschenen Saugkuchens in 500 ml Wasser und 500 g Eis suspendiert, die Lösung von 50 g 1,3-Diaminobenzol in 500 ml Wasser hinzugegeben und der pH mit Soda auf 8,5 eingestellt. Man rührt die Suspension 24 Stunden bei Raumtemperatur und hält dabei durch laufende Sodazugabe den pH stets auf 8,5. Das entstandene Kondensationsprodukt wird bei pH 1–2 durch Zugabe von Kochsalz ausgefällt, abgesaugt, gewaschen und dann wieder in 1000 ml Wasser neutral gelöst. In die blaue Lösung werden unter intensivem Rühren 92 g 3-Chlor-3-phenylsulfonylpropionylchlorid eingetragen und unter ständigem Abstumpfen mit Sodalösung auf pH 6 so lange bei 0–5°C gerührt, bis keine freien Aminogruppen mehr nachweisbar sind. Der so erhaltene Reaktivfarbstoff der Formel

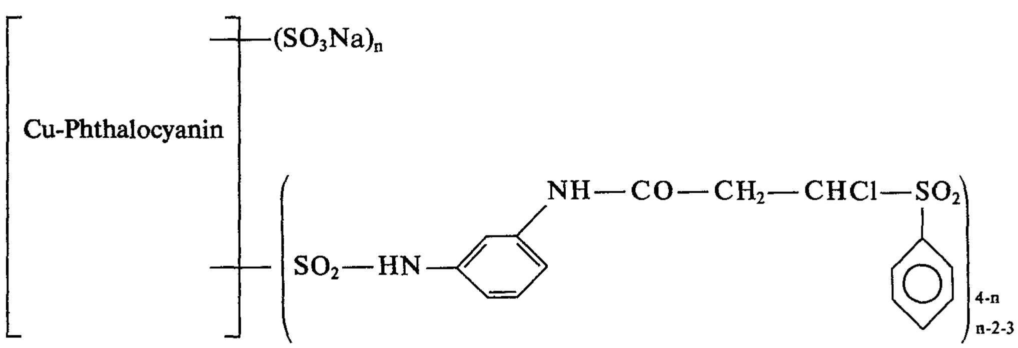

wird ausgesalzen, gewaschen und bei 30–40°C im Vakuum getrocknet. Er stellt ein dunkelblaues, in Wasser mit blauer Farbe lösliches Pulver dar und färbt Baumwolle und Regeneratcellulose mit den allgemein üblichen Färbe- oder Druckverfahren in klaren Blautönen von guter Naß-, Reib- und Lichtechtheit.

Anstelle der 96 g Kupferphthalocyanintetrasulfochlorid können – bei sonst gleicher Arbeitsweise wie oben beschrieben – auch 87 g (bezogen auf 100%ige Ware) des durch Einwirkung von Chlorsulfonsäure auf Kupfer- oder Nickelphthalocyanin erhältlichen Kupfer- oder Nickelphthalocyanin-trisulfochlorids in Form des feuchten, gut mit Eiswasser gewaschenen Saugkuchens eingesetzt werden; man erhält dann ebenfalls klar blau färbende Reaktivfarbstoffe.

Auch wenn man wie in Beispiel 48 angegeben arbeitet, jedoch von 87 g Kupferphthalocyanintrisulfochlorid ausgeht und anstelle der 50 g des Natriumsalzes der 1,3-Diaminobenzol-4-sulfonsäure 90 g des Natriumsalzes der 4,4'-Diamino-diphenyl-2,2'-disulfonsäure oder 90 g des Natriumsalzes der 4,4'-Diaminostilben-2,2'-disulfonsäure einsetzt, erhält man Reaktivfarbstoffe, welche Cellulosematerialien nach einem der obengenannten Verfahren in naß-, reib- und lichtechten, klaren blauen Tönen färben.

Geht man vom 4', 4'', 4''', 4''''-Tetraphenyl-Cu-phthalocyanin aus, so erhält man nach Sulfochlorierung und Umsatz mit 1,3-Phenylen-diamin und Acylierung mit 3-Chlor-3-phenylsulfonylpropionylchlorid einen Reaktivfarbstoff, der Cellulosematerialien in Gegenwart säurebindender Mittel in klaren, naß- und lichtechten Grüntönen färbt.

Verwendet man anstelle von 3-Chlor-3-phenylsulfonylpropionylchlorid 3-Brom-3-phenylsulfonyl-, 2-Chlor-3-phenylsulfonyl- und 2-Brom-3-phenylsulfonylpropionylchlorid zur Acylierung so erhält man ähnliche Farbstoffe mit ganz ähnlichen färberischen Eigenschaften wie die oben beschriebenen.

Beispiel 50

0,01 Mol des Triphendioxazins der Formel

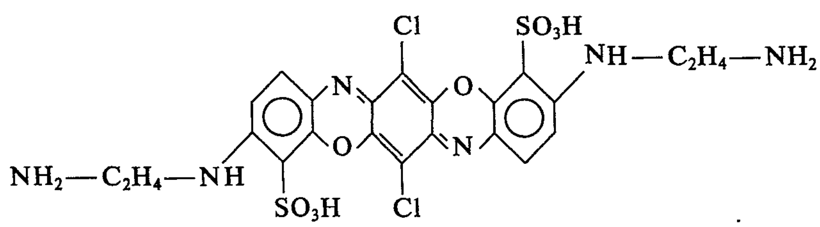

werden in 2 l Wasser bei Raumtemperatur gelöst und bei einem pH-Wert von 7–7,5 mit 7 g 3-Chlor-3-phenylsulfonylpropionylchlorid in 30 ml Aceton umgesetzt. Der pH-Wert wird mit Sodalösung gehalten. Es wird 1 Stunde nachgerührt, das ausgefallene Produkt abfiltriert und bei 30–40°C getrocknet. Man erhält ein dunkelblaues Pulver, das Baumwolle und Wolle in leuchtend blauen Tönen färbt. Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Nach dem gleichen Verfahren und mit den gleichen Säurechloriden liefern auch die folgenden Verbindungen im ersten Falle leuchtend blaue, im zweiten Fall leuchtend grünstichig blaue Färbungen auf Baumwolle und Wolle

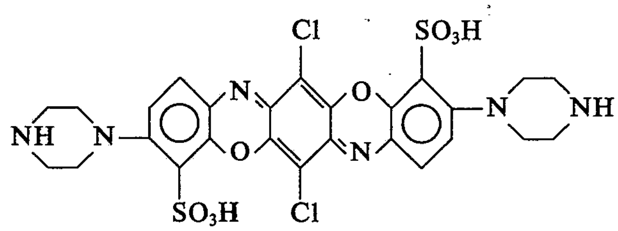

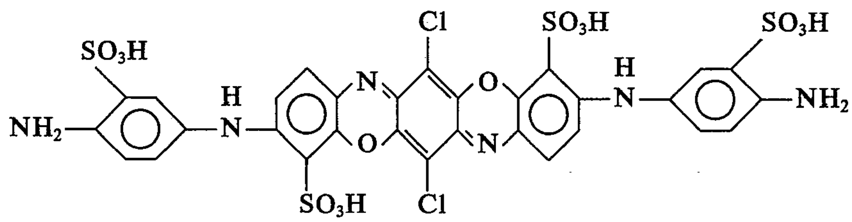

Beispiel 51

0,1 Mol des Kupferkomplexes von N-(2-Carboxy-5-sulfophenyl)-N-(2'-hydroxy-3'-amino-5'-sulfophenyl)-ms-phenylformasan-di-Natriumsalz werden in 500 ml Wasser gelöst. Man kühlt auf 0°C und tropft 29,4 g 3-Chlor-3-phenylsulfonylpropionylchlorid in 80 ml Aceton zu. Durch Zugabe von Sodalösung wird ein pH-Wert von 6–6,5 aufrechterhalten. Man salzt mit Natriumchlorid aus, saugt den ausgefallenen Farbstoff ab und trocknet bei 30–40° im Vakuum.

Der erhaltene Farbstoff der Formel

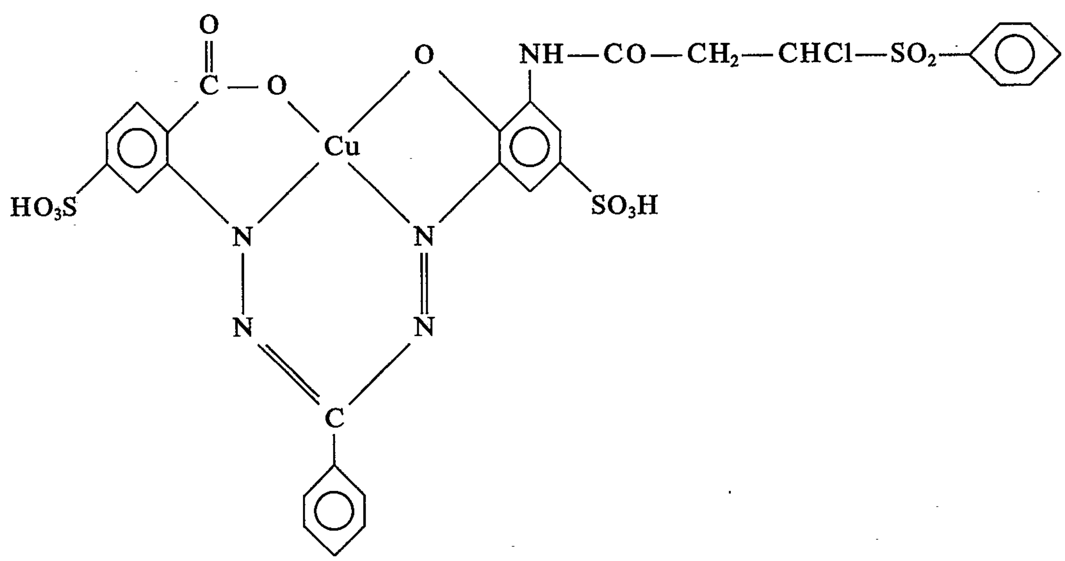

färbt Zellulose- und Polyamidfasern in echten blauen Tönen.

Man erhält Farbstoffe mit ähnlichen Eigenschaften, wenn man zur Acylierung 3-Brom-3-phenylsulfonylpropionylchlorid, 2-Chlor-3-phenylsulfonylpropionylchlorid und 2-Brom-3-phenylsulfonylpropionylchlorid verwendet.

Verwendet man die in der folgenden Tabelle aufgeführten Kupferkomplexe und die oben angegebenen Säurechloride und verfährt wie oben angegeben so erhält man weitere Farbstoffe, die Zellulose- und Polyamidfasern in echten blauen Tönen färben.

| Aminoformazan | Nuance auf Baumwolle |
|---|---|
| N-(2-Hydroxy-3-amino-5-sulfophenyl)-N'-(2'-carboxy-4'-sulfophenyl)-ms-(2"-chlor-5"-sulfophenyl)-Formazan, Cu-Komplex | blau |
| N-(2-Hydroxy-5-amino-3-sulfophenyl)-N'-(2',5'-disulfophenyl)-ms-phenylformazan, Cu-Komplex | blau |
| N-(2-Carboxy-4-aminophenyl)-N'-(2'-hydroxy-5'-methylsulfonyl-3'-sulfophenyl)-ms-(2"-sulfophenyl)-formazan, Cu-Komplex | blau |
| N-(2-Carboxy-5-sulfophenyl)-N'-(2'-hydroxy-3',5'-disulfophenyl)-ms-(3"-aminophenyl)-formazan, Cu-Komplex | grünstichig blau |
| N-(4-Amino-2-sulfophenyl)-N'-(2'-hydroxy-4'-sulfophenyl)-ms-(4"-chlor-3"-sulfophenyl)-formazan, Cu-Komplex | blau |
| N-(2-Hydroxy-3-amino-5-sulfophenyl)-N'-(2'-hydroxy-4'-sulfophenyl)-ms-(2"-sulfophenyl), Cu-Komplex | marineblau |
| N-(2-Carboxy-5-sulfophenyl)-N'-(2'-hydroxy-5'-amino-3'-sulfophenyl)-ms-(4"-sulfophenyl)-formazan, Cu-Komplex | blau |
| N-(2-Carboxy-5-sulfophenyl)-N'-(2'-hydroxy-3'-amino-5'-sulfophenyl)-ms-phenylformazan, Cu-Komplex | blau |
| N-(2-Carboxy-4-sulfophenyl)-N'-(2'-hydroxy-3'-amino-5'-sulfophenyl)-ms-phenylformazan, Cu-Komplex | blau |
| N-(2,4-Disulfophenyl-)-N'-(2'-hydroxy-4,6-disulfophenyl)-ms-(3"-aminophenyl)-formazan, Cu-Komplex | blau |
| N-(2-Carboxy-5-sulfophenyl)-N'-(2'-hydroxy-3'-amino-5'-sulfophenyl)-ms-(4"-methoxyphenyl)-formazan, Cu-Komplex | blau |
| N-(2-Carboxy-5-sulfophenyl)-N'-(2'-hydroxy-4'-methylsulfonyl-6'-sulfophenyl)-ms-(3"-aminophenyl)-formazan, Cu-Komplex | blau |
| N-(2-Hydroxy-5-sulfophenyl)-N'-(2'-hydroxy-3',5'-disulfophenyl-ms-(4"-aminophenyl)-formazan, Cu-Komplex | blau |
| N-(2-Carboxy-5-sulfophenyl)-N'-(2'-hydroxy-3'-amino-5'-sulfophenyl)-ms-(4"-methyl-3"-bromphenyl)-formazan, Cu-Komplex | blau |
| N-(2-Carboxy-4-aminophenyl)-N'-(2'-hydroxy-4'-sulfonaphth-1'-yl)-ms-(2"-sulfophenyl)-formazan, Cu-Komplex | blau |

## Beispiel 52

In die Lösung von 21 g des Natriumsalzes der 2,4-Diaminobenzolsulfonsäure in 200 ml Wasser werden unter gutem Rühren 33,5 g 2,2-Dichlor-3-phenylsulfonylpropionylchlorid bei 0–5°C und unter ständigem Abstumpfen der freiwerdenden Salzsäure auf pH 5,5 mit Sodalösung eingetropft.

Das entstandene Farbstoffzwischenprodukt wird nach Zugabe von Eis mit 7 g Natriumnitrit und 28 ml konz. Salzsäure indirekt diazotiert und anschließend mit einer vorgelegten Lösung von 40 g 1-Acetylamino-8-hydroxynaphthalin-4,6-disulfonsäure und 12 g Soda in 200 ml Wasser vereinigt, wobei Kupplung zum Farbstoff der Formel

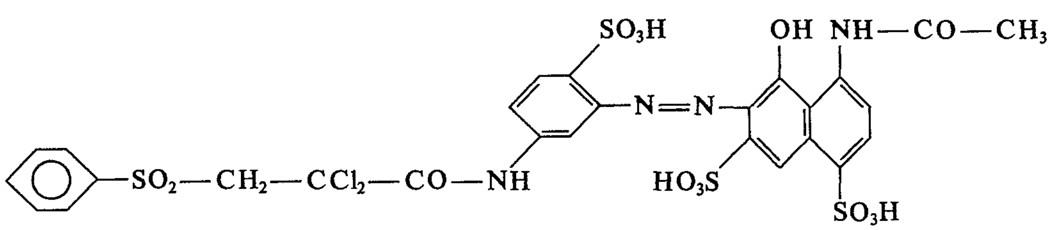

erfolgt, der ausgesalzen, isoliert und bei 30–40°C im Vakuum getrocknet wird. Der Farbstoff löst sich in Wasser mit roter Farbe und liefert klare gelbstichig rote Färbungen und Drucke auf Wolle und Baumwolle.

**Patentansprüche**

1. Reaktivfarbstoffe der allgemeinen Formel

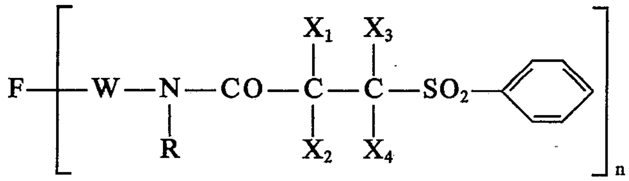

(I)

worin

F = Rest eines organischen Farbstoffs
W = direkte Bindung oder Brückenglied
R = Wasserstoff oder $C_1-C_4$-Alkyl
$X_1$ bis $X_4$ = Wasserstoff oder Halogen und wobei nur einer oder zwei der Reste $X_1$ bis $X_4$ für Halogen stehen,
n = 1 oder 2.

2. Farbstoff gemäß Anspruch 1, dadurch gekennzeichnet, daß

$X_1$ = Cl oder Br und
$X_2$ bis $X_4$ = H und

F, W, R sowie n die im Anspruch 1 angegebene Bedeutung haben.

3. Farbstoff gemäß Anspruch 1, dadurch gekennzeichnet, daß

$X_1$ und $X_2$ = Cl
$X_3$ und $X_4$ = H

und F, W, R sowie n die im Anspruch 1 angegebene Bedeutung besitzen.

4. Farbstoff gemäß Anspruch 1, dadurch gekennzeichnet, daß

$X_1$, $X_2$ und $X_4$ = H
$X_3$ = Cl oder Br

und F, W, R sowie n die im Anspruch 1 angegebene Bedeutung haben.

5. Verwendung der Farbstoffe der Ansprüche 1 bis 4 zum Färben und Bedrucken von hydroxylgruppen- und stickstoffhaltigen Materialien.

**Claims**

1. Reactive dyestuffs of the general formula

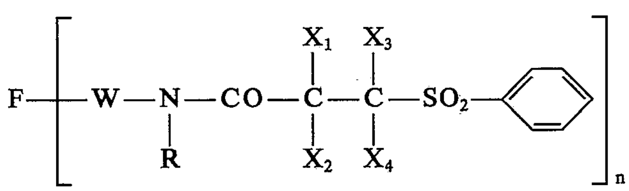

(I)

wherein

F = the radical of an organic dyestuff,
W = a direct bond or bridge member,
R = hydrogen or $C_1-C_4$-alkyl,
$X_1$ to $X_4$ = hydrogen or halogen, only one or two of the radicals $X_1$ to $X_4$ representing halogen, and
n = 1 or 2.

2. Dyestuff according to Claim 1, characterised in that

$X_1$ = Cl or Br and
$X_2$ to $X_4$ = H and

F, W, R and n have the meaning indicated in Claim 1.

3. Dyestuff according to Claim 1, characterised in that

$X_1$ and $X_2$ = Cl,
$X_3$ and $X_4$ = H and

F, W, R and n have the meaning indicated in Claim 1.

4. Dyestuff according to Claim 1, characterised in that

$X_1$, $X_2$ and $X_4$ = H,
$X_3$ = Cl or Br and

F, W, R and n have the meaning indicated in Claim 1.

5. Use of the dyestuffs according to Claims 1 to 4 for dyeing and printing materials containing hydroxyl groups or nitrogen.

**Revendications**

1. Colorants réactifs de formule générale:

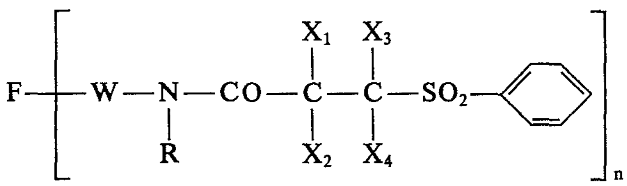

(I)

dans laquelle

F = radical d'un colorant organique
W = liaison directe ou pont
R = hydrogène ou groupe alkyle en $C_1-C_4$
$X_1$ à $X_4$ = hydrogène ou halogène et un ou deux des radicaux $X_1$ à $X_4$ seulement représente(nt) un atome d'halogène,
n = 1 ou 2.

2. Colorant suivant la revendication 1, caractérisé en ce que

$X_1$ = Cl ou Br, et
$X_2$ à $X_4$ = H et

F, W, R, ainsi que n ont les significations indiquées dans la revendication 1.

3. Colorant suivant la revendication 1, caractérisé en ce que

$X_1$ et $X_2$ = Cl
$X_3$ et $X_4$ = H et

F, W, R, ainsi que n ont les significations indiquées dans la revendication 1.

4. Colorant suivant la revendication 1, caractérisé en ce que

$X_1$, $X_2$ et $X_4$ = H
$X_3$ = Cl ou Br et

F, W, R, ainsi que n ont les significations indiquées dans la revendication 1.

5. Utilisation des colorants suivant les revendications 1 à 4 pour la coloration et l'impression de matières azotèes contenant des groupes hydroxy.